# EUROPEAN PATENT APPLICATION

(11) **EP 4 529 098 A1**
(43) Date of publication of application: **26.03.2025**
(21) Application number: 22942595.4
(22) Date of filing: 16.05.2022
(51) Int. Cl.: H04L 12/44

(54) **OPTICAL TRANSMISSION SYSTEM AND CONTROL SIGNAL TRANSMISSION/RECEPTION METHOD**

(71) Applicant: NIPPON TELEGRAPH AND TELEPHONE CORPORATION, Chiyoda-ku, Tokyo 100-8116 (JP)
(72) Inventor: KITAMURA Kei, Musashino-shi, Tokyo 180-8585 (JP); SONE Yoshiaki, Musashino-shi, Tokyo 180-8585 (JP); NISHIZAWA Hideki, Musashino-shi, Tokyo 180-8585 (JP); MASUDA Akira, Musashino-shi, Tokyo 180-8585 (JP); MANO Toru, Musashino-shi, Tokyo 180-8585 (JP); ANAZAWA Kazuya, Musashino-shi, Tokyo 180-8585 (JP)
(74) Representative: Brevalex
(86) International application number: PCT/JP2022/020412
(87) International publication number: WO 2023/223390

(57) **Abstract**

A connection node device includes a node-side control signal transceiver that transmits and receives a control signal, and a node-side control signal multiplexing/separating unit that wavelength-multiplexes a control signal transmitted by the node-side control signal transceiver and a main signal received via a second optical transmission line and sends a wavelength-multiplexed signal to a first optical transmission line, wavelength-separates an optical signal received via the first optical transmission line into the control signal and the main signal, outputs the separated control signal to the node-side control signal transceiver, and sends the separated main signal to the second optical transmission line, and the user-side optical communication device includes an optical transmission/reception unit that transmits and receives the main signal, a user-side control signal transceiver that transmits and receives the control signal, and a user-side control signal multiplexing/separating unit that wavelength-multiplexes the control signal transmitted by the user-side control signal transceiver and the main signal transmitted by the optical transmission/reception unit and sends the wavelength-multiplexed signal to the first optical transmission line, wavelength-separates an optical signal received via the first optical transmission line into the control signal and the main signal, outputs the separated control signal to the user-side control signal transceiver, and outputs the separated main signal to the optical transmission/reception unit.

## Description

### Technical Field

The present invention relates to an optical transmission system and a control signal transmission/reception method.

### Background Art

Along with digital signal processing for optical transmission, that is, higher functionality of a digital signal processor (DSP), not only a modulation scheme but also various parameters related to transmission performance such as a baud rate, a type of an error correction code such as forward error correction (FEC), and the number of carriers increase, and transmission modes are diversified. On the other hand, a technology for selecting an optimum transmission mode from transmission modes defined by a combination of a plurality of parameters related to transmission performance and a messaging method for selecting an optimum transmission mode have been proposed.

For example, Patent Literature 1 discloses a method for selecting an optimum modulation scheme on the basis of a training signal. Patent Literature 2 discloses a messaging method for selecting an optimum transmission mode corresponding to various parameters related to transmission performance such as a baud rate other than a modulation scheme, a type of an error correction code, and the number of carriers.

### Citation List

### Patent Literature

Patent Literature 1: Japanese Patent No. 5753604
Patent Literature 2: WO 2020/031514 A

### Summary of Invention

### Technical Problem

It is assumed that an optical path, that is, an optical path for transmitting an optical signal of a main signal can be opened by selecting an optimum transmission mode from a plurality of transmission modes in an optical transmission line that connects two points in a carrier network operated by a communication carrier or an optical transmission line that connects two bases of a user via a carrier network by using techniques described in Patent Literature 1 and Patent Literature 2, or the like. In a case of such a configuration, the communication path existing in the optical communication device on the user side such as a transponder device disposed at a user base includes only the optical transmission line that transmits and receives the main signal unless the communication path is connected to another communication network. Thus, for example, in a case where a failure occurs in an optical path, there is a problem related to monitoring management that an operation device that performs monitoring and management on the communication carrier side cannot access the optical communication device on the user side to acquire notification information such as an alarm indicating a malfunction of the device, a communication failure, or the like occurring in the optical communication device on the user side, or information necessary for recovery of the failure such as information regarding a transmission mode set inside the optical communication device on the user side. There is also a problem related to monitoring management that transmission of a control signal for instructing an optical communication device on the user side to stop transmission of the main signal for recovery from a failure cannot be performed.

In view of the above circumstances, an object of the present invention is to provide a technology capable of accessing a user-side optical communication device to perform monitoring and management without using a communication path different from a communication path of an optical transmission line for transmitting and receiving a main signal with respect to a user-side optical communication device having only the communication path.

### Solution to Problem

One aspect of the present invention is an optical transmission system including a connection node device, a user-side optical communication device, a first optical transmission line that connects the connection node device and the user-side optical communication device, and a second optical transmission line that connects to the connection node device, in which the connection node device includes a node-side control signal transceiver that transmits and receives a control signal, and a node-side control signal multiplexing/separating unit that wavelength-multiplexes a control signal transmitted by the node-side control signal transceiver and a main signal received via the second optical transmission line and sends a wavelength-multiplexed signal to the first optical transmission line, wavelength-separates an optical signal received via the first optical transmission line into the control signal and the main signal, outputs the separated control signal to the node-side control signal transceiver, and sends the separated main signal to the second optical transmission line, and the user-side optical communication device includes an optical transmission/reception unit that transmits and receives the main signal, a user-side control signal transceiver that transmits and receives the control signal, and a user-side control signal multiplexing/separating unit that wavelength-multiplexes the control signal transmitted by the user-side control signal transceiver and the main signal transmitted by the optical transmission/reception unit and sends the wavelength-multiplexed signal to the first optical transmission line, wavelength-separates an optical signal received via the first optical transmission line into the control signal and the main signal, outputs the separated control signal to the user-side control signal transceiver, and outputs the separated main signal to the optical transmission/reception unit.

One aspect of the present invention is a control signal transmission/reception method in an optical transmission system including a connection node device, a user-side optical communication device, a first optical transmission line that connects the connection node device and the user-side optical communication device, and a second optical transmission line that connects to the connection node device, the method including: transmitting a control signal by a node-side control signal transceiver; by a node-side control signal multiplexing/separating unit, wavelength-multiplexing a control signal transmitted by the node-side control signal transceiver and a main signal received via the second optical transmission line, and sending a wavelength-multiplexed signal to the first optical transmission line; by a user-side control signal multiplexing/separating unit, wavelength-separating an optical signal received via the first optical transmission line into the control signal and the main signal, outputting the separated control signal to a user-side control signal transceiver, and outputting the separated main signal to an optical transmission/reception unit; receiving the main signal by the optical transmission/reception unit; receiving the control signal by the user-side control signal transceiver; transmitting the main signal by the optical transmission/reception unit; transmitting the control signal by the user-side control signal transceiver; by the user-side control signal multiplexing/separating unit, wavelength-multiplexing the control signal transmitted by the user-side control signal transceiver and the main signal transmitted by the optical transmission/reception unit and sending the multiplexed signal to the first optical transmission line; by the node side control signal multiplexing/separating unit, wavelength-separating an optical signal received via the first optical transmission line into the control signal and the main signal, outputting the separated control signal to the node side control signal transceiver, and sending the separated main signal to the second optical transmission line; and receiving the control signal by the node side control signal transceiver.

### Advantageous Effects of Invention

According to the present invention, it is possible to access a user-side optical communication device to perform monitoring and management without using a communication path different from a communication path of an optical transmission line for transmitting and receiving a main signal with respect to a user-side optical communication device having only the communication path.

### Brief Description of Drawings

[FIG. 1] A block diagram illustrating a configuration of an optical transmission system in a first embodiment.
[FIG. 2] A diagram (part 1) illustrating internal configurations of a connection node device and an optical communication device and a connection relationship of optical transmission lines in each of the connection node device and the optical communication device in the first embodiment.
[FIG. 3] A diagram illustrating a flow of processing of the optical transmission system in the first embodiment.
[FIG. 4] A diagram (part 2) illustrating internal configurations of the connection node device and the optical communication device and a connection relationship of the optical transmission lines in each of the connection node device and the optical communication device in the first embodiment.
[FIG. 5] A block diagram illustrating a configuration of an optical transmission system in a second embodiment.
[FIG. 6] A diagram illustrating a flow of processing of the optical transmission system in the second embodiment.
[FIG. 7] A diagram illustrating another configuration example (part 1) of the optical transmission system in the second embodiment.
[FIG. 8] A block diagram illustrating a configuration of an optical transmission system in a third embodiment.
[FIG. 9] A diagram (part 1) illustrating internal configurations of a connection node device and an optical communication device and a connection relationship of optical transmission lines in each of the connection node device and the optical communication device in a third embodiment.
[FIG. 10] A diagram illustrating a flow of processing of the optical transmission system in the third embodiment.
[FIG. 11] A diagram (part 2) illustrating internal configurations of the connection node device and the optical communication device and a connection relationship of the optical transmission lines in each of the connection node device and the optical communication device in the third embodiment.
[FIG. 12] A diagram (part 3) illustrating internal configurations of the connection node device and the optical communication device and a connection relationship of the optical transmission lines in each of the connection node device and the optical communication device in the third embodiment.
[FIG. 13] A diagram illustrating another configuration example (part 1) of the optical transmission system in the third embodiment.
[FIG. 14] A diagram illustrating another configuration example (part 2) of the optical transmission system in the second embodiment.
[FIG. 15] A diagram illustrating another configuration example (part 2) of the optical transmission system in the third embodiment.
[FIG. 16] A diagram illustrating another configuration example (part 3) of the optical transmission system in the second embodiment.
[FIG. 17] A block diagram illustrating a configuration of an optical transmission system in a fourth embodiment.
[FIG. 18] A diagram illustrating a data configuration of a connection state table of a transmission line design unit in the fourth embodiment.
[FIG. 19] A diagram illustrating a flow of processing of the optical transmission system in the fourth embodiment.
[FIG. 20] A diagram illustrating a flow of transmission mode specifying processing in the fourth embodiment.
[FIG. 21] A block diagram (part 1) illustrating a configuration of an optical transmission system in a fifth embodiment.
[FIG. 22] A block diagram (part 2) illustrating a configuration of the optical transmission system in the fifth embodiment.
[FIG. 23] A block diagram (part 3) illustrating a configuration of the optical transmission system in the fifth embodiment.
[FIG. 24] A diagram illustrating an example of a data format of a path management table in the fifth embodiment.
[FIG. 25] A diagram illustrating an example of a data format of a control signal transceiver correspondence table in the fifth embodiment.
[FIG. 26] A diagram illustrating an example of processing by the optical transmission system of the fifth embodiment.
[FIG. 27] A block diagram illustrating a configuration of an optical transmission system in a sixth embodiment.
[FIG. 28] A block diagram illustrating a configuration of an optical transmission system in another configuration example of the sixth embodiment.
[FIG. 29] A block diagram illustrating a configuration of an optical transmission system in a seventh embodiment.
[FIG. 30] A diagram illustrating an example of a data format of a path management table in the seventh embodiment.
[FIG. 31] A diagram illustrating an example of a data format of an optical communication device table in the seventh embodiment.
[FIG. 32] A diagram (part 1) illustrating another configuration example of a connection relationship between a control signal multiplexing/separating unit and an output port switching unit in the seventh embodiment.
[FIG. 33] A diagram (part 2) illustrating another configuration example of a connection relationship between the control signal multiplexing/separating unit and the output port switching unit in the seventh embodiment.
[FIG. 34] A block diagram illustrating a configuration of an optical transmission system in an eighth embodiment.
[FIG. 35] A diagram illustrating an example of a data format of a path management table in the eighth embodiment.
[FIG. 36] A diagram (part 1) illustrating an example of processing by the optical transmission system of the eighth embodiment.
[FIG. 37] A diagram (part 2) illustrating an example of processing by the optical transmission system of the eighth embodiment.

### Description of Embodiments

Hereinafter, embodiments of the present invention will be described. An object of the present invention is the "problem related to monitoring management" as described above. On the other hand, the techniques described in Patent Literature 1 and Patent Literature 2 have a "problem related to connection" described below, and first to fourth embodiments illustrate embodiments for solving the "problem related to connection". The fifth embodiment illustrates a basic embodiment for solving the "problem related to monitoring management", and the sixth to eighth embodiments illustrate embodiments for solving the "problems related to monitoring management" in the configurations illustrated in the first to fourth embodiments, respectively.

Here, the "problem related to connection" in the techniques described in Patent Literatures 1 and 2 will be described. In the techniques described in Patent Literature 1 and Patent Literature 2, when a path of light passing through a plurality of optical transmission lines such as a dark fiber and an optical transmission line of a carrier network, that is, a path of light is set, it is not possible to select an optimum transmission mode and set the path of light. In other words, when a path of light via a plurality of optical transmission lines such as a dark fiber and a carrier network is set, characteristics of the dark fiber from a user terminal device provided in a data center or the like to an edge terminal device of the carrier network need to be measured manually. Thus, there is a problem that it takes cost and time to set the light path between the users. Because resources that can be used in the carrier network include a part that is used for other communication, there is a limitation on the resources that can be used in setting the optical path, and there is also a problem that the limitation on the resources also needs to be considered in setting the optical path between users.

The first to fourth embodiments described below are embodiments that are intended to perform connection without manual intervention through an optical path of an optimum transmission mode when connecting optical transmission/reception units included in an optical communication device via a plurality of optical transmission lines.

### (First Embodiment)

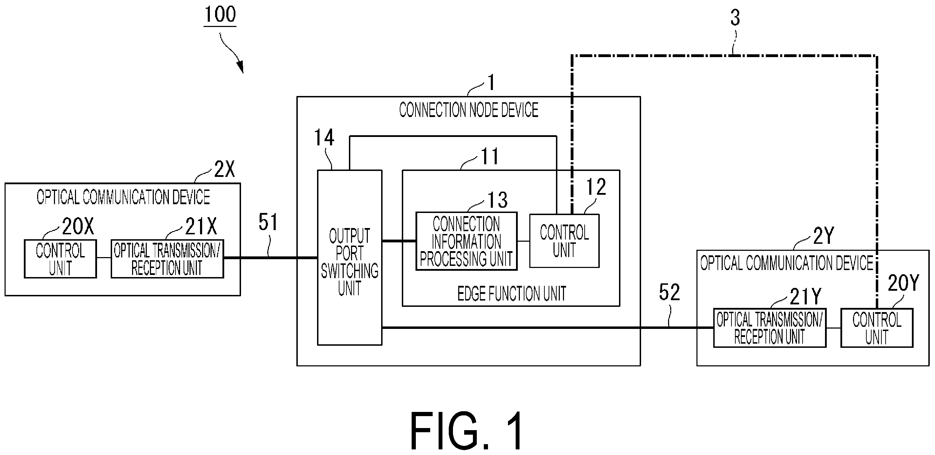

Hereinafter, embodiments of the present invention will be described with reference to the drawings. Fig. 1 is a block diagram illustrating a configuration of an optical transmission system 100 in a first embodiment. The optical transmission system 100 includes a connection node device 1, an optical communication device 2X, an optical communication device 2Y, an optical transmission line 51, an optical transmission line 52, and a connection line 3. The optical transmission line 51 connects the optical communication device 2X and the connection node device 1. The optical transmission line 52 connects the optical communication device 2Y and the connection node device 1. The connection line 3 connects the connection node device 1 and the optical communication device 2Y. The optical communication device 2X is, for example, a communication device used by a user. The optical communication device 2Y is, for example, an optical transmission device owned by a communication carrier, that is, a node device in a communication network, or a white box type transponder owned by a communication carrier or a data center company.

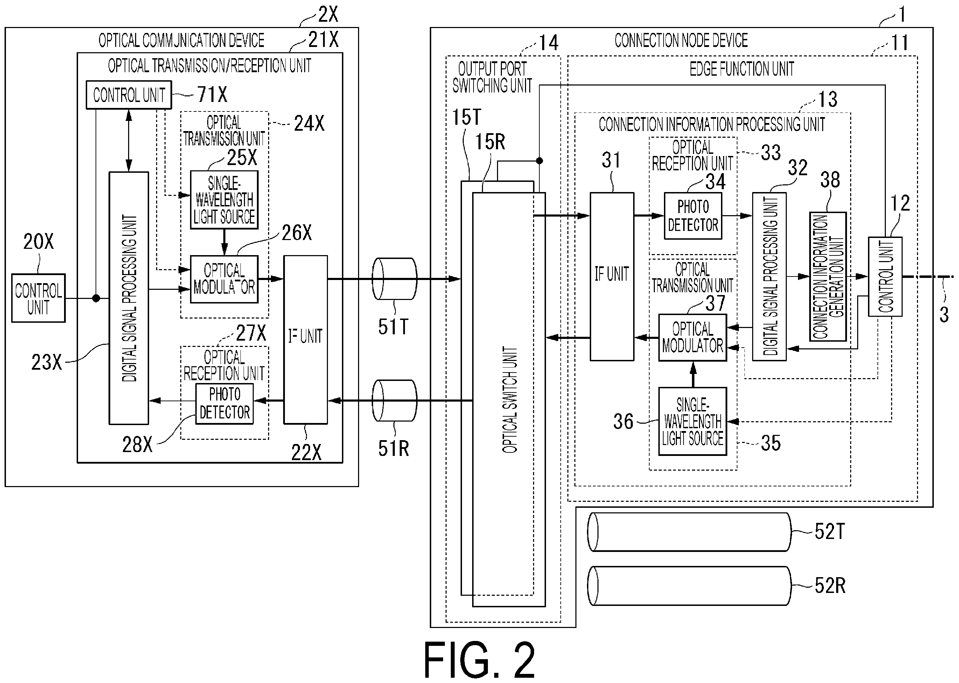

Internal configurations of the connection node device 1, the optical communication device 2X, and the optical communication device 2Y will be described with reference to Fig. 2 in addition to Fig. 1. Note that, among the connection lines illustrated in Figs. 1 and 2, a thin solid line of an arrow indicates a path of an electrical data signal, a thick solid line of an arrow indicates a path of an optical data signal, a thin broken line of an arrow indicates a path of an electrical control signal, a thin solid line indicates an electrical connection, a thick solid line indicates a connection by an optical line, a one-dot chain line indicates a connection line, and the same applies to other drawings unless otherwise defined.

As illustrated in Fig. 2, the optical transmission line 51 illustrated in Fig. 1 includes, for example, optical fibers 51T and 51R such as dark fibers. Note that, here, in order to distinguish the two optical fibers included in the optical transmission line 51, alphabetic characters of "T" and "R" are added to a reference sign "51" for convenience of description, and the meaning of the reference sign "T" is a transmission direction as viewed from the optical communication device 2X and a reception direction as viewed from the connection node device 1 and the optical communication device 2Y. The reference sign "R" means a reception direction as viewed from the optical communication device 2X and a transmission direction as viewed from the connection node device 1 and the optical communication device 2Y. As illustrated in Fig. 2, the optical transmission line 52 illustrated in Fig. 1 includes, for example, optical fibers 52T and 52R constituting a carrier network of a communication carrier. The connection line 3 is a communication line, and may be, for example, a wired communication line such as a dedicated line, a wireless communication line, a mobile communication network, a communication network such as the Internet network, or a data communication network (DCN), and in a case of connection through an optical communication line, a part of an overhead area of a digital frame transferred by an optical signal may be allocated as the connection line 3.

The optical communication device 2X is, for example, a transponder that transmits data given from an external device and outputs the received data to the external device. As illustrated in Fig. 2, the optical communication device 2X includes a control unit 20X and an optical transmission/reception unit 21X. The control unit 20X is connected to the optical transmission/reception unit 21X, and controls the optical transmission/reception unit 21X and inputs and outputs information to and from the optical transmission/reception unit 21. For example, when starting connection to the optical transmission/reception unit 21Y included in the optical communication device 2Y, the control unit 20X generates a connection request instruction signal.

The optical transmission/reception unit 21X includes an interface (IF) unit 22X, an optical transmission unit 24X, an optical reception unit 27X, a digital signal processing unit 23X, and a control unit 71X. The IF unit 22X connects the optical fiber 51T of the optical transmission line 51 and the optical transmission unit 24X. The IF unit 22X connects the optical fiber 51R of the optical transmission line 51 and the optical reception unit 27X.

Upon receiving the connection request instruction signal from the control unit 20X, the control unit 71X generates data indicating a connection request (hereinafter referred to as "connection request data"). Here, the connection request data is data including a connection destination address (Destination Address) and information such as a connection source address (Source Address), a desired bit rate, and specifications of the optical transmission/reception unit 21X. The specification information of the optical transmission/reception unit 21X is, for example, information including a modulation scheme available in the optical transmission unit 24X, an FEC type available in the digital signal processing unit 23X, a baud rate, a type of a light source included in the optical transmission unit 24X, and the like.

Here, the information indicating the type of the light source is, for example, information indicating whether the light source is a type that outputs a single predetermined wavelength or a type that outputs a wavelength after changing the wavelength, and information further including information of a wavelength or a wavelength band that can be output by the light source in addition to the information. In a case of the optical communication device 2X, the optical transmission unit 24X includes a single-wavelength light source 25X. Thus, the specification information of the optical transmission/reception unit 21X includes information indicating that the light source included in the optical transmission unit 24X is the type that outputs a single predetermined wavelength and information indicating a wavelength that can be output by the light source.

Each of the optical transmission/reception unit 21X included in the optical communication device 2X and the optical transmission/reception unit 21Y included in the optical communication device 2Y is added in advance with address information capable of identifying it. The control unit 20X stores the desired bit rate and address information of a connection destination in an internal storage area in advance. The control unit 71X stores, in advance in an internal storage area, address information added to the optical transmission/reception unit 21X including itself. For example, the control unit 71X acquires the specification information of the optical transmission/reception unit 21X from the optical transmission unit 24X and the digital signal processing unit 23X at a timing when the optical transmission/reception unit 21X is included in the optical communication device 2X, and stores the specification information in an internal storage area. Instead of storing the address information of the connection destination in advance in the internal storage area, for example, the control unit 20X may capture and acquire address information of a connection destination designated by the user of the optical communication device 2X or may acquire the address information of the connection destination from the connection node device 1. Instead of storing the desired bit rate in advance in the internal storage area, the control unit 20X may receive an input operation of the user and capture and acquire data of a bit rate designated in advance by the user as the desired bit rate.

For example, when requesting connection to the optical transmission/reception unit 21Y included in the optical communication device 2Y, the control unit 20X generates a connection request instruction signal including the address information of the optical transmission/reception unit 21Y and the desired bit rate, and outputs the connection request instruction signal to the control unit 71X. The control unit 71X reads the address information of the optical transmission/reception unit 21Y included in the connection request instruction signal received from the control unit 20X and determines the address information as connection destination address information, and reads the address information of the optical transmission/reception unit 21X stored in the internal storage area and determines the address information as connection source address information. The control unit 71X generates connection request data including the connection destination address information and the connection source address information determined as described above, the desired bit rate included in the connection request instruction signal, and the specification information of the optical transmission/reception unit 21X stored in the internal storage area. The control unit 71X outputs the generated connection request data to the digital signal processing unit 23X.

The digital signal processing unit 23X is, for example, a DSP, and is connected to the control unit 71X, the optical transmission unit 24X, and the optical reception unit 27X. The digital signal processing unit 23X captures transmission data such as a client signal, for example, provided from an external device connected to the optical communication device 2X. The digital signal processing unit 23X captures the connection request data generated by the control unit 71X.

The digital signal processing unit 23X generates a transmission data signal in a transmission frame format including the captured transmission data in a payload. The digital signal processing unit 23X generates the transmission data signal so that the captured connection request data is included in the free space of an overhead of a transmission frame. Note that the digital signal processing unit 23X may generate the transmission data signal so as not to include the transmission data in the payload in order not to transmit the transmission data at the timing before transmission mode information is determined. The digital signal processing unit 23X outputs the generated transmission data signal to the optical transmission unit 24X.

The digital signal processing unit 23X captures a reception data signal of the electrical signal output from the optical reception unit 27X. The digital signal processing unit 23X reads data included in the payload and overhead of the reception data signal that has been captured. The digital signal processing unit 23X outputs a client signal in read data to the external device. The digital signal processing unit 23X outputs the connection request data in the read data and control information included in the overhead to the control unit 71X. The control unit 71X outputs a control signal of an electrical signal to the single-wavelength light source 25X and an optical modulator 26X as indicated by a broken arrow.

The optical transmission unit 24X includes the single-wavelength light source 25X and the optical modulator 26X. The single-wavelength light source 25X generates and outputs continuous light of a predetermined single wavelength with optical power designated by a control signal indicating output optical power (hereinafter referred to as an "output optical power designation signal") output by the control unit 71X. On the basis of the transmission data signal output from the digital signal processing unit 23X, the optical modulator 26X optically modulates the continuous light output from the single-wavelength light source 25X according to the modulation scheme designated by a control signal designating the modulation scheme (hereinafter referred to as "modulation scheme designation signal") output from the control unit 71X. The optical modulator 26X outputs an optical signal generated by the optical modulation to the IF unit 22X.

The optical reception unit 27X includes a photodetector 28X. The photodetector 28X is, for example, a photo diode (PD), and receives an optical signal output from the IF unit 22X, detects light intensity of the received optical signal, for example, and converts the optical signal into an electrical signal. The photodetector 28X outputs the electrical signal converted from the optical signal to the digital signal processing unit 23X as a reception data signal.

The optical communication device 2Y includes the same functional units as the optical communication device 2X. Hereinafter, when each functional unit included in the optical communication device 2Y is illustrated, "X" included in the reference sign attached to each functional unit included in the optical communication device 2X is replaced with "Y".

The connection node device 1 includes an edge function unit 11 and an output port switching unit 14. The output port switching unit 14 includes, for example, optical switch units 15T and 15R that are fiber patch panels. The optical switch unit 15T is connected to the optical fiber 51T, the edge function unit 11, and the optical fiber 52T included in the optical transmission line 52. The optical switch unit 15T performs switching processing of switching the connection destination of the optical fiber 51T to any one of the edge function unit 11 and the optical fiber 52T. The optical switch unit 15R is connected to the optical fiber 51R, the edge function unit 11, and the optical fiber 52R included in the optical transmission line 52. The optical switch unit 15R performs switching processing of switching the connection destination of the optical fiber 51R to any one of the edge function unit 11 and the optical fiber 52R.

The edge function unit 11 includes a control unit 12 and a connection information processing unit 13. The connection information processing unit 13 includes an IF unit 31, a digital signal processing unit 32, an optical reception unit 33, an optical transmission unit 35, and a connection information generation unit 38. The IF unit 31 connects the optical switch unit 15T and the optical reception unit 33. The IF unit 31 connects the optical switch unit 15R and the optical transmission unit 35.

The optical reception unit 33 includes a photodetector 34. The photodetector 34 is, for example, a PD, and receives an optical signal output from the IF unit 31, detects light intensity of the received optical signal, and converts the optical signal into an electrical signal. The photodetector 34 outputs the electrical signal converted from the optical signal to the digital signal processing unit 32 as a reception data signal.

The optical transmission unit 35 includes a single-wavelength light source 36 and an optical modulator 37. The single-wavelength light source 36 generates and outputs continuous light of basic output optical power of a basic mode designated by the control unit 12 and having a predetermined single wavelength. Here, the basic mode is a transmission mode predetermined by predetermined basic output optical power, a basic modulation scheme, a basic wavelength, and the like, and the control unit 12, the control unit 71X of the optical communication device 2X, and the control unit 71Y of the optical communication device 2Y store information regarding the basic mode in an internal storage area in advance.

The wavelength of the single-wavelength light source 36, the wavelength of the single-wavelength light source 25X included in the optical communication device 2X, and the wavelength of the single-wavelength light source 25Y included in the optical communication device 2Y are all basic wavelengths determined in advance in the basic mode. However, these wavelengths are not necessarily limited to the same wavelength value of the basic wavelength, and the wavelength of the single-wavelength light source 36 and the wavelength of the single-wavelength light source 25Y included in the optical communication device 2Y only need to be wavelengths within a range in which the photodetector 28X included in the optical communication device 2X can receive light. The wavelength of the single-wavelength light source 25X included in the optical communication device 2X only needs to be a wavelength within a range that can be received by a photodetector 28Y included in the optical communication device 2Y and the photodetector 34 of the connection node device 1.

On the basis of the transmission data signal output from the digital signal processing unit 32, the optical modulator 37 performs optical modulation of the continuous light output from the single-wavelength light source 36 according to the basic modulation scheme of the basic mode designated by the control unit 12.

The digital signal processing unit 32 is, for example, a DSP, and is connected to the optical reception unit 33 and the optical transmission unit 35. The digital signal processing unit 32 captures the reception data signal output from the photodetector 34 of the optical reception unit 33. When the connection request data transmitted by the optical communication device 2X is included in the reception data signal output from the photodetector 34, the digital signal processing unit 32 reads and acquires the connection request data from the reception data signal. The digital signal processing unit 32 generates a transmission data signal and outputs the transmission data signal to the optical modulator 37.

The connection information generation unit 38 calculates and acquires transmission line information of the optical fiber 51T of the optical transmission line 51 by, for example, predetermined calculation disclosed in Reference Literature 1 below on the basis of the reception data signal captured by the digital signal processing unit 32.

### [Reference Literature 1: Takeo Sasai, et al, "Simultaneous Detection of Anomaly Points and Fiber Types in Multi-Span Transmission Links Only by Receiver-Side Digital Signal Processing", OFC 2020: 1-3]

Here, the transmission line information of the optical fiber 51T is information including a loss of the optical fiber 51T included in the optical transmission line 51, gain of an amplifier inserted in the optical transmission line 51, a noise figure (NF) of the amplifier, a fiber type of the optical fiber 51T, and the like. The connection information generation unit 38 captures a bit error rate (BER) of the optical transmission line 51 acquired from the reception data signal by the digital signal processing unit 32, and generates connection information including the captured BER of the optical transmission line 51 and the calculated transmission line information of the optical fiber 51T. Note that the digital signal processing unit 32 may acquire information for calculating the BER instead of the BER, the connection information generation unit 38 may calculate the BER on the basis of the information for calculating the BER acquired by the digital signal processing unit 32, and may include the calculated BER in the connection information. In addition to the BER, the digital signal processing unit 32 may acquire a Q value (Quality factor), a polarization mode dispersion (PMD), a chromatic dispersion (CD), and an optical signal-to-noise ratio (OSNR) and output the information to the connection information generation unit 38 to include the Q value, the PMD, the CD, and the OSNR in the connection information. The digital signal processing unit 32 outputs a transmission data signal of an electrical signal to the optical modulator 37. The connection information generation unit 38 outputs the connection request data read from the reception data signal by the digital signal processing unit 32 and the generated connection information to the control unit 12.

The control unit 12 stores in advance, in the internal storage area, a path information table in which address information of the optical transmission/reception units 21X and 21Y included respectively in the optical communication devices 2X and 2Y connected to the connection node device 1 is associated with identification information for specifying an optical transmission line corresponding to the address information. Note that the control unit 12 may acquire the path information table from an external device or the like on demand instead of storing the path information table in advance in the internal storage area. For example, in a case of the optical transmission system 100, in the path information table, identification information for specifying the optical transmission line 51 is associated with the address information of the optical transmission/reception unit 21X of the optical communication device 2X, and identification information for specifying the optical transmission line 52 is associated with the address information of the optical transmission/reception unit 21Y of the optical communication device 2Y.

The control unit 12 detects identification information for specifying the optical transmission line corresponding to the connection destination address information included in the connection request data output by the digital signal processing unit 32 with reference to the path information table. However, in the first embodiment, in the path information table, the address information of the optical transmission/reception unit 21Y is associated with the identification information for specifying the optical transmission line 52, and the optical communication device 2X selects only the optical transmission/reception unit 21Y as the connection destination. Thus, the control unit 12 always detects the identification information for specifying the optical transmission line 52, and the description will be given below on the assumption that the control unit 12 detects the identification information for specifying the optical transmission line 52.

The control unit 12 stores the transmission line information of the optical transmission line 52 in the internal storage area in association with the identification information for specifying the optical transmission line 52. Here, as in the case of the optical transmission line 51 described above, the transmission line information of the optical transmission line 52 is information including losses of the optical fibers 52T and 52R included in the optical transmission line 52, gain of an amplifier inserted in the optical transmission line 52, a NF of the amplifier, types of the optical fibers 52T and 52R, and the like. Note that the control unit 12 may calculate the transmission line information of the optical transmission line 52 in advance by predetermined calculation on the basis of the optical signal transmitted by the optical transmission line 52 and store the transmission line information in the internal storage area, or may acquire the transmission line information from an external device on demand at a specific timing such as when a network is laid. The transmission line information of the optical transmission line 52 may be obtained in advance by a method other than the predetermined calculation.

The control unit 12 stores information indicating free resources of the optical transmission line 52 in the internal storage area. Here, the information indicating the free resources is, for example, information indicating a wavelength, or a wavelength band, or an optical transmission path that is not used for communication when determining the free state of a resource. Note that the information indicating the free resource is updated by the control unit 12 every time a communication path is established. On the basis of the connection information generated by the connection information generation unit 38 and the transmission line information of the optical transmission line 52 stored in the internal storage area, the control unit 12 calculates a transmission line characteristic (Quality of Transmission (QoT)) by, for example, a transmission design tool provided therein. Here, as the transmission design tool, for example, a Gaussian Noise model in Python (GNPy) or the like described in Reference Literature 2 below is applied.

### [Reference Literature 2: Alessio Ferrari, et al, "The GNPy Open Source Library of Applications for Software Abstraction of WDM Data Transport in Open Optical Networks", 2020 6th IEEE International Conference on Network Softwarization (NetSoft), DOI:10.1109/NetSoft48620.2020.9165313, June 2020]

Here, the transmission line characteristics are values calculated by a transmission design tool, such as an OSNR, a Generalized Signal-to-Noise Ratio (GSNR), a Q value, and a BER. Here, the information such as OSNR, GSNR, Q value, and BER calculated by the transmission design tool is information such as OSNR, GSNR, Q value, and BER of the entire optical transmission line including the optical transmission line 51 and the optical transmission line 52.

The control unit 12 selects configuration information for specifying a transmission mode by predetermined selection processing on the basis of the calculated transmission line characteristics, information indicating free resources of the optical transmission line 52 stored in the internal storage area, desired bit rate information included in the connection request data acquired from the digital signal processing unit 32, and the specification information of the optical transmission/reception unit 21X. Here, the predetermined selection processing is performed as follows. For example, the FEC type available in the optical transmission/reception unit 21X and the optical transmission/reception unit 21Y is selected on the basis of the FEC type included in the specification information of the optical transmission/reception unit 21X. After the FEC type is selected, a threshold of the ONSR determined for each modulation scheme included in the specification information of the optical transmission/reception unit 21X is compared with the OSNR of the calculated transmission line characteristic, and a modulation scheme in which the threshold of the OSNR is equal to or greater than the OSNR of the calculated transmission line characteristic is selected. The configuration information is selected by processing of selecting a combination of a modulation scheme and a baud rate that enable transmission at a bit rate equal to or higher than the bit rate indicated by the desired bit rate information among a plurality of bit rate candidates in each of the selected several modulation schemes. The transmission mode is specified by the configuration information selected by the control unit 12. Here, the configuration information for specifying the transmission mode is, for example, information including the modulation scheme, baud rate, bit rate, and forward error correction (FEC) type selected in the above-described processing, and also including output optical power, a signal band permitted to be used, and the like. Note that the FEC type information available in the optical transmission/reception unit 21Y is acquired in advance by the control unit 12 and stored in the internal storage area, or is acquired on demand from the optical transmission/reception unit 21Y or an external device. In the above-described predetermined selection processing, a combination of a modulation scheme and a baud rate that enables transmission at a bit rate equal to or higher than the bit rate indicated by the desired bit rate information and closest to the bit rate indicated by the desired bit rate information may be selected from among a plurality of bit rate candidates in each of the selected several modulation schemes.

The control unit 12 generates transmission mode information including the selected configuration information and the connection source address information included in the connection request data. The control unit 12 outputs the generated transmission mode information to the digital signal processing unit 32. As illustrated in Fig. 1, the control unit 12 is connected to the control unit 20Y of the optical communication device 2Y through, for example, the connection line 3, and transmits the generated transmission mode information to the control unit 20Y of the optical communication device 2Y. The control unit 12 outputs a control signal (hereinafter referred to as a "switching instruction signal") instructing the optical switch units 15T and 15R of the output port switching unit 14 to perform switching processing for switching the connection destination.

### (Processing by Optical Transmission System of First Embodiment)

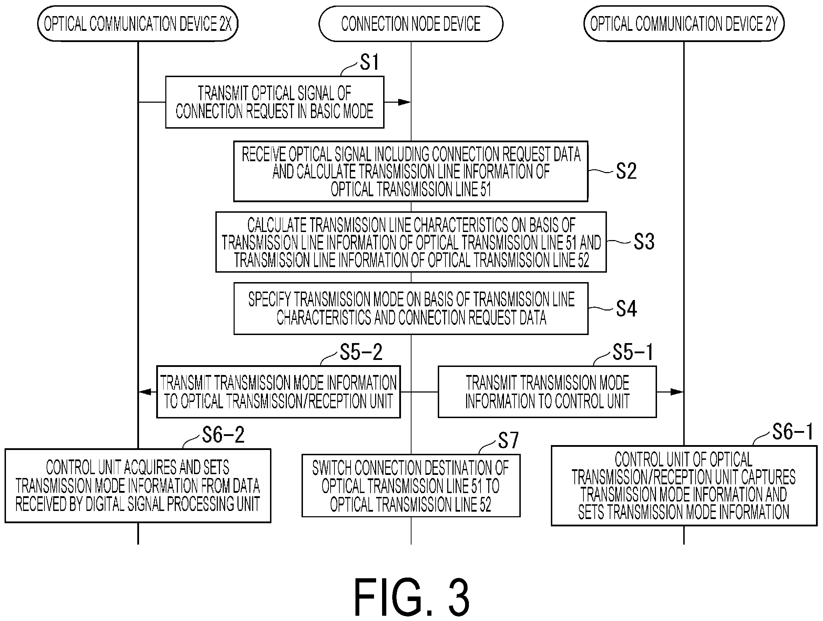

Fig. 3 is a flowchart illustrating a flow of processing by the optical transmission system 100. As illustrated in Fig. 2, the output port switching unit 14 of the connection node device 1 sets the connection destination of the optical transmission line 51 to the connection information processing unit 13 included in the connection node device 1 in the initial state. More specifically, the optical switch unit 15T connects the optical fiber 51T to the photodetector 34 via the IF unit 31, and the optical switch unit 15R connects the optical fiber 51R to the optical modulator 37 via the IF unit 31.

The control unit 20X of the optical communication device 2X generates the connection request instruction signal including the address information of the optical transmission/reception unit 21Y and the desired bit rate in order to establish connection to the optical transmission/reception unit 21Y included in the optical communication device 2Y. The control unit 20X outputs the generated connection request instruction signal to the control unit 71X of the optical transmission/reception unit 21X. The control unit 71X captures the connection request instruction signal output from the control unit 20X, and sets the address information of the optical transmission/reception unit 21Y included in the captured connection request instruction signal as the connection destination address information. The control unit 71X sets the address information of the optical transmission/reception unit 21X stored in the internal storage area as the connection source address information. The control unit 71X generates connection request data including the connection destination address information and the connection source address information, the desired bit rate included in the connection request instruction signal, and the specification information of the optical transmission/reception unit 21X stored in the internal storage area.

The control unit 71X outputs an output optical power designation signal indicating basic output optical power determined in advance in the basic mode to the single-wavelength light source 25X. The single-wavelength light source 25X generates and outputs continuous light having a predetermined wavelength with the basic output optical power designated by the output optical power designation signal received from the control unit 71X. The control unit 71X outputs a modulation scheme designation signal indicating the basic modulation scheme determined in advance in the basic mode to the optical modulator 26X. The optical modulator 26X starts optical modulation according to the basic modulation scheme designated by the modulation scheme designation signal received from the control unit 71X.

The control unit 71X outputs the generated connection request data to the digital signal processing unit 23X. The digital signal processing unit 23X captures the connection request data output from the control unit 71X and generates the transmission data signal so that the captured connection request data is included in the free space of the overhead of the transmission frame. The digital signal processing unit 23X outputs the generated transmission data signal of an electrical signal to the optical modulator 26X. The optical modulator 26X optically modulates the continuous light output from the single-wavelength light source 25X on the basis of the transmission data signal including the connection request data output from the digital signal processing unit 23X. The optical modulator 26X sends the optical signal generated by the optical modulation to the optical fiber 51T via the IF unit 22X. The optical fiber 51T transmits an optical signal to the optical switch unit 15T of the output port switching unit 14 of the connection node device 1 (step S1).

The optical switch unit 15T receives the optical signal transmitted by the optical fiber 51T and outputs the received optical signal to the photodetector 34 of the optical reception unit 33 via the IF unit 31. The photodetector 34 captures the optical signal output from the optical switch unit 15T. The photodetector 34 converts the captured optical signal into an electrical signal to obtain a reception data signal. The photodetector 34 outputs the reception data signal to the digital signal processing unit 32. The digital signal processing unit 32 captures the reception data signal output from the photodetector 34. The digital signal processing unit 32 reads the connection request data included in the overhead area of the captured reception data signal, and outputs the connection request data to the connection information generation unit 38. The digital signal processing unit 32 acquires the BER of the optical transmission line 51 from the captured reception data signal and outputs the BER to the connection information generation unit 38. The connection information generation unit 38 captures the connection request data output from the digital signal processing unit 32 and the BER. Upon capturing the connection request data output from the digital signal processing unit 32 and the BER, the connection information generation unit 38 calculates transmission line information of the optical transmission line 51 on the basis of the reception data signal captured by the digital signal processing unit 32 and output to the connection information generation unit 38. The connection information generation unit 38 generates connection information including the calculated transmission line information of the optical transmission line 51 and the BER of the optical transmission line 51. The connection information generation unit 38 outputs the captured connection request data and the generated connection information to the control unit 12 (step S2).

The control unit 12 captures the connection request data and the connection information output from the connection information generation unit 38. The control unit 12 refers to the path information table stored in the internal storage area or the path information table acquired on demand, and detects connection destination address information included in the captured connection request data, here, the identification information for specifying the optical transmission line 52 corresponding to the address information of the optical transmission/reception unit 21Y. The control unit 12 reads and acquires the transmission line information of the optical transmission line 52 corresponding to the detected identification information from the internal storage area, or acquires the transmission line information of the optical transmission line 52 on demand. The control unit 12 calculates transmission line characteristics on the basis of the acquired transmission line information of the optical transmission line 52 and the captured connection information (step S3).

The control unit 12 selects the configuration information by the predetermined selection processing on the basis of the calculated transmission line characteristics, the desired bit rate information included in the connection request data, and the specification information of the optical transmission/reception unit 21X. The transmission mode is specified by the configuration information selected by the control unit 12. The control unit 12 generates transmission mode information including the selected configuration information and the connection source address information included in the connection request data (step S4).

The control unit 12 transmits the generated transmission mode information to the control unit 20Y of the optical communication device 2Y through the connection line 3 (step S5-1). The control unit 20Y of the optical communication device 2Y receives the transmission mode information transmitted by the control unit 12 of the connection node device 1, and outputs the received transmission mode information to the control unit 71Y of the optical transmission/reception unit 21Y. The control unit 71Y captures the transmission mode information output from the control unit 20Y. The control unit 71Y outputs an output optical power designation signal indicating the output optical power indicated by the captured transmission mode information to the single-wavelength light source 25Y. Thus, the single-wavelength light source 25Y generates and outputs continuous light with the output optical power designated by the output optical power designation signal, that is, the output optical power indicated in the transmission mode information.

The control unit 71Y outputs a modulation scheme designation signal indicating the modulation scheme indicated in the transmission mode information to an optical modulator 26Y. Thus, the optical modulator 26Y performs optical modulation using the modulation scheme designated by the modulation scheme designation signal received from the control unit 71Y, that is, the modulation scheme indicated in the transmission mode information. The control unit 71Y outputs the transmission mode information to the digital signal processing unit 23Y. The digital signal processing unit 23Y captures the transmission mode information output by the control unit 71Y, stores the modulation scheme, the baud rate, the bit rate, the FEC type, the signal band permitted to be used, and the like indicated in the captured transmission mode information in an internal storage area as setting parameters, and generates a transmission data signal on the basis of the setting parameters stored in the internal storage area when generating the transmission data signal and outputs the transmission data signal to the optical modulator 26Y (step S6-1). Note that the control unit 71Y may store the modulation scheme, the baud rate, the bit rate, the FEC type, the signal band permitted to be used, and the like indicated in the transmission mode information in an internal storage area as setting parameters. In this case, the control unit 71Y outputs the setting parameters to the digital signal processing unit 23Y when the digital signal processing unit 23Y generates the transmission data signal.

The control unit 12 of the connection node device 1 outputs an output optical power designation signal for designating the basic output optical power of the basic mode to the single-wavelength light source 36, and outputs a modulation scheme designation signal for designating the basic modulation scheme of the basic mode to the optical modulator 37. The control unit 12 outputs the generated transmission mode information to the digital signal processing unit 32. The digital signal processing unit 32 captures the transmission mode information output from the control unit 12, and generates the transmission data signal so that the captured transmission mode information is included in the free space of the overhead of the transmission frame. The digital signal processing unit 32 outputs the generated transmission data signal of an electrical signal to the optical modulator 37. On the basis of the transmission data signal output from the digital signal processing unit 32, the optical modulator 37 performs optical modulation of the continuous light output from the single-wavelength light source 36 with the basic output optical power designated by the output optical power designation signal according to the basic modulation scheme of the basic mode designated by the modulation scheme designation signal.

The optical modulator 37 outputs an optical signal generated by the optical modulation to the IF unit 31. The IF unit 31 captures an optical signal output from the optical modulator 37. The IF unit 31 outputs the captured optical signal to the optical switch unit 15R. The optical switch unit 15R sends the optical signal output from the IF unit 31 to the optical fiber 51R. The optical fiber 51R transmits the optical signal sent from the optical switch unit 15R to the IF unit 22X of the optical communication device 2X (step S5-2).

The IF unit 22X of the optical communication device 2X receives the optical signal transmitted by the optical fiber 51R and outputs the received optical signal to the photodetector 28X. The photodetector 28X receives the optical signal output from the IF unit 22X, and converts the received optical signal into an electrical signal to obtain a reception data signal. The photodetector 28X outputs the reception data signal to the digital signal processing unit 23X. The digital signal processing unit 23X captures the reception data signal output from the photodetector 28X.

The digital signal processing unit 23X reads the transmission mode information from the overhead area of the captured reception data signal, and outputs the read transmission mode information to the control unit 71X. The control unit 71X captures the transmission mode information output from the digital signal processing unit 23X, and discards the captured transmission mode information when the connection source address information included in the captured transmission mode information is not the address information added to the optical transmission/reception unit 21X stored in the internal storage area. On the other hand, when the address information included in the captured transmission mode information matches the address information added to the optical transmission/reception unit 21X, the control unit 71X outputs an output optical power designation signal indicating the output optical power indicated by the read transmission mode information to the single-wavelength light source 25X. Thus, the single-wavelength light source 25X generates and outputs continuous light with the output optical power designated by the output optical power designation signal, that is, the output optical power indicated in the transmission mode information.

The control unit 71X outputs a modulation scheme designation signal indicating the modulation scheme indicated in the transmission mode information to the optical modulator 26X. Thus, the optical modulator 26X performs optical modulation using the modulation scheme designated by the modulation scheme designation signal received from the control unit 71X, that is, the modulation scheme indicated in the transmission mode information. The digital signal processing unit 23X stores the modulation scheme, the baud rate, the bit rate, the FEC type, the signal band permitted to be used, and the like indicated in the read transmission mode information in an internal storage area as setting parameters, and generates a transmission data signal on the basis of the setting parameters stored in the internal storage area when generating the transmission data signal and outputs the transmission data signal to the optical modulator 26X (step S6-2). Note that the control unit 71X may store the modulation scheme, the baud rate, the bit rate, the FEC type, the signal band permitted to be used, and the like indicated in the transmission mode information in the internal storage area as setting parameters. In this case, the control unit 71X outputs the setting parameters to the digital signal processing unit 23X when the digital signal processing unit 23X generates the transmission data signal.

The control unit 12 of the connection node device 1 refers to the path information table and detects the connection source address information included in the generated transmission mode information, here, the identification information for specifying the optical transmission line 51 corresponding to the address information of the optical transmission/reception unit 21X. The control unit 12 performs switching processing of connecting the optical transmission line 51 and the optical transmission line 52 on the basis of the detected identification information for specifying the optical transmission line 51 and the identification information for specifying the optical transmission line 52 detected in the processing of step S3. The control unit 12 outputs a switching instruction signal for setting the optical fiber 52T as a connection destination of the optical fiber 51T to the optical switch unit 15T of the output port switching unit 14. The control unit 12 outputs, to the optical switch unit 15R, a switching instruction signal for setting the connection destination of the optical fiber 51R to the optical fiber 52R.

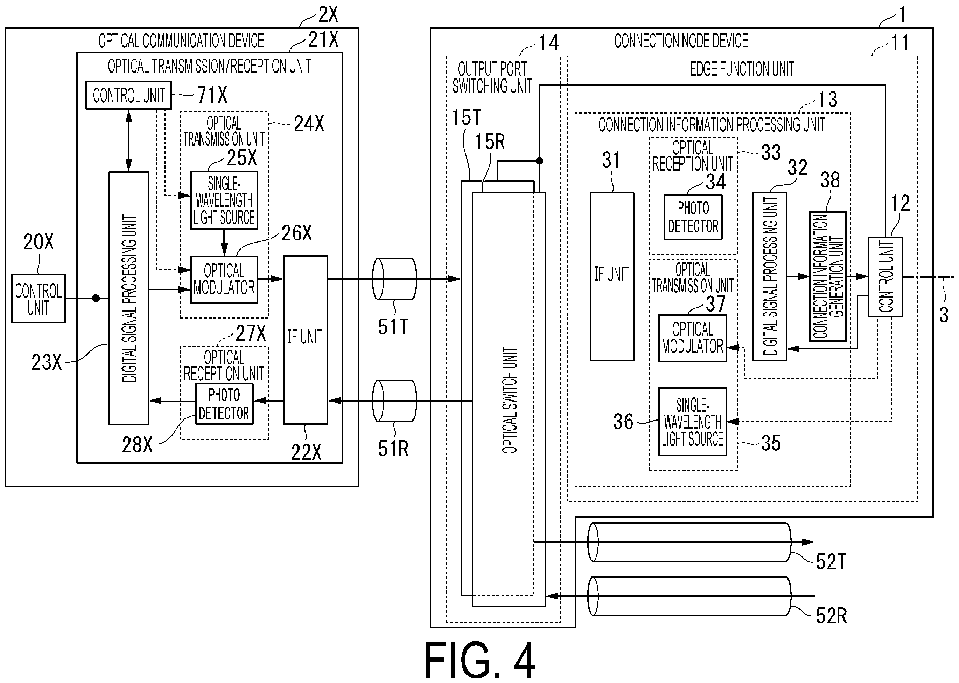

Upon receiving the switching instruction signal from the control unit 12, the optical switch unit 15T connects the optical fiber 51T and the optical fiber 52T. Upon receiving the switching instruction signal from the control unit 12, the optical switch unit 15R connects the optical fiber 51R and the optical fiber 52R (step S7). Thus, as illustrated in Fig. 4, the optical fiber 51T and the optical fiber 52T are connected via the optical switch unit 15T, and the optical fiber 51R and the optical fiber 52R are connected via the optical switch unit 15R. Consequently, the optical transmission/reception unit 21X of the optical communication device 2X and the optical transmission/reception unit 21Y of the optical communication device 2Y are connected via the optical transmission line 51 and the optical transmission line 52.

Note that the processing in steps S5-1 and S5-2 may be performed in parallel, may be performed in the order of steps S5-1 and S5-2, or may be performed in the reverse order.

In the configuration of the first embodiment, the connection information processing unit 13 acquires the connection information including the transmission line information that is the information regarding the optical transmission line. The output port switching unit 14 is connected to the optical transmission line 51 that is a first optical transmission line, the optical transmission line 52 that is a second optical transmission line, and the connection information processing unit 13, and the connection destination of the optical transmission line 51 in the initial state is the connection information processing unit 13. The control unit 12 transmits connection information of the optical transmission line 51 acquired from the optical signal transmitted by the optical transmission/reception unit 21X included in the optical communication device 2X connected to the optical transmission line 51 by the connection information processing unit 13, the connection request data transmitted by being included in the optical signal by the optical transmission/reception unit 21X, and the transmission mode information indicating the transmission mode specified on the basis of the transmission line information of the optical transmission line 52 to the optical transmission/reception unit 21X through the optical transmission line 51. As an example, after the control unit 12 transmits the transmission mode information, the output port switching unit 14 performs switching processing of switching the connection destination of the optical transmission line 51 from the connection information processing unit 13 to the optical transmission line 52. Thus, for example, in a case where the optical communication device 2Y including the optical transmission/reception unit 21Y is connected to the optical transmission line 52, when the optical transmission/reception units 21X and 21Y included in the optical communication devices 2X and 2Y are connected via the plurality of optical transmission lines 51 and 52, they can be connected by the optical path of the optimum transmission mode without manual intervention. Therefore, it is possible to reduce the cost and time required for setting the light path.

Note that, in the first embodiment described above, the control unit 12 of the connection node device 1 calculates transmission line characteristics End-To-End, that is, between one end of the optical transmission line 51 to which the optical communication device 2X is connected and one end of the optical transmission line 52 to which the optical communication device 2Y is connected on the basis of the connection information generated by the connection information processing unit 13 and the transmission line information of the optical transmission line 52. On the other hand, the transmission line characteristics may be calculated as follows. The control unit 12 calculates the transmission line characteristics of the optical transmission line 51 on the basis of the connection information generated by the connection information processing unit 13. The control unit 12 calculates the transmission line characteristics of the optical transmission line 52 on the basis of the transmission line information of the optical transmission line 52. The control unit 12 may calculate an approximate End-To-End transmission line characteristic on the basis of the calculated transmission line characteristics of the optical transmission line 51 and the transmission line characteristics of the optical transmission line 52. For example, in a case of the OSNR and the GSNR included in the transmission line characteristics, the control unit 12 calculates the OSNR and the GSNR of the optical transmission line 51 and the OSNR and the GSNR of the optical transmission line 52. The control unit 12 calculates an approximate OSNR of End-To-End on the basis of the calculated OSNR of the optical transmission line 51 and the OSNR of the optical transmission line 52. An approximate GSNR of End-To-End is calculated on the basis of the calculated GSNR of the optical transmission line 51 and the calculated GSNR of the optical transmission line 52. Note that the control unit 12 may have the following configuration instead of calculating the transmission line characteristics of the optical transmission line 52 on the basis of the transmission line information of the optical transmission line 52. The control unit 12 calculates the transmission line characteristics of the optical transmission line 52 in advance on the basis of the transmission line information of the optical transmission line 52, and stores the calculated transmission line characteristics of the optical transmission line 52 in the internal storage area in advance. When performing the processing of calculating the transmission line characteristics of the optical transmission line 52, the control unit 12 may obtain the transmission line characteristics of the optical transmission line 52 by reading the transmission line characteristics of the optical transmission line 52 from the internal storage area instead of the processing of calculating the transmission line characteristics.

### (Second Embodiment)

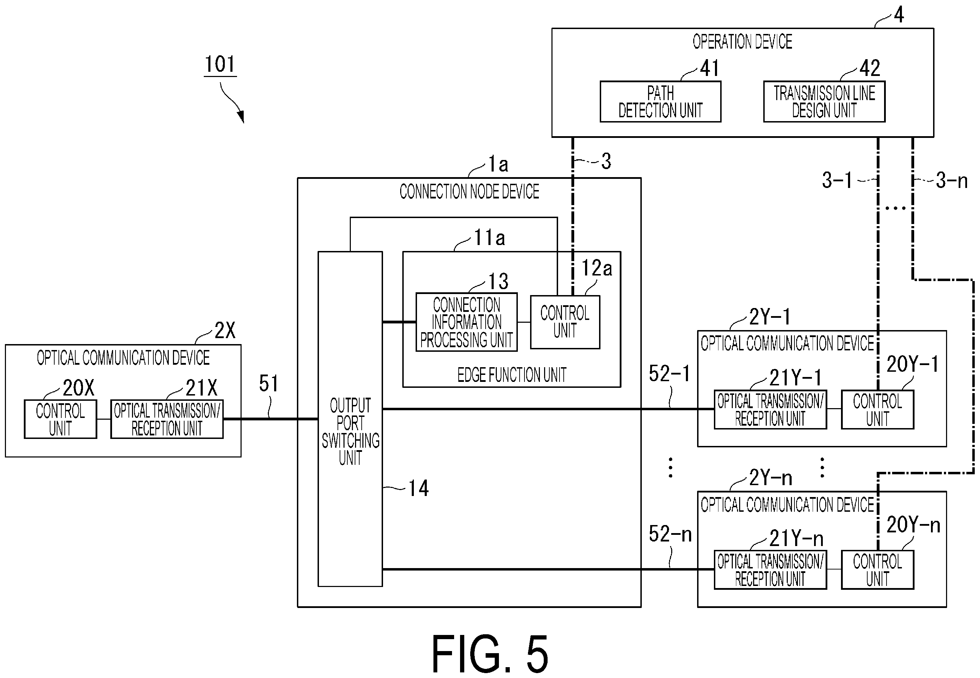

Fig. 5 is a block diagram illustrating a configuration of an optical transmission system 101 according to a second embodiment. In the second embodiment, the same configurations as those in the first embodiment are denoted by the same reference signs, and different configurations will be described below. The optical transmission system 101 includes a connection node device 1a, the optical communication device 2X, a plurality of optical communication devices 2Y-1 to 2Y-n, an operation device 4, the optical transmission line 51, optical transmission lines 52-1 to 52-n, the connection line 3, and connection lines 3-1 to 3-n that connect the operation device 4 and each of the optical communication devices 2Y-1 to 2Y-n. Herein, n is an integer equal to or more than 1. The optical transmission line 51 connects the optical communication device 2X and the connection node device 1a. The optical transmission lines 52-1 to 52-n connect each of the optical communication devices 2Y-1 to 2Y-n and the connection node device 1a. The connection line 3 connects the operation device 4 and the connection node device 1a.

Each of the optical communication devices 2Y-1 to 2Y-n has the same configuration as the optical communication device 2Y of the first embodiment, that is, the same configuration as the optical communication device 2X. Hereinafter, when each functional unit included in the optical communication devices 2Y-1 to 2Y-n is illustrated, "X" included in the reference sign assigned to each functional unit included in the optical communication device 2X is replaced with "Y-1" to "Y-n". Each of the optical transmission/reception units 21Y-1 to 21Y-n included in the optical communication devices 2Y-1 to Y-n is also added with address information that can identify each of them in advance as is the optical transmission/reception unit 21X of the optical communication device 2X.

Each of the optical transmission lines 52-1 to 52-n includes two optical fibers as does the optical transmission line 52 of the first embodiment, and when two optical fibers included in each of the optical transmission lines are illustrated, they are denoted by adding a reference sign "T" or "R". For example, in a case of the optical transmission line 52-1, it is assumed that optical fibers 52T-1 and 52R-1 are illustrated. Each of the connection lines 3-1 to 3-n is a communication line similar to the connection line 3.

The connection node device 1a includes an edge function unit 11a and the output port switching unit 14. The output port switching unit 14 is connected to the optical transmission line 51, the connection information processing unit 13 of the connection node device 1a, and each of the optical transmission lines 52-1 to 52-n, selects any one of the connection information processing unit 13 and the optical transmission lines 52-1 to 52-n as a connection destination of the optical transmission line 51, and switches the connection destination.

The edge function unit 11a includes the connection information processing unit 13 and a control unit 12a. The control unit 12a stores in advance, in an internal storage area, an address path correspondence table in which identification information for specifying the optical transmission lines 51 and 52-1 to 52-n to which the optical transmission/reception units 21X and 21Y-1 to 21Y-n corresponding to each piece of address information are connected is associated with each piece of address information of the optical transmission/reception units 21X and 21Y-1 to 21Y-n included respectively in the optical communication devices 2X and 2Y-1 to 2Y-n connected to the connection node device 1a. Note that the control unit 12a may acquire the address path correspondence table from an external device on demand instead of storing the address path correspondence table in advance in the internal storage area.

The control unit 12a transmits the connection information and the connection request data output from the connection information generation unit 38 of the connection information processing unit 13 to the operation device 4 through the connection line 3. The control unit 12a outputs the transmission mode information received from the operation device 4 to the digital signal processing unit 32. The control unit 12a outputs a switching instruction signal for switching the connection destination to the output port switching unit 14.

The operation device 4 includes a path detection unit 41 and a transmission line design unit 42. The path detection unit 41 stores in advance, in an internal storage area, a path information table in which address information of the optical transmission/reception units 21X and 21Y-1 to 21Y-n of the optical communication devices 2X and 2Y-1 to 2Y-n is associated with the identification information for specifying an optical transmission line corresponding to the address information. The path detection unit 41 may acquire the path information table from an external device on demand instead of storing the path information table in advance in the internal storage area.

For example, in a case of the optical transmission system 101, in the path information table, the identification information for specifying the optical transmission lines 51 and 52-1 to 52-n to which the optical transmission/reception units 21X and 21Y-1 to 21Y-n corresponding to each piece of the address information are connected is associated with each piece of the address information of the optical transmission/reception units 21X and 21Y-1 to 21Y-n included respectively in the optical communication devices 2X and 2Y-1 to 2Y-n. The path detection unit 41 refers to the path information table and detects the identification information for specifying any one optical transmission line 52-i of the optical transmission lines 52-1 to 52-n corresponding to the connection destination address information included in the connection request data transmitted by the control unit 12a of the connection node device 1a (where i is any integer from 1 to n).

The transmission line design unit 42 stores the transmission line information of each of the optical transmission lines 52-1 to 52-n in an internal storage area in association with the identification information for specifying each of the optical transmission lines 52-1 to 52-n. Note that the transmission line design unit 42 may calculate the transmission line information of the optical transmission lines 52-1 to 52-n in advance by predetermined calculation on the basis of the optical signals transmitted by the optical transmission lines 52-1 to 52-n and store the transmission line information in the internal storage area, or may acquire the transmission line information from an external device on demand at a specific timing such as when a network is laid. The transmission line information of the optical transmission lines 52-1 to 52-n may be obtained in advance by a method other than the predetermined calculation.

The transmission line design unit 42 stores information indicating free resources of each of the optical transmission lines 52-1 to 52-n in the internal storage area. Here, the information indicating the free resources is, for example, information indicating a wavelength, or a wavelength band, or an optical transmission path that is not used for communication when determining the free state of a resource. Note that the information indicating the free resource is updated by the transmission line design unit 42 every time a communication path is established.

On the basis of the connection information transmitted by the control unit 12a of the connection node device 1a and the transmission line information of the optical transmission line 52-i corresponding to the identification information for specifying the optical transmission line 52-i detected by the path detection unit 41, the transmission line design unit 42 calculates the transmission line characteristics by, for example, a transmission design tool such as GNPy provided inside.

The transmission line design unit 42 selects the configuration information by the predetermined selection processing on the basis of the calculated transmission line characteristics, information indicating a free resource corresponding to the identification information for specifying the optical transmission line 52-i detected by the path detection unit 41, and desired bit rate information and specification information of the optical transmission/reception unit 21X included in the connection request data transmitted by the control unit 12a of the connection node device 1a The transmission mode is specified by the configuration information selected by the transmission line design unit 42. The transmission line design unit 42 generates transmission mode information including the selected configuration information and the connection source address information included in the connection request data. The transmission line design unit 42 transmits the generated transmission mode information and the identification information for specifying the optical transmission line 52-i detected by the path detection unit 41 to the control unit 12a of the connection node device 1a via the connection line 3.

The transmission line design unit 42 stores in advance, in the internal storage area, a connection line table in which address information of the optical transmission/reception units 21Y-1 to 21Y-n included in the optical communication devices 2Y-1 to 2Y-n is associated with the connection lines 3-1 to 3-n to which the optical communication devices 2Y-1 to 2Y-n corresponding to the address information are connected. The transmission line design unit 42 refers to the connection line table stored in the internal storage area, and transmits the generated transmission mode information to the control units 20Y-1 to 20Y-n of the optical communication devices 2Y-1 to 2Y-n through the connection lines 3-1 to 3-n connected to the optical communication devices 2Y-1 to 2Y-n including the optical transmission/reception units 21Y-1 to 21Y-n corresponding to the connection destination address information included in the connection request data.

### (Processing by Optical Transmission System of Second Embodiment)

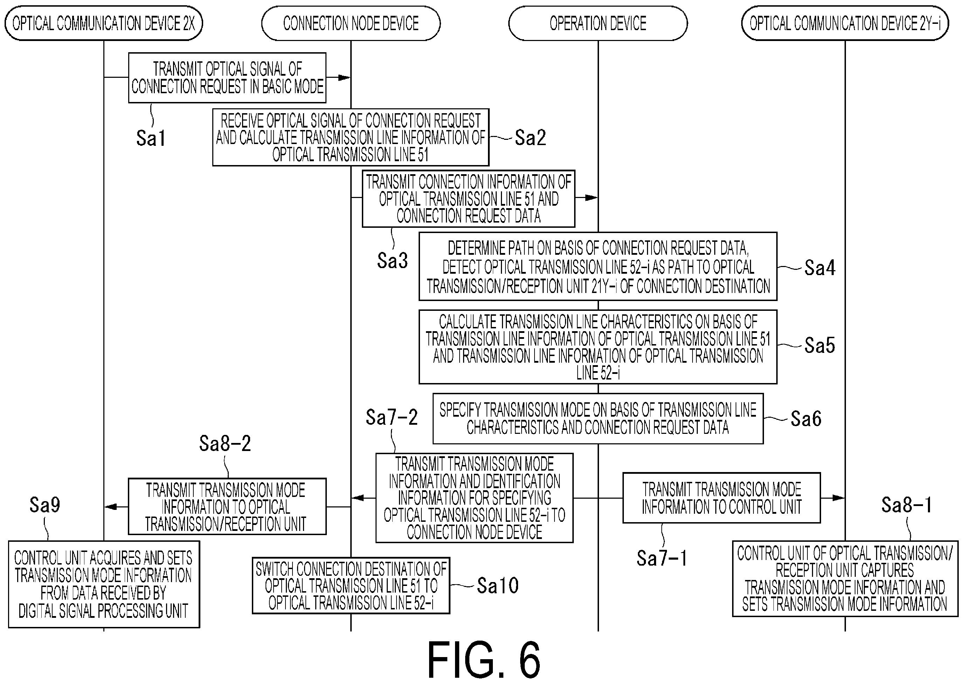

Fig. 6 is a flowchart illustrating a flow of processing by the optical transmission system 101 of the second embodiment. Hereinafter, as an example, processing in which the optical transmission/reception unit 21X included in the optical communication device 2X connects an optical transmission/reception unit 21Y-i of an optical communication device 2Y-i as a connection destination will be described. In the processing of steps Sa1 and Sa2 in Fig. 6, the same processing as in steps S1 and S2 of the first embodiment is performed. However, in step Sa1, it is assumed that the control unit 20X of the optical communication device 2X generates the connection request instruction signal including the address information of the optical transmission/reception unit 21Y-i included in the optical communication device 2Y-i as the address information of the connection destination, and the optical communication device 2Y-i is connected to the optical transmission line 52-i and a connection line 3-i.

The control unit 12a captures the connection request data and the connection information output from the connection information generation unit 38. The control unit 12a transmits the captured connection request data and connection information to the operation device 4 through the connection line 3 (step Sa3).

The path detection unit 41 of the operation device 4 receives the connection request data transmitted by the control unit 12a. The path detection unit 41 refers to the path information table stored in the internal storage area or the path information table acquired on demand, and detects the connection destination address information included in the received connection request data, here, the identification information for specifying the optical transmission line 52-i corresponding to the address information of the optical transmission/reception unit 21Y-i. The path detection unit 41 outputs the detected identification information for specifying the optical transmission line 52-i to the transmission line design unit 42 (step Sa4).

The transmission line design unit 42 receives the connection information and the connection request data transmitted by the control unit 12a. The transmission line design unit 42 captures the identification information for specifying the optical transmission line 52-i output by the path detection unit 41. The transmission line design unit 42 reads and acquires the transmission line information of the optical transmission line 52-i corresponding to the captured identification information for specifying the optical transmission line 52-i from the internal storage area, or acquires the transmission line information of the optical transmission line 52-i on demand. The transmission line design unit 42 calculates the transmission line characteristics on the basis of the acquired transmission line information of the optical transmission line 52-i and the received connection information (step Sa5).

The transmission line design unit 42 selects the configuration information by the predetermined selection processing on the basis of the calculated transmission line characteristics, and the desired bit rate information and the specification information of the optical transmission/reception unit 21X included in the received connection request data. The transmission mode is specified by the configuration information selected by the transmission line design unit 42. The transmission line design unit 42 generates transmission mode information including the selected configuration information and the connection source address information included in the connection request data (step Sa6).

The transmission line design unit 42 refers to the connection line table stored in the internal storage area, and transmits the generated transmission mode information to the control unit 20Y-i of the optical communication device 2Y-i through the connection line 3-i connected to the optical communication device 2Y-i including the optical transmission/reception unit 21Y-i corresponding to the connection destination address information included in the connection request data (step Sa7-1). The control unit 20Y-i of the optical communication device 2Y-i receives the transmission mode information transmitted by the transmission line design unit 42 of the operation device 4, and outputs the received transmission mode information to the control unit 71Y-i of the optical transmission/reception unit 21X-i. Thereafter, the same processing as in step S6-1 of the first embodiment is performed by the functional units of the optical communication device 2Y-i corresponding to the respective functional units included in the optical communication device 2Y of the first embodiment (step Sa8-1).

The transmission line design unit 42 transmits the generated transmission mode information and the identification information for specifying the optical transmission line 52-i detected by the path detection unit 41 to the connection node device 1a via the connection line 3 (step Sa7-2). The control unit 12a of the connection node device 1a receives the transmission mode information transmitted by the transmission line design unit 42 of the operation device 4 and the identification information for specifying the optical transmission line 52-i. After the control unit 12a receives the transmission mode information and the identification information for specifying the optical transmission line 52-i, the same processing as in step S5-2 of the first embodiment is performed by the control unit 12a, the connection information processing unit 13, and the output port switching unit 14 on the basis of the received transmission mode information (step Sa8-2). Thereafter, the same processing as in step S6-2 of the first embodiment is performed (step Sa9).

The control unit 12a of the connection node device 1a detects the identification information for specifying the optical transmission line 51 from the address path correspondence table stored in the internal storage area or the address path correspondence table acquired on demand on the basis of the connection source address information included in the received transmission mode information, here, the address information added to the optical transmission/reception unit 21X. The control unit 12a performs switching processing of connecting the optical transmission line 51 and the optical transmission line 52-i on the basis of the detected identification information for specifying the optical transmission line 51 and the received identification information for specifying the optical transmission line 52-i. The control unit 12a outputs a switching instruction signal for setting the connection destination of the optical fiber 51T to the optical switch unit 15T of the output port switching unit 14 as the optical fiber 52T-i. The control unit 12a outputs a switching instruction signal for setting the connection destination of the optical fiber 51R to the optical fiber 52R-i to the optical switch unit 15R.

Upon receiving the switching instruction signal from the control unit 12a, the optical switch unit 15T connects the optical fiber 51T and the optical fiber 52T-i. Upon receiving the switching instruction signal from the control unit 12a, the optical switch unit 15R connects the optical fiber 51R and the optical fiber 52R-i (step Sa10). Thus, the optical fiber 51T and the optical fiber 52T-i are connected via the optical switch unit 15T, and the optical fiber 51R and the optical fiber 52R-i are connected via the optical switch unit 15R. Consequently, the optical communication device 2X and the optical communication device 2Y-i are connected via the optical transmission line 51 and the optical transmission line 52-i.

Note that the processing order of steps Sa7-1 and Sa7-2 may be performed in parallel, may be performed in the order of steps Sa7-1 and Sa7-2, or may be performed in the reverse order.

In the configuration of the second embodiment described above, the optical communication device 2X that is the first optical communication device is connected to the connection node device 1a via the optical transmission line 51 that is the first optical transmission line. The optical communication devices 2Y-1 to 2Y-n, which are second optical communication devices, are connected to the connection node device 1a via the optical transmission lines 52-1 to 52-n, which are second optical transmission lines. The operation device 4 is connected to the connection node device 1a and each of the optical communication devices 2Y-1 to 2Y-n. The operation device 4 reads and acquires, from an internal storage area, the transmission line information of the optical transmission line 52-i stored in advance in the internal storage area, or acquires the transmission line information of the optical transmission line 52-i on demand, specifies a transmission mode on the basis of the acquired transmission line information of the optical transmission line 52-i, the connection information of the optical transmission line 51 acquired by the connection information processing unit 13 of the connection node device 1a from the optical signal transmitted by the optical transmission/reception unit 21X included in the optical communication device 2X, and the connection request data transmitted by the optical transmission/reception unit 21X included in the optical communication device 2X, and transmits transmission mode information indicating the specified transmission mode to the control unit 12a of the connection node device 1a and the optical transmission/reception unit 21Y-i included in the optical communication device 2Y-i. The optical transmission/reception unit 21X included in the optical communication device 2X receives the transmission mode information received by the control unit 12a of the connection node device 1a from the operation device 4 and sent to the optical transmission line 51, and transmits and receives an optical signal through the optical transmission line 51 in the transmission mode indicated by the received transmission mode information. The optical transmission/reception unit 21Y-i included in the optical communication device 2Y-i transmits and receives an optical signal through the optical transmission line 52-i in the transmission mode indicated by the transmission mode information received from the operation device 4. After the control unit 12a transmits the transmission mode information to the optical communication device 2X through the optical transmission line 51, the output port switching unit 14 of the connection node device 1a connects, by switching processing, the optical transmission/reception unit 21X included in the optical communication device 2X and the optical transmission/reception unit 21Y-i included in the optical communication device 2Y-i via the optical transmission line 51 and the optical transmission line 52. Thus, when the optical transmission/reception units 21X and 21Y-i included in the optical communication devices 2X and 2Y-i are connected via the plurality of optical transmission lines 51 and 52-i, the optical transmission/reception units can be connected by the optical path of the optimum transmission mode without manual intervention. Therefore, it is possible to reduce the cost and time required for setting the light path.

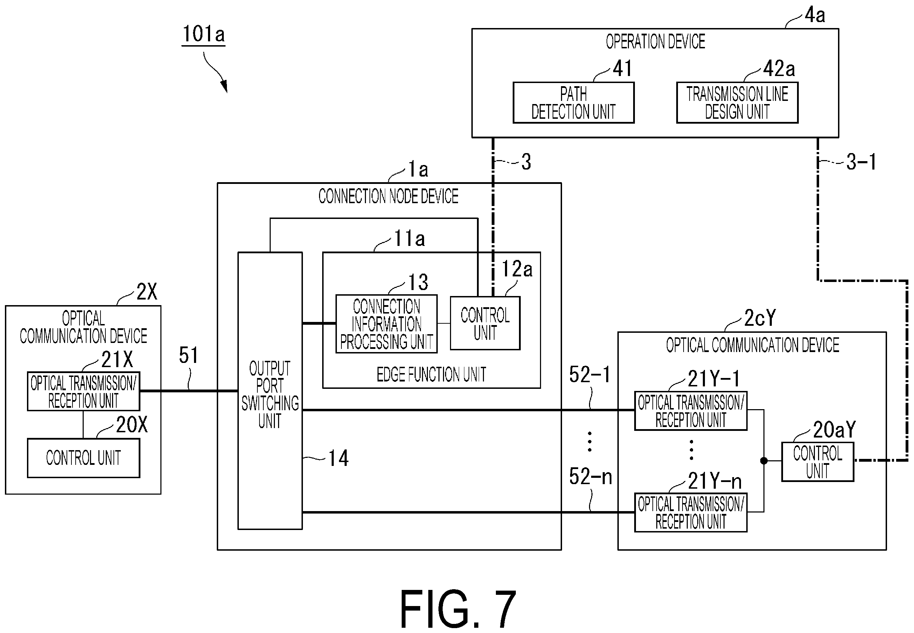

Note that, in the optical transmission system 101 of the second embodiment described above, instead of including the optical communication devices 2Y-1 to 2Y-n, as in the optical transmission system 101a illustrated in Fig. 7, a configuration may be employed in which one optical communication device 2cY including a plurality of optical transmission/reception units 21Y-1 to 21Y-n and one control unit 20aY are provided, and a plurality of optical transmission lines 52-1 to 52-n is connected to the optical transmission/reception units 21Y-1 to 21Y-n, respectively. In the optical transmission system 101 illustrated in Fig. 5, the transmission line design unit 42 refers to the connection line table stored in the internal storage area, and transmits the transmission mode information to the control units 20Y-1 to 20Y-n of the optical communication devices 2Y-1 to 2Y-n through the connection lines 3-1 to 3-n corresponding to the connection destination address information included in the transmission mode information. On the other hand, in the optical transmission system 101a illustrated in Fig. 7, a transmission line design unit 42a included in an operation device 4a adds the connection destination address information included in the connection request data to the generated transmission mode information, and transmits the transmission mode information to the control unit 20aY of the optical communication device 2cY through the connection line 3-1. Thus, the transmission line design unit 42a does not need to store the connection line table in advance in an internal storage area.

The control unit 20aY has the same configuration as the configuration of each of the control units 20Y-1 to 20Y-n regarding the configuration excluding the following configuration. Upon receiving the transmission mode information transmitted by the transmission line design unit 42a, each of the control units 20Y-1 to 20Y-n outputs the received transmission mode information to the respective connected optical transmission/reception units 21Y-1 to 21Y-n. On the other hand, upon receiving the transmission mode information transmitted by the transmission line design unit 42a through the connection line 3-1, the control unit 20aY outputs the transmission mode information to any one of the optical transmission/reception units 21Y-1 to 21Y-n corresponding to the connection destination address information added to the received transmission mode information.

With the above configuration, in the optical transmission system 101a, as in the optical transmission system 101, by setting the connection destination address information of the connection request data to the address information of the optical transmission/reception unit 21Y-i that requests connection, it is possible to connect to the optical transmission/reception unit 21Y-i corresponding to the connection destination address information via the optical transmission lines 51 and 52-i, and transmit and receive optical signals in the same transmission mode between the optical transmission/reception unit 21X and the optical transmission/reception unit 21Y-i.

### (Third Embodiment)

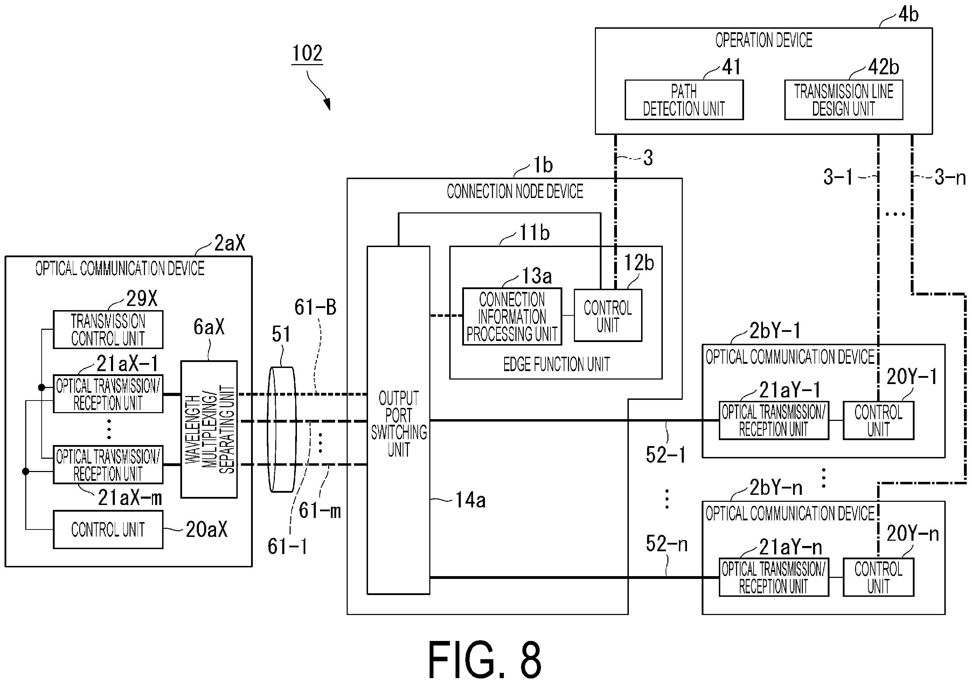

Fig. 8 is a block diagram illustrating a configuration of an optical transmission system 102 in a third embodiment. In the third embodiment, the same configurations as those in the first and second embodiments are indicated by the same reference signs, and different configurations will be described below. The optical transmission system 102 includes a connection node device 1b, an optical communication device 2aX, a plurality of optical communication devices 2bY-1 to 2bY-n, an operation device 4b, the optical transmission line 51, the optical transmission lines 52-1 to 52-n, the connection line 3, and the connection lines 3-1 to 3-n. The optical communication device 2aX is, for example, a communication device used by a user, and the optical communication devices 2bY-1 to 2bY-n are, for example, optical transmission devices owned by a communication carrier, that is, node devices in a communication network, or white box type transponders owned by a communication carrier or a data center company. The optical transmission line 51 connects the optical communication device 2aX and the connection node device 1b. The optical transmission lines 52-1 to 52-n connect each of the optical communication devices 2bY-1 to 2bY-n and the connection node device 1b. The connection line 3 connects the operation device 4b and the connection node device 1b. The connection lines 3-1 to 3-n connect the operation device 4b and each of the optical communication devices 2bY-1 to 2bY-n.

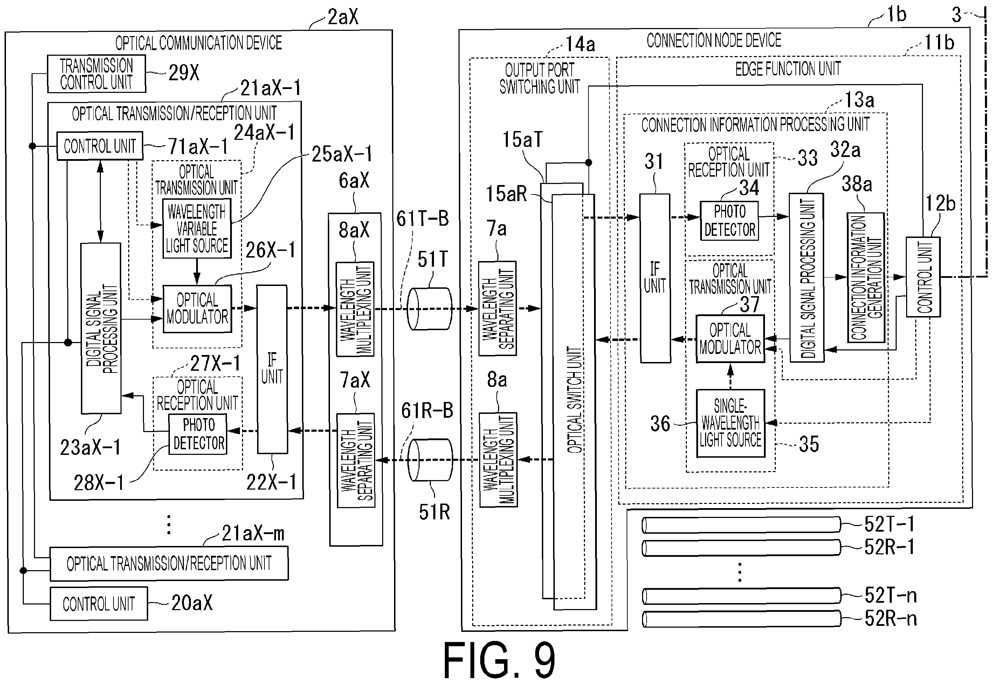

Internal configurations of the connection node device 1b, the optical communication device 2aX, the optical communication devices 2bY-1 to 2bY-n, and the operation device 4b will be described with reference to Fig. 9 in addition to Fig. 8. Note that, among the connection lines illustrated in Figs. 8 and 9, a thick dotted line indicates a wavelength path of the basic wavelength, and a thick broken line indicates a wavelength path other than the basic wavelength. A thick dotted arrow indicates a data signal of light transmitted by the wavelength path of the basic wavelength.

As illustrated in Fig. 8, the optical communication device 2aX includes a plurality of optical transmission/reception units 21aX-1 to 21aX-m, a wavelength multiplexing/separating unit 6aX, a control unit 20aX, and a transmission control unit 29X. Here, m is an integer equal to or more than 1, and may be the same value as n or a value different from n.

The control unit 20aX is connected to each of the optical transmission/reception units 21aX-1 to 21aX-m, controls each of the optical transmission/reception units 21aX-1 to 21aX-m, and inputs/outputs information to/from the optical transmission/reception units 21aX-1 to 21aX-m. The control unit 20aX generates a connection request instruction signal when starting connection to any one of the optical transmission/reception units 21aY-1 to 20aY-n included respectively in the optical communication devices 2bY-1 to 2bY-n to the optical transmission/reception unit 21aY-i.

As illustrated in Fig. 9, the optical transmission/reception unit 21aX-1 includes an IF unit 22X-1, an optical transmission unit 24aX-1, an optical reception unit 27X-1, a digital signal processing unit 23aX-1, and a control unit 71aX-1. The IF unit 22X-1 connects the optical transmission unit 24aX-1 and the optical fiber 51T via a wavelength multiplexing unit 8aX included in the wavelength multiplexing/separating unit 6aX. The IF unit 22X-1 connects the optical reception unit 27X-1 and the optical fiber 51R via a wavelength separating unit 7aX included in the wavelength multiplexing/separating unit 6aX.

For example, when starting connection to any one of the optical transmission/reception units 21aY-1 to 21aY-n included in the optical communication devices 2bY-1 to 2bY-n, the control unit 71aX-1 receives a connection request instruction signal from the control unit 20aX, and generates connection request data of an electrical signal requesting connection. The specification information of the optical transmission/reception unit 21aX-1 included in the connection request data in the third embodiment includes, for example, information indicating that a wavelength variable light source 25aX-1 included in the optical transmission unit 24aX-1 is a type that changes a wavelength and outputs the wavelength, and information indicating a range of wavelengths that can be generated by the wavelength variable light source 25aX-1, that is, a wavelength band of the wavelength variable light source 25aX-1, in addition to the modulation scheme, the FEC type, and the baud rate that can be used in the optical transmission unit 24aX-1.

Address information for identifying each of the optical transmission/reception units 21aX-1 to 21aX-m included in the optical communication device 2aX and the optical transmission/reception units 21aY-1 to 21aY-n included in the optical communication devices 2bY-1 to 2bY-n is added in advance. The control unit 20aX stores the desired bit rate and the address information of the connection destination in an internal storage area in advance. The control unit 71aX-1 of the optical transmission/reception unit 21aX-1 stores, in advance in an internal storage area, address information added to the optical transmission/reception unit 21aX-1 including itself. For example, the control unit 71aX-1 acquires the specification information of the optical transmission/reception unit 21aX-1 from the optical transmission unit 24aX-1 and the digital signal processing unit 23aX-1 at the timing when the optical transmission/reception unit 21aX-1 is included in the optical communication device 2aX, and stores the specification information in the internal storage area. Instead of storing the address information of the connection destination in advance in the internal storage area, for example, the control unit 20aX may capture and acquire the address information of the connection destination designated by the user of the optical communication device 2aX or may acquire the address information of the connection destination from the connection node device 1b. Instead of storing the desired bit rate in advance in the internal storage area, the control unit 20aX may capture and acquire data of a bit rate designated in advance by the user in response to an input operation of the user.

For example, when requesting connection from the optical transmission/reception unit 21aX-1 to the optical transmission/reception unit 21aY-i included in the optical communication device 2aY-i, the control unit 20aX generates a connection request instruction signal including the address information of the optical transmission/reception unit 21aY-i and the desired bit rate, and outputs the connection request instruction signal to the control unit 71aX-1 of the optical transmission/reception unit 21aX-1. The control unit 71aX-1 reads the address information of the optical transmission/reception unit 21aY-i included in the connection request instruction signal received from the control unit 20aX and sets the address information as the connection destination address information, and reads the address information of the optical transmission/reception unit 21aX-1 stored in the internal storage area and sets the address information as the connection source address information. The control unit 71aX-1 generates connection request data including the connection destination address information and the connection source address information, the desired bit rate included in the connection request instruction signal, and the specification information of the optical transmission/reception unit 21aX-1 stored in the internal storage area. The control unit 71aX-1 outputs the generated connection request data to the digital signal processing unit 23aX-1.

The control unit 71aX-1 collects optical input information, which is disclosed in, for example, Patent Literature 2 and includes information such as the number of wavelength multiplexes, OutPut-Power, and TxOSNR of the optical transmission unit 24aX-1 collected in advance, from information related to the optical transmission/reception unit 21aX-1, for example, information such as a transceiver type and the number of transceivers included in the optical transmission/reception unit 21aX-1. The control unit 71aX-1 outputs the collected optical input information to the digital signal processing unit 23aX-1.

The optical transmission unit 24aX-1 includes the wavelength variable light source 25aX-1 and an optical modulator 26X-1. The wavelength variable light source 25aX-1 generates continuous light having optical power designated by the output optical power designation signal output from the control unit 71aX-1 and having a wavelength designated by a control signal (hereinafter referred to as "wavelength designation signal") of an electrical signal designating a wavelength output from the control unit 71aX-1. The wavelength variable light source 25aX-1 outputs the generated continuous light to the optical modulator 26X-1.

The digital signal processing unit 23aX-1 has the following configuration in addition to the configuration of the digital signal processing unit 23X of the first embodiment. When transmitting the optical input information output from the control unit 71aX-1 by the transmission data signal, the digital signal processing unit 23aX-1 generates the transmission data signal so that the optical input information is included in a communication channel of the transmission frame.

The optical modulator 26X-1 has the same configuration as the optical modulator 26X of the first embodiment. The optical reception unit 27X-1 has the same configuration as the optical reception unit 27X of the first embodiment. Each of the optical transmission/reception units 21aX-2 to 21aX-m other than the optical transmission/reception unit 21aX-1 has the same configuration as the optical transmission/reception unit 21aX-1. Hereinafter, when a functional unit included in each of the optical transmission/reception units 21aX-2 to 21aX-m is illustrated, the branch number "-1" of the reference sign of each functional unit included in the optical transmission/reception unit 21aX-1 is replaced with "-2" to "-m" that are respective branch numbers. For example, in a case of the optical transmission/reception unit 21aX-2, it is assumed to be illustrated as a digital signal processing unit 23aX-2.

The transmission control unit 29X is connected to each of the optical transmission/reception units 21aX-1 to 21aX-m, and outputs a timing signal indicating a timing of transmitting the connection request data to the optical transmission/reception units 21aX-1 to 21aX-m. Each of the optical transmission/reception units 21aX-1 to 21aX-m transmits the connection request data through a wavelength path 61-B of the basic wavelength. Thus, unless the optical transmission/reception units 21aX-1 to 21aX-m transmit the connection request data at different timings, the connection request data may collide. In order to avoid the occurrence of the collision, the transmission control unit 29X outputs the timing signal to the optical transmission/reception units 21aX-1 to 21aX-m, so that the optical transmission/reception units 21aX-1 to 21aX-m can transmit the connection request data at different timings. Note that the procedure in which the connection node device 1b is connected to the plurality of optical transmission/reception units 21aX-1 to 21aX-m by the basic wavelength is, for example, the techniques disclosed in Patent Literature 1 and Patent Literature 2 are applied.

The optical communication device 2bY-1 includes the optical transmission/reception unit 21aY-1 and the control unit 20Y-1. The optical transmission/reception unit 21aY-1 has the same configuration as the optical transmission/reception unit 21aX-1. Hereinafter, when a functional unit included in the optical transmission/reception unit 21aY-1 is illustrated, the branch number "X-1" of the reference sign of each functional unit included in the optical transmission/reception unit 21aX-1 is replaced with "Y-1". The optical communication devices 2bY-2 to 2bY-n other than the optical communication device 2bY-1 have the same configuration as the optical communication device 2bY-1, and when each functional unit included in the optical communication devices 2Y-2 to 2Y-n is illustrated, "-1" included in the reference sign assigned to each functional unit included in the optical communication device 2bY-1 is replaced with "-2" to "-n".

The connection node device 1b includes an edge function unit 11b and an output port switching unit 14a. The output port switching unit 14a includes, for example, optical switch units 15aT and 15aR such as a wavelength selective switch (WSS) and a fiber patch panel, a wavelength separating unit 7a, and a wavelength multiplexing unit 8a. The wavelength separating unit 7a connects the optical fiber 51T and the optical switch unit 15aT, demultiplexes the optical signal wavelength-multiplexed in the optical fiber 51T for each wavelength, and outputs each of demultiplexed optical signals to the optical switch unit 15aT. The wavelength multiplexing unit 8a connects the optical fiber 51R and the optical switch unit 15aR, combines and wavelength-multiplexes optical signals having different wavelengths output from the optical switch unit 15aR, and sends the wavelength-multiplexed optical signal to the optical fiber 51R.

Note that the connection node device 1b may include the wavelength separating unit 7a and the wavelength multiplexing unit 8a outside the output port switching unit 14a, connect the wavelength separating unit 7a to the optical fiber 51T and the optical switch unit 15aT, and connect the wavelength multiplexing unit 8a to the optical fiber 51R and the optical switch unit 15aR. A wavelength multiplexing/separating device 6 of a single device including the wavelength separating unit 7a and the wavelength multiplexing unit 8a may be provided outside the connection node device 1b, the wavelength separating unit 7a included in the wavelength multiplexing/separating device 6 may be connected to the optical fiber 51T and the optical switch unit 15aT, and the wavelength multiplexing unit 8a included in the wavelength multiplexing/separating device 6 may be connected to the optical fiber 51R and the optical switch unit 15aR.

The optical switch unit 15aT is connected to the optical fiber 51T, the edge function unit 11b, and the optical fibers 52T-1 to 52T-n included in the optical transmission lines 52-1 to 52-n. The optical switch unit 15aT connects a wavelength path 61T-B of the basic wavelength among the wavelength paths of respective wavelengths demultiplexed by the wavelength separating unit 7a to the optical reception unit 33 of the edge function unit 11b via the IF unit 31. Upon receiving the switching instruction signal, the optical switch unit 15aT performs switching processing of connecting any one of the wavelength paths other than the wavelength path 61T-B of the basic wavelength included in the optical fiber 51T to any one of the wavelength paths included in the optical fibers 52T-1 to 52T-n.

The optical switch unit 15aR is connected to the wavelength multiplexing unit 8a, the edge function unit 11b, and the optical fibers 52R-1 to 52R-n included in the optical transmission lines 52-1 to 52-n. The optical switch unit 15aR connects a wavelength path 61R-B of the basic wavelength among the wavelength paths included in the optical fiber 51R connected via the wavelength multiplexing unit 8a to the optical transmission unit 35 of the edge function unit 11b via the IF unit 31. Upon receiving the switching instruction signal, the optical switch unit 15aR performs switching processing of connecting any one of the wavelength paths other than the wavelength path 61R-B of the basic wavelength included in the optical fiber 51R to any one of the wavelength paths included in the optical fibers 52R-1 to 52R-n.

The edge function unit 11b includes a control unit 12b and a connection information processing unit 13a. The connection information processing unit 13a includes the IF unit 31, a digital signal processing unit 32a, the optical reception unit 33, the optical transmission unit 35, and a connection information generation unit 38a. The digital signal processing unit 32a has the following configuration in addition to the configuration of the digital signal processing unit 32 of the first and second embodiments. When the optical input information is included in the reception data signal output from the photodetector 34, the digital signal processing unit 32a reads and acquires the optical input information from the reception data signal. The digital signal processing unit 32a outputs the acquired optical input information to the connection information generation unit 38a.

The connection information generation unit 38a calculates the transmission line information of the optical transmission line 51 on the basis of the reception data signal output from the digital signal processing unit 32a of the connection information processing unit 13a. The connection information generation unit 38a generates connection information including the calculated transmission line information of the optical transmission line 51, the BER of the optical transmission line 51 output by the digital signal processing unit 32a, and the optical input information. The connection information generation unit 38a outputs the generated connection information and the connection request data output from the digital signal processing unit 32a to the control unit 12b.

The control unit 12b stores in advance, in an internal storage area, the address path correspondence table in which the identification information for specifying the optical transmission lines 51 and 52-1 to 52-n to which the optical transmission/reception units 21aX-1 to 21aX-m and 21aY-1 to 21aY-n corresponding to each piece of address information are connected is associated with each piece of address information of the optical transmission/reception units 21aX-1 to 21aX-m and 21aY-1 to 21aY-n included respectively in the optical communication devices 2aX and 2bY-1 to 2bY-n connected to the connection node device 1b. Note that the control unit 12b may acquire the address path correspondence table from the external device on demand instead of storing the address path correspondence table acquired in advance in the internal storage area in advance.

The control unit 12b transmits the connection request data and the connection information output from the connection information generation unit 38a to the operation device 4b through the connection line 3. The control unit 12b outputs the transmission mode information received from the operation device 4b to the digital signal processing unit 32a. The control unit 12b outputs a switching instruction signal to the output port switching unit 14a.

The operation device 4b includes the path detection unit 41 and a transmission line design unit 42b. The transmission line design unit 42b has the same configuration as the transmission line design unit 42 of the second embodiment regarding the configuration excluding the following configuration. As does the transmission line design unit 42 of the second embodiment, the transmission line design unit 42b selects the configuration information by the predetermined selection processing on the basis of the calculated transmission line characteristics, information indicating free resources of the optical transmission lines 52-1 to 52-n corresponding to the connection destination address information included in the connection request data, and desired bit rate information and specification information of the optical transmission/reception units 21aX-1 to 21aX-m included in the connection request data acquired by the digital signal processing unit 32a. However, the configuration information selected by the transmission line design unit 42b may include information of the center wavelength and further include information of the number of WDM wavelengths in addition to information of the output optical power, the modulation scheme, the baud rate, the bit rate, the forward error correction (FEC) type, the signal band permitted to be used, and the like selected by the transmission line design unit 42 of the second embodiment.

The wavelength multiplexing/separating unit 6aX includes the wavelength multiplexing unit 8aX and the wavelength separating unit 7aX. The wavelength multiplexing unit 8aX combines and wavelength-multiplexes optical signals having different wavelengths output from the IF units 22X-1 to 22X-m included in the optical transmission/reception units 21aX-1 to 21aX-m, and sends the wavelength-multiplexed optical signal to the optical fiber 51T. The wavelength separating unit 7aX demultiplexes the wavelength-multiplexed optical signal transmitted by the optical fiber 51R for each wavelength. The wavelength separating unit 7aX outputs each of the demultiplexed optical signals to the IF units 22X-1 to 22X-m corresponding to respective wavelengths. However, in a case where there is a plurality of optical transmission/reception units 21aX-1 to 21aX-m connected in the basic mode, the wavelength separating unit 7aX outputs optical signals to all of the optical transmission/reception units 21aX-1 to 21aX-m connected in the basic mode.

### (Processing by Optical Transmission System of Third Embodiment)

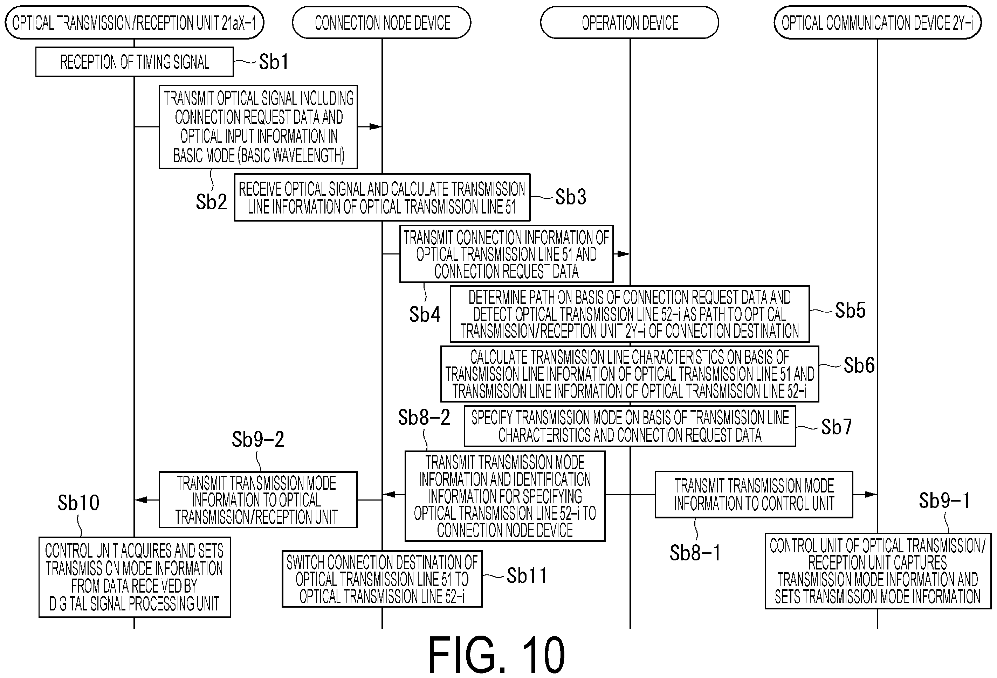

Fig. 10 is a flowchart illustrating a flow of processing by the optical transmission system 102. As illustrated in Fig. 9, the optical switch unit 15aT of the output port switching unit 14a of the connection node device 1b connects the wavelength path 61T-B of the basic wavelength of the optical fiber 51T to the optical reception unit 33 via the IF unit 31 of the connection node device 1b. The optical switch unit 15aR connects the wavelength path 61R-B of the basic wavelength of the optical fiber 51R to the optical modulator 37 via the IF unit 31 of the connection node device 1b.

Hereinafter, as an example, processing of connecting the optical transmission/reception unit 21aX-1 included in the optical communication device 2aX as a connection source and the optical transmission/reception unit 21aY-i of the optical communication device 2bY-i as a connection destination will be described. The control unit 20aX of the optical transmission/reception unit 21aX-1 generates a connection request instruction signal including the address information of the optical transmission/reception unit 21aY-i and the desired bit rate in order to establish connection to the optical transmission/reception unit 21aY-i included in the optical communication device 2bY-i. The control unit 20aX outputs the generated connection request instruction signal to the control unit 71aX-1 of the optical transmission/reception unit 21aX-1. Upon receiving the timing signal output from the transmission control unit 29X after capturing a connection request signal output from the control unit 20aX, the control unit 71aX-1 starts the processing at the timing indicated by the received timing signal (step Sb1).

The control unit 71aX-1 sets the address information of the optical transmission/reception unit 21aY-i included in the captured connection request signal as the connection destination address. The control unit 71aX-1 sets the address information of the optical transmission/reception unit 21aX-1 stored in the internal storage area as the connection source address information. The control unit 71aX-1 generates connection request data including the connection destination address information and the connection source address information, the desired bit rate included in the connection request instruction signal, and the specification information of the optical transmission/reception unit 21aX-1 stored in the internal storage area.

The control unit 71aX-1 outputs an output optical power designation signal indicating basic output optical power determined in advance in the basic mode to the wavelength variable light source 25aX-1. The control unit 71aX-1 outputs a wavelength designation signal of the basic wavelength determined in advance in the basic mode to the wavelength variable light source 25aX-1. The control unit 71aX-1 outputs a modulation scheme designation signal of a predetermined basic mode to the optical modulator 26X-1. The optical modulator 26X-1 starts optical modulation according to the basic modulation scheme designated by the modulation scheme designation signal.

The wavelength variable light source 25aX-1 generates continuous light having basic output optical power designated by the output optical power designation signal and having the basic wavelength designated by the wavelength designation signal. The wavelength variable light source 25aX-1 outputs the generated continuous light to the optical modulator 26X-1. The control unit 71aX-1 outputs the generated connection request data and the collected optical input information to the digital signal processing unit 23aX-1. The digital signal processing unit 23aX-1 captures the connection request data output from the control unit 71aX-1 and the optical input information, and generates a transmission data signal so that the captured connection request data is included in the free space of the overhead of the transmission frame and the optical input information is included in the communication channel of the transmission frame. The digital signal processing unit 23aX-1 outputs the generated transmission data signal of an electrical signal to the optical modulator 26X-1.

The optical modulator 26X-1 optically modulates the continuous light output from the wavelength variable light source 23aX-1 on the basis of the transmission data signal output from the digital signal processing unit 25aX-1. The optical modulator 26X-1 outputs the optical signal of the basic wavelength generated by the optical modulation to the wavelength multiplexing unit 8aX of the wavelength multiplexing/separating unit 6aX via the IF unit 22X-1. The wavelength multiplexing unit 8aX combines and wavelength-multiplexes the optical signal of the basic wavelength output from the IF unit 22X-1 with an optical signal of another wavelength, and sends the wavelength-multiplexed optical signal to the optical fiber 51T. The wavelength path 61T-B of the basic wavelength of the optical fiber 51T transmits the optical signal of the basic wavelength to the wavelength separating unit 7a of the connection node device 1b (step Sb2).

The wavelength separating unit 7a demultiplexes the optical signal transmitted by the optical fiber 51T for each wavelength, and outputs each of the demultiplexed optical signals to the optical switch unit 15aT. The optical switch unit 15aT receives the optical signal of the basic wavelength transmitted by the wavelength path 61T-B of the basic wavelength of the optical fiber 51T, and outputs the received optical signal to the photodetector 34 of the optical reception unit 33 via the IF unit 31. The photodetector 34 captures an optical signal output from the optical switch unit 15aT. The photodetector 34 converts the captured optical signal into an electrical signal to obtain a reception data signal. The photodetector 34 outputs the reception data signal to the digital signal processing unit 32a.

The digital signal processing unit 32a captures the reception data signal output from the photodetector 34. The digital signal processing unit 32a reads and acquires the connection request data included in the overhead area of the captured reception data signal. The digital signal processing unit 32a reads and acquires the optical input information included in the communication channel of the reception data signal. The digital signal processing unit 32a acquires the BER of the optical transmission line 51 from the captured reception data signal. The digital signal processing unit 32a outputs the acquired connection request data, optical input information, and BER of the optical transmission line 51 to the connection information generation unit 38a.

The connection information generation unit 38a captures the connection request data output from the digital signal processing unit 32a, the optical input information, and the BER of the optical transmission line 51. Upon capturing the connection request data, the optical input information, and the BER of the optical transmission line 51, the connection information generation unit 38a calculates and acquires transmission line information of the optical transmission line 51 by predetermined calculation on the basis of the reception data signal captured and output by the digital signal processing unit 32a. The connection information generation unit 38a generates connection information including the calculated transmission line information of the optical transmission line 51, the captured optical input information, and the BER of the captured optical transmission line 51. The connection information generation unit 38a outputs the captured connection request data and the generated connection information to the control unit 12b (step Sb3).

The control unit 12b captures the connection request data and the connection information output from the connection information generation unit 38a. The control unit 12b transmits the captured connection request data and connection information to the operation device 4b through the connection line 3 (step Sb4).

The path detection unit 41 of the operation device 4b receives the connection request data transmitted by the control unit 12b. The path detection unit 41 refers to the path information table stored in the internal storage area or the path information table acquired on demand, and detects the connection destination address information included in the received connection request data, here, the identification information for specifying the optical transmission line 52-i corresponding to the address information of the optical transmission/reception unit 21aY-i. The path detection unit 41 outputs the detected identification information for specifying the optical transmission line 52-i to the transmission line design unit 42b (step Sb5).

The transmission line design unit 42b receives the connection information and the connection request data transmitted by the control unit 12b. The transmission line design unit 42b captures the identification information for specifying the optical transmission line 52-i output by the path detection unit 41. The transmission line design unit 42b reads and acquires the transmission line information of the optical transmission line 52-i corresponding to the captured identification information for specifying the optical transmission line 52-i from an internal storage area, or acquires the transmission line information of the optical transmission line 52-i on demand. The transmission line design unit 42b calculates transmission line characteristics on the basis of the acquired transmission line information of the optical transmission line 52-i and the received connection information (step Sb6).

The transmission line design unit 42b selects the configuration information by the predetermined selection processing on the basis of the calculated transmission line characteristics, and the desired bit rate information and the specification information of the optical transmission/reception unit 21aX-1 included in the received connection request data. The transmission mode is specified by the configuration information selected by the transmission line design unit 42b. The transmission line design unit 42b generates transmission mode information including the selected configuration information and the connection source address information included in the connection request data (step Sb7).

The transmission line design unit 42b refers to the connection line table stored in the internal storage area, and transmits the generated transmission mode information to the control unit 20Y-i of the optical communication device 2bY-i through the connection line 3-i connected to the optical communication device 2bY-i including the optical transmission/reception unit 21aY-i corresponding to the connection destination address information included in the connection request data (step Sb8-1).

The control unit 20Y-i of the optical communication device 2bY-i receives the transmission mode information transmitted by the transmission line design unit 42b, and outputs the received transmission mode information to the control unit 71aY-i of the optical transmission/reception unit 21aY-i. The control unit 71aY-i captures the transmission mode information output from the control unit 20Y-i. The control unit 71aY-i outputs an output optical power designation signal indicating the output optical power indicated by the captured transmission mode information to the wavelength variable light source 25aY-i, and outputs a wavelength designation signal indicating the center wavelength designated by the captured transmission mode information to the wavelength variable light source 25aY-i. Thus, the wavelength variable light source 25aY-i generates and outputs continuous light having the wavelength designated by the wavelength designation signal, that is, continuous light having the output optical power and the center wavelength indicated by the transmission mode information with the output optical power designated by the output optical power designation signal. The wavelength variable light source 25aY-i outputs the generated continuous light to the optical modulator 26Y-i.

The control unit 71aY-i outputs a modulation scheme designation signal indicating the modulation scheme designated in the captured transmission mode information to the optical modulator 26Y-i. Thus, the optical modulator 26Y-i performs optical modulation using the modulation scheme designated by the modulation scheme designation signal received from the control unit 71aY-i, that is, the modulation scheme indicated in the transmission mode information. The control unit 71aY-i outputs the transmission mode information to the digital signal processing unit 23aY-i. The digital signal processing unit 23aY-i captures the transmission mode information output from the control unit 71aY-i, stores the modulation scheme, the baud rate, the bit rate, the FEC type, the signal band permitted to be used, and the like indicated in the captured transmission mode information in an internal storage area as setting parameters, and generates a transmission data signal on the basis of the setting parameters stored in the internal storage area when generating the transmission data signal and outputs the transmission data signal to the optical modulator 26Y-i (step Sb9-1). Note that the control unit 71aY-i may store the modulation scheme, the baud rate, the bit rate, the FEC type, the signal band permitted to be used, and the like indicated in the transmission mode information in an internal storage area as setting parameters. In this case, the control unit 71aY-i outputs the setting parameters to the digital signal processing unit 23aY-i when the digital signal processing unit 23aY-i generates the transmission data signal.

The transmission line design unit 42b of the operation device 4b transmits transmission mode information indicating the specified transmission mode and the identification information for specifying the optical transmission line 52-i detected by the path detection unit 41 to the connection node device 1b via the connection line 3 (step Sb8-2).

The control unit 12b of the connection node device 1b receives the transmission mode information transmitted by the transmission line design unit 42b and the identification information for specifying the optical transmission line 52-i. The control unit 12 outputs an output optical power designation signal for designating the basic output optical power of the basic mode to the single-wavelength light source 36, and outputs a modulation scheme designation signal for designating the basic modulation scheme of the basic mode to the optical modulator 37. The control unit 12b outputs the received transmission mode information to the digital signal processing unit 32a. The digital signal processing unit 32a captures the transmission mode information output from the control unit 12b. The digital signal processing unit 32a generates the transmission data signal so that the captured transmission mode information is included in the free space of the overhead of the transmission frame. The digital signal processing unit 32a outputs the generated transmission data signal of an electrical signal to the optical modulator 37. On the basis of the transmission data signal output from the digital signal processing unit 32a, the optical modulator 37 performs optical modulation of the continuous light of the basic wavelength output from the single-wavelength light source 36 according to a modulation scheme of the predetermined basic mode.

The optical modulator 37 outputs an optical signal generated by the optical modulation to the IF unit 31. The IF unit 31 captures the optical signal of the basic wavelength output from the optical modulator 37. The IF unit 31 outputs the captured optical signal to the optical switch unit 15aR. The optical switch unit 15aR outputs the optical signal of the basic wavelength output from the IF unit 31 to the wavelength multiplexing unit 8a. The wavelength multiplexing unit 8a combines and wavelength-multiplexes optical signals of a plurality of wavelengths including the optical signal of the basic wavelength output from the optical switch unit 15aR, and sends the wavelength-multiplexed optical signal to the optical fiber 51R. The wavelength path 61R-B of the basic wavelength of the optical fiber 51R transmits the optical signal sent by the optical switch unit 15aR to the wavelength separating unit 7aX of the optical communication device 2aX (step Sb9-2).

The wavelength separating unit 7aX demultiplexes the optical signal transmitted by the optical fiber 51R for each wavelength. The wavelength separating unit 7aX outputs each of the demultiplexed optical signals to the IF units 22X-1 to 22X-m corresponding to respective wavelengths. Note that, in a case of the optical signal of the basic wavelength, the wavelength separating unit 7aX outputs the optical signal of the basic wavelength to the optical reception units 27X-1 to 27X-m included in all the optical transmission/reception units 21aX-1 to 21aX-m connected to the edge function unit 11b of the connection node device 1b via the IF units 22X-1 to 22X-m. The IF unit 22X-1 of the optical transmission/reception unit 21aX-1 captures the optical signal of the basic wavelength output from the wavelength separating unit 7aX. The IF unit 22X-1 outputs the captured optical signal of the basic wavelength to the photodetector 28X-1. The photodetector 28X-1 receives the optical signal output from the IF unit 22X-1, converts the received optical signal into an electrical signal, and sets the electrical signal as a reception data signal including transmission mode information. The photodetector 28X-1 outputs the reception data signal including the transmission mode information to the digital signal processing unit 23aX-1. The digital signal processing unit 23aX-1 captures the reception data signal including the transmission mode information output from the photodetector 28X-1.

The digital signal processing unit 23aX-1 reads the transmission mode information from the overhead area of the captured reception data signal. The digital signal processing unit 23aX-1 outputs the read transmission mode information to the control unit 71aX-1. The control unit 71aX-1 captures the transmission mode information output from the digital signal processing unit 23aX-1, and discards the read transmission mode information when the address information included in the captured transmission mode information is not the address information added to the optical transmission/reception unit 21aX-1 stored in the internal storage area. On the other hand, when the address information included in the captured transmission mode information matches the address information added to the optical transmission/reception unit 21aX-1, the control unit 71aX-1 outputs an output optical power designation signal indicating the output optical power indicated by the captured transmission mode information to the wavelength variable light source 25aX-1. The digital signal processing unit 23aX-1 outputs a wavelength designation signal indicating the center wavelength designated in the read transmission mode information to the wavelength variable light source 25aX-1. Thus, the wavelength variable light source 25aX-1 generates and outputs continuous light having the wavelength designated by the wavelength designation signal, that is, continuous light having the output optical power and the center wavelength indicated by the transmission mode information with the output optical power designated by the output optical power designation signal. The wavelength variable light source 25aX-1 outputs the generated continuous light to the optical modulator 26X-1.

The control unit 71aX-1 outputs a modulation scheme designation signal indicating the modulation scheme designated in the captured transmission mode information to the optical modulator 26X-1. The optical modulator 26X-1 performs optical modulation using the modulation scheme designated by the modulation scheme designation signal received from the control unit 71aX-1. Thus, the optical modulator 26X-1 stops the optical modulation in the basic mode and starts the optical modulation in the modulation scheme designated in the transmission mode information. The control unit 71aX-1 outputs the transmission mode information to the digital signal processing unit 23aX-1. The digital signal processing unit 23aX-1 captures the transmission mode information output from the control unit 71aX-1, and stores the modulation scheme, the baud rate, the bit rate, the FEC type, the signal band permitted to be used, and the like indicated in the captured transmission mode information in the internal storage area as setting parameters. When generating the transmission data signal, the digital signal processing unit 23aX-1 generates the transmission data signal on the basis of the setting parameters stored in the internal storage area and outputs the transmission data signal to the optical modulator 26X-1 (step Sb10). Note that the control unit 71aX-1 may store the modulation scheme, the baud rate, the bit rate, the FEC type, the signal band permitted to be used, and the like indicated in the transmission mode information in the internal storage area as setting parameters. In this case, the control unit 71aX-1 outputs the setting parameters to the digital signal processing unit 23aX-1 when the digital signal processing unit 23aX-1 generates the transmission data signal.

The control unit 12b of the connection node device 1b detects the identification information for specifying the optical transmission line 51 from the address path correspondence table stored in the internal storage area or the address path correspondence table acquired on demand on the basis of the connection source address information included in the received transmission mode information, here, the address information added to the optical transmission/reception unit 21aX-1. The control unit 12 b generates a switching instruction signal for connecting the wavelength path of the center wavelength designated in the transmission mode information, which is the wavelength path of the optical transmission line 51, and the wavelength path of the center wavelength designated in the transmission mode information, which is the wavelength path of the optical transmission line 52-i, on the basis of the detected identification information for specifying the optical transmission line 51, the received identification information for specifying the optical transmission line 52-i, and the center wavelength designated in the transmission mode information. The control unit 12b outputs the generated switching instruction signal to the output port switching unit 14a.

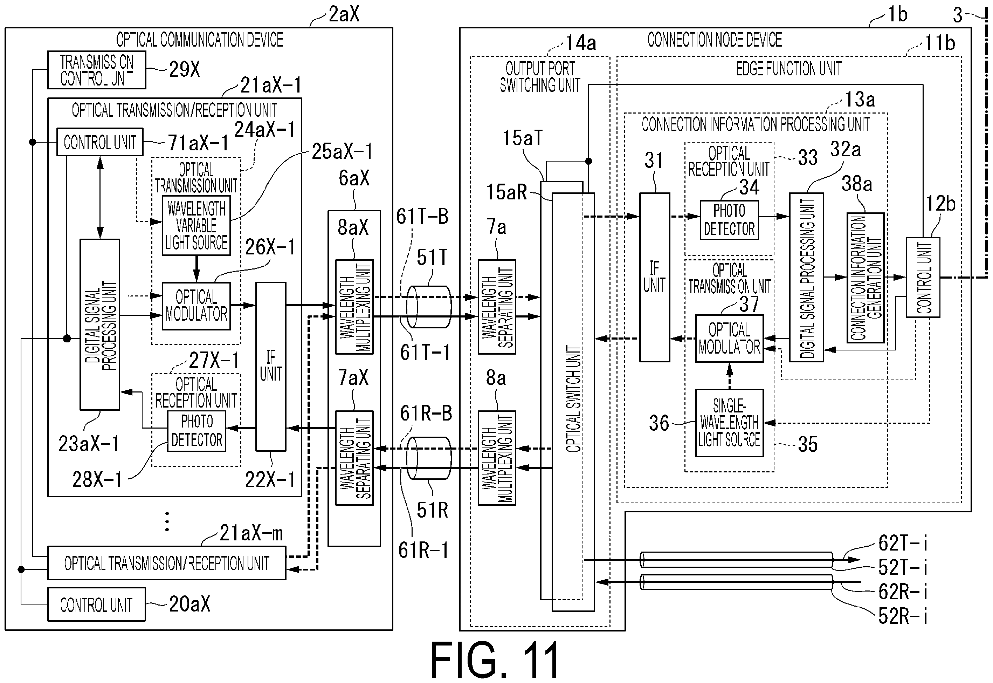

More specifically, as illustrated in Fig. 11, the control unit 12b outputs, to the optical switch unit 15aT of the output port switching unit 14a, a switching instruction signal for setting the connection destination of a wavelength path 61T-1 of the center wavelength designated in the transmission mode information, which is the wavelength path of the optical fiber 51T, to a wavelength path 62T-i of the center wavelength designated in the transmission mode information, which is the wavelength path of the optical fiber 52T-i. The control unit 12b outputs, to the optical switch unit 15aR, a switching instruction signal for setting the connection destination of a wavelength path 61R-1 of the center wavelength designated in the transmission mode information, which is the wavelength path of the optical fiber 51R, to a wavelength path 62R- i of the center wavelength designated in the transmission mode information, which is the wavelength path of the optical fiber 52R- i.

Upon receiving the switching instruction signal from the control unit 12b, the optical switch unit 15aT connects the wavelength path 61T-1 of the optical fiber 51T and the wavelength path 62T-i of the optical fiber 52T-i. Upon receiving the switching instruction signal from the control unit 12b, the optical switch unit 15aR connects the wavelength path 61R-1 of the optical fiber 51R and the wavelength path 62R-i of the optical fiber 52R-i (step Sb11). Thus, the optical transmission/reception unit 21aX-1 and the optical transmission/reception unit 21aY-i are connected via the wavelength path 61T-1 and the wavelength path 62T-i as well as the wavelength path 61R-1 and the wavelength path 62R-i.

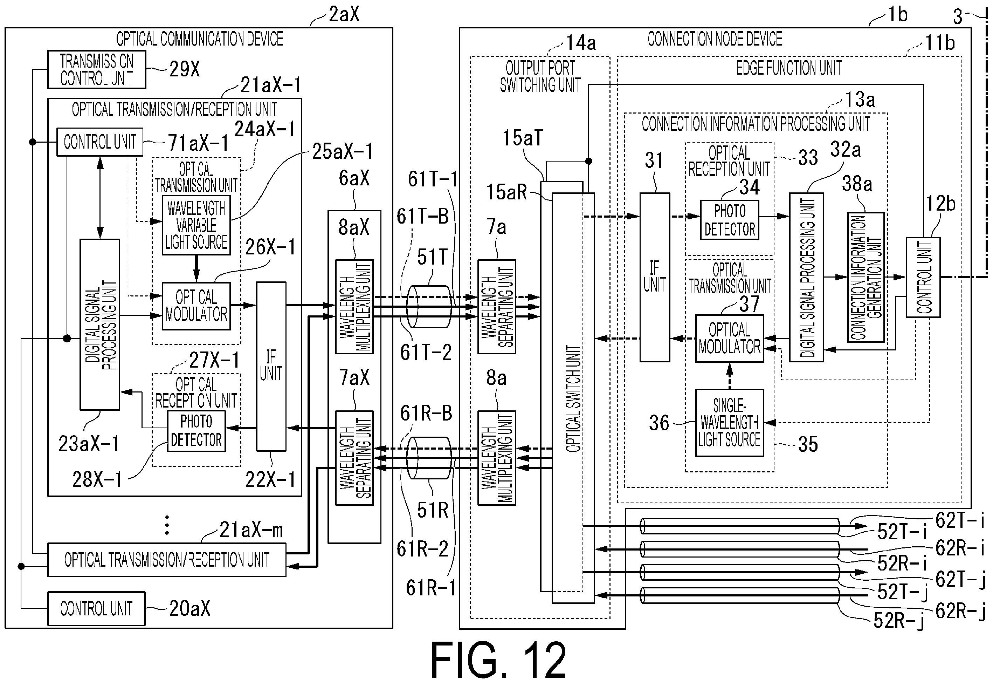

Thereafter, for example, it is assumed that the optical transmission/reception unit 21aX-m transmits connection request data having the optical transmission/reception unit 21aY-j of the optical communication device 2bY-j as connection destination address information to the connection node device 1b via the wavelength path 61T-B of the basic wavelength at the timing indicated by the timing signal received from the transmission control unit 29X. In this case, as illustrated in Fig. 12, the optical transmission/reception unit 21aX-m and the optical transmission/reception unit 21aY-j are connected via a wavelength path 61T-2 included in the optical transmission line 51 and a wavelength path 62T-j included in the optical transmission line 52, as well as a wavelength path 61R-2 included in the optical transmission line 51 and a wavelength path 62R-j included in the optical transmission line 52. Here, j is any integer from 1 to n, and is an integer different from i.

Note that the processing of steps Sb8-1 and Sb8-2 may be performed in parallel, may be performed in the order of steps Sb8-1 and Sb8-2, or may be performed in the reverse order.

In the configuration of the third embodiment described above, the optical transmission/reception units 21aX-1 to 21aX-m included in the optical communication device 2aX and corresponding to the connection source address information of the connection request data, which are optical transmission/reception units 21aX-s (where s is any integer from 1 to m), receive the transmission mode information received by the control unit 12b of the connection node device 1b from the operation device 4b and sent to the optical transmission line 51, and transmit and receive an optical signal through a wavelength path of a center wavelength designated by the received transmission mode information and included in the optical transmission line 51. The optical transmission/reception unit 21aY-i included in the optical communication device 2bY-i transmits and receives an optical signal through a wavelength path of a center wavelength designated by the transmission mode information received from the operation device 4b and included in the optical transmission line 52-i. After the control unit 12b of the connection node device 1b transmits the transmission mode information to the optical communication device 2aX through the optical transmission line 51, the output port switching unit 14a of the connection node device 1b performs switching processing to connect the optical transmission/reception unit 21aX-s included in the optical communication device 2aX and the optical transmission/reception unit 21aY-i included in the optical communication device 2bY-i via the wavelength path designated by the transmission mode information included in the optical transmission line 51 and the wavelength path designated by the transmission mode information included in the optical transmission line 52-i. Thus, when the optical transmission/reception units 21aX-s and 21Y-i included in the optical communication devices 2aX and 2bY-i are connected via the wavelength paths designated by the transmission modes included in the plurality of optical transmission lines 51 and 52-i, the optical transmission/reception units can be connected without manual intervention by the optical path of the optimum transmission mode. Therefore, it is possible to reduce the cost and time required for setting the light path.

Note that, in the third embodiment, the connection information generation unit 38a of the connection node device 1b calculates the transmission line information of the optical transmission line 51 every time the digital signal processing unit 32a outputs the connection request data, the BER, and the optical input information to the connection information generation unit 38a, but the following may be performed. The transmission line information is not different in each of the wavelength paths included in the optical transmission line 51, and the transmission line information of each of the wavelength paths included in the optical transmission line 51 is the same as the transmission line information of the optical transmission line 51. Thus, the connection information generation unit 38a stores the calculated transmission line information of the optical transmission line 51 in an internal storage area. When the digital signal processing unit 32a subsequently receives the connection request data and outputs the connection request data, the BER, and the optical input information to the connection information generation unit 38a, the connection information generation unit 38a may read the transmission line information of the optical transmission line 51 stored in the internal storage area to generate the connection information instead of calculating the transmission line information of the optical transmission line 51 again.

In the third embodiment described above, the optical input information is transmitted to the connection node device 1b by the optical transmission/reception units 21aX-1 to 21aX-m, and is transmitted to the operation device 4b by the connection node device 1b. The optical input information is information regarding the optical transmission/reception units 21aX-1 to 21aX-m, for example, information that can be generated in advance if information such as a transceiver type and the number of transceivers is known. Thus, the transmission line design unit 42b of the operation device 4b may store the optical input information generated by itself in the internal storage area in association with the address information. In this case, when calculating the transmission line characteristics, the transmission line design unit 42b reads the optical input information corresponding to the connection source address information included in the connection request data stored in the internal storage area, and calculates the transmission line characteristics. The digital signal processing units 23aX-1 to 23aX-m do not need to transmit the optical input information, and the optical input information is not included in the connection information generated by the connection information generation unit 38a of the connection node device 1b.

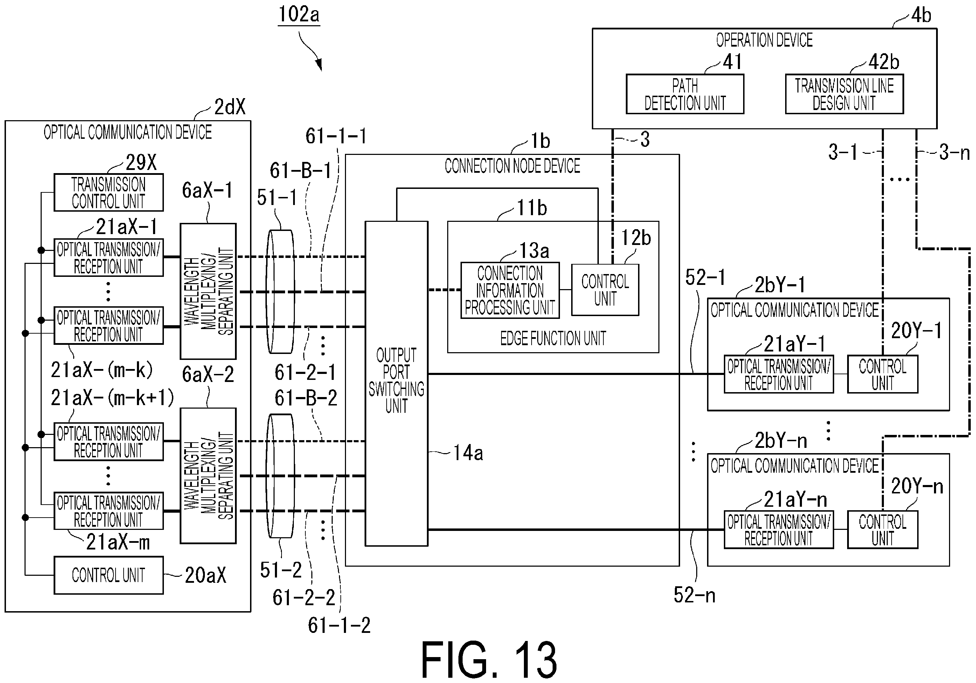

In the optical transmission system 102 of the third embodiment, the optical transmission/reception units 21aX-1 to 21aX-m and the connection node device 1b are connected by one optical transmission line 51. On the other hand, a configuration like an optical transmission system 102a illustrated in Fig. 13 may be employed in which the optical transmission/reception units 21aX-1 to 21aX-m are connected to different optical transmission lines 51-1 and 51-2. As illustrated in Fig. 13, in the optical transmission system 102a, the optical communication device 2dX and the connection node device 1b are connected to two optical transmission lines 51-1 and 51-2. Note that the wavelength multiplexing/separating units 6aX-1 and 6aX-2 included in the optical communication device 2dX have the same configuration as the wavelength multiplexing/separating unit 6aX. The output port switching unit 14a of the connection node device 1b includes two wavelength separating units 7a that are a wavelength separating unit 7a connected to the optical fiber 51T-1 included in the optical transmission line 51-1 and the optical switch unit 15aT, and a wavelength separating unit 7a connected to the optical fiber 51T-2 included in the optical transmission line 51-2 and the optical switch unit 15aT. The output port switching unit 14a includes two wavelength multiplexing units 8a that are a wavelength multiplexing unit 8a connected to the optical fiber 51R-1 included in the optical transmission line 51-1 and the optical switch unit 15aR, and a wavelength multiplexing unit 8a connected to the optical fiber 51R-2 included in the optical transmission line 51-2 and the optical switch unit 15aR.

In the optical transmission system 102a, the optical transmission/reception units 21aX-1 to 21aX-(m - k) included in the optical communication device 2dX are connected to the optical transmission line 51-1 via the wavelength multiplexing/separating unit 6aX-1, and the optical transmission/reception units 21aX-(m - k + 1) to 21aX-m are connected to the optical transmission line 51-2 via the wavelength multiplexing/separating unit 6aX-2. Here, k is an integer between 1 and (m-1). In this case, the optical transmission/reception units 21aX-1 to 21aX-m transmit the connection request data in the order according to the timing indicated by the timing signal output from the transmission control unit 29X, and are connected to any one of the optical transmission/reception units 21aY-1 to 21aY-n via wavelength paths 61-1-1, 61-2-1, ... of the optical transmission line 51-1 connected thereto or wavelength paths 61-1-2, 61-2-2, ... of the optical transmission line 51-2 connected thereto.

In the third embodiment described above, when the number of WDM wavelengths is included in the transmission mode information, the control units 71aX-1 to 71aX-m may output the transmission mode information to the control unit 20aX. When the transmission mode information output from any one of the control units 71aX-1 to 71aX-m is captured, the control unit 20aX refers to the number of WDM wavelengths included in the captured transmission mode information. When the number of optical transmission/reception units 21aX-1 to 21aX-m already connected to the optical transmission/reception units 21aY to 21aY-n included in the optical communication devices 2bY-1 to 2bY-n is equal to the number of WDM wavelengths referred, the control unit 20aX-1 outputs a communication stop instruction signal for preventing the optical transmission/reception units 21aX-1 to 21aX-m including the control units 71aX-1 to 71aX-m as the output source of the transmission mode information from performing communication by an optical signal to the control units 71aX-1 to 71aX-m as the output source of the transmission mode information. Thus, it is possible to prevent communication using optical signals exceeding the number of wavelengths that can be multiplexed by the wavelength multiplexing unit 8aX included in the wavelength multiplexing/separating unit 6aX. The transmittable distance becomes shorter as the number of WDM wavelengths increases, and thus it is assumed a case where the optical signal transmitted by the optical communication device 2dX does not reach the optical communication devices 2bY-1 to 2bY-n that are connection destinations of the optical transmission/reception units 21aX-1 to 21aX-m. Even in a case where the number of WDM wavelengths increases, by limiting the number of optical transmission/reception units 21aX-1 to 21aX-m that transmit optical signals by the communication stop instruction signal, it is possible to prevent the transmitted optical signals from not reaching the optical communication devices 2bY-1 to 2bY-n.

In the first, second, and third embodiments described above, it is necessary for the connection node devices 1, 1a, and 1b to send the transmission mode information to the optical transmission line 51 before the switching processing by the output port switching units 14 and 14a is performed. In this case, in the processing of steps S5-2, Sa8-2, and Sb9-2, there is a time difference between the time when the control units 12, 12a, and 12b output the transmission mode information to the digital signal processing units 32 and 32a and the time when the optical switch units 15R and 15aR output the optical signal including the transmission mode information. Thus, the time difference needs to be measured in advance, and the control units 12, 12a, and 12b need to perform processing of outputting the switching instruction signal in steps S7, Sa10, and Sb11 after the elapse of the time measured in advance after outputting the transmission mode information to the digital signal processing units 32 and 32a.

In order to further ensure the start timing of the processing of steps S7, Sa10, and Sb11, the following may be performed. For example, upon capturing the transmission mode information, the control units 71X and 71aX-1 to 71aX-m of the optical transmission/reception units 21X and 21aX-1 to 21aX-m output information indicating that the reception of the transmission mode information is completed to the digital signal processing units 23X and 23aX-1 to 23aX-m according to the basic mode. The digital signal processing units 23X and 23aX-1 to 23aX-m transmit information indicating that the reception of the transmission mode information has been completed to the connection node devices 1, 1a, and 1b. The control units 12, 12a, and 12b of the connection node devices 1, 1a, and 1b may output the switching instruction signal to the output port switching units 14 and 14a at the timing of receiving the information indicating that the reception of the transmission mode information has been completed, which is transmitted by the optical transmission/reception units 21X and 21aX-1 to 21aX-m.

In order to further ensure the start timing of the processing of steps S7, Sa10, and Sb11, the following may be performed. In the processing of steps S6-2, Sa9, and Sb10, when the optical modulators 26X and 26X-1 to 26X-m stop the optical modulation in the basic mode, the digital signal processing units 32 and 32a of the connection node devices 1, 1a, and 1b detect that the optical modulation in the basic mode of the optical transmission/reception units 21X and 21aX-1 to 21aX-m is stopped on the basis of the presence or absence of the optical signal in the basic mode transmitted by the optical transmission/reception units 21X and 21aX-1 to 21aX-m. The digital signal processing units 32 and 32a may notify the control units 12, 12a, and 12b that the optical modulation by the basic mode of the optical transmission/reception units 21X and 21aX-1 to 21aX-m, that is, the optical output by the basic mode has stopped, and the control units 12, 12a, and 12b may output the switching instruction signal to the output port switching units 14 and 14a at the timing when the notification is received.

### (Other Configuration Examples of Second and Third Embodiments)

Hereinafter, for convenience of description, a case where the light source used to generate the optical signal on the side transmitting the connection request data is a single-wavelength light source will be described as another configuration example of the second embodiment, and a case where the light source used to generate the optical signal on the side transmitting the connection request data is a wavelength variable light source will be described as another configuration example of the third embodiment. Note that, in other configuration examples of the second and third embodiments described below, the same components as those of the first to third embodiments are denoted by the same reference signs.

### (Configuration to Avoid Collision of Connection Request Data (part 1))

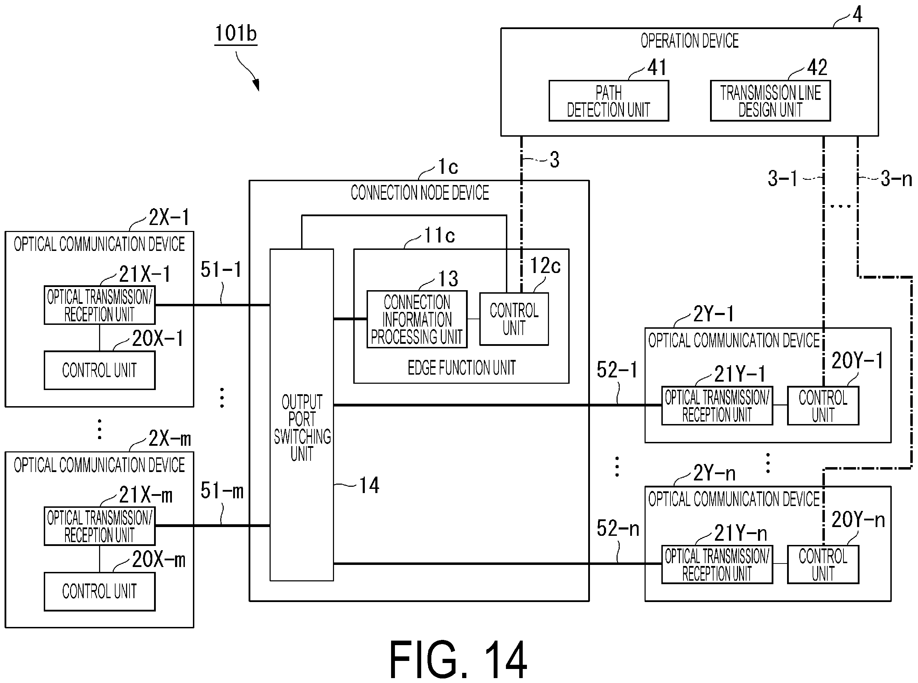

Fig. 14 is a block diagram illustrating a configuration of an optical transmission system 101b that is another configuration example of the second embodiment. The optical transmission system 101b includes the optical communication devices 2X-1 to 2X-m, the connection node device 1c, the optical communication devices 2Y-1 to 2Y-n, the operation device 4, the optical transmission lines 51-1 to 51-m that connect each of the optical communication devices 2X-1 to 2X-m and the connection node device 1c, the optical transmission lines 52-1 to 52-n that connect each of the optical communication devices 2Y-1 to 2Y-n and the connection node device 1c, the connection line 3 that connects the operation device 4 and the connection node device 1c, and the connection lines 3-1 to 3-n that connect the operation device 4 and each of the optical communication devices 2Y-1 to 2Y-n.

The connection node device 1c includes an edge function unit 11c and the output port switching unit 14. The output port switching unit 14 is connected to the optical transmission lines 51-1 to 51-m, the connection information processing unit 13 of the edge function unit 11c, and the optical communication devices 2Y-1 to 2Y-n. In the initial state, the output port switching unit 14 sets the connection destinations of the optical transmission lines 51-1 to 51-m as the connection information processing unit 13 of the edge function unit 11c. Upon receiving a switching instruction signal from a control unit 12c, the output port switching unit 14 performs switching processing of connecting any one of the optical transmission lines 51-1 to 51-m to any one of the optical transmission lines 52-1 to 52-n according to the received switching instruction signal.

The edge function unit 11c includes the connection information processing unit 13 and the control unit 12c. The control unit 12c has the following configuration in addition to the configuration of the control unit 12a of the second embodiment. In the optical transmission system 101b, for example, one optical communication device 2aX does not include the plurality of optical transmission/reception units 21aX-1 to 21aX-m as in the optical transmission system 102 illustrated in Fig. 8, but each of the plurality of optical communication devices 2X-1 to 2X-m includes one optical transmission/reception unit 21X-1 to 21X-m. Thus, unlike the optical transmission system 102, the transmission control unit 29X cannot be used to transmit the connection request data at different timings.

The control unit 12c outputs timing information including the timing of transmitting the connection request data and address information of the optical transmission/reception units 21X-1 to 21X-m that permit transmission of the connection request data to the digital signal processing unit 32 of the connection information processing unit 13 so that the timing of transmitting connection data can be set to different timings. Thereafter, the timing information is transmitted to the optical transmission/reception units 21X-1 to 21X-m by processing similar to that in a case of transmitting the transmission mode information by the transmission data signal.

Each of the optical communication devices 2X-1 to 2X-m has the same configuration as the optical communication device 2X of the first embodiment, but a configuration of processing for receiving an optical signal including the timing information is added. When the timing information is included in the reception data signals output from the photodetectors 28X-1 to 28X-m, the digital signal processing units 23X-1 to 23X-m included respectively in the optical communication devices 2X-1 to 2X-m read the timing information. The digital signal processing units 23X-1 to 23X-m output the read timing information to the control units 71X-1 to 71X-m connected thereto, respectively. In a case where the address information included in the timing information output from the digital signal processing units 23X-1 to 23X-m is the address information added to the optical transmission/reception units 21X-1 to 21X-m including itself and stored in an internal storage area, the control units 71X-1 to 71X-m output the connection request data according to the timing indicated by the timing information. Thus, the timings at which the optical transmission/reception units 21X-1 to 21X-m transmit the connection request data can be set to different timings.

### (Configuration to Avoid Collision of Connection Request Data (part 2))

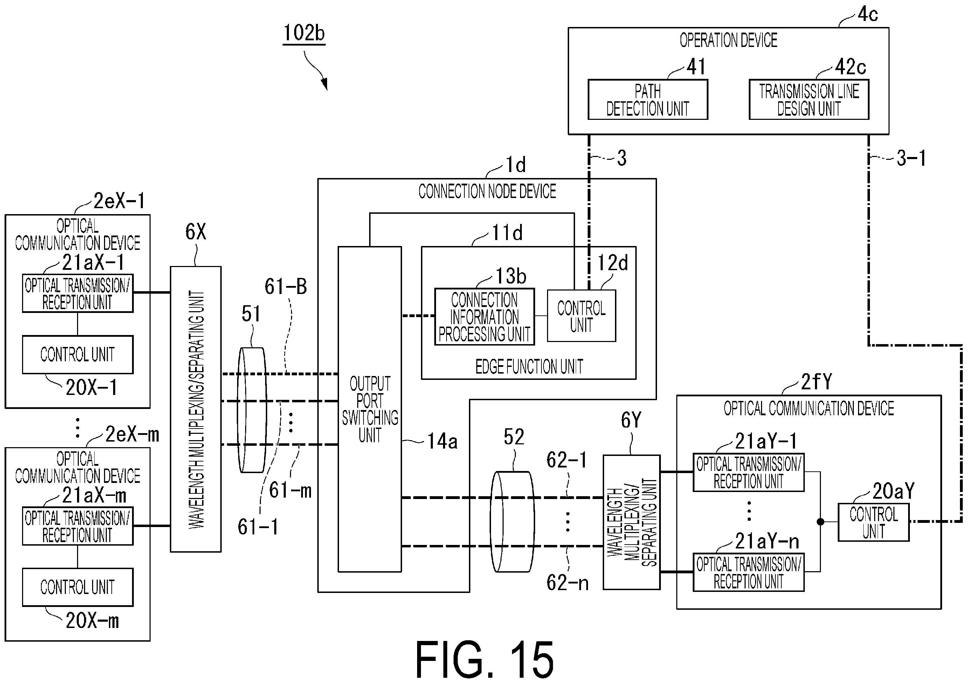

Fig. 15 is a block diagram illustrating a configuration of an optical transmission system 102b that is another configuration example of the third embodiment. The optical transmission system 102b includes optical communication devices 2eX-1 to 2eX-m, a connection node device 1d, an optical communication device 2fY, an operation device 4c, the wavelength multiplexing/separating device 6X, the wavelength multiplexing/separating device 6Y, the optical transmission line 51, the optical transmission line 52, the connection line 3, and the connection line 3-1 that connects the operation device 4c and the optical communication device 2fY. The optical transmission line 51 connects the wavelength multiplexing/separating device 6X and the connection node device 1d. The optical transmission line 52 connects the wavelength multiplexing/separating device 6Y and the connection node device 1d. The connection line 3 connects the operation device 4 and the connection node device 1d. The connection line 3-1 connects the operation device 4c and the optical communication device 2fY.

Each of the optical communication devices 2eX-1 to 2eX-m includes each of the optical transmission/reception units 21aX-1 to 21aX-m and each of the control units 20X-1 to 20X-m. The optical communication device 2fY includes the optical transmission/reception units 21aY-1 to 21aY-n and the control unit 20aY. The operation device 4c includes the path detection unit 41 and a transmission line design unit 42c.

The transmission line design unit 42c has the same configuration as the transmission line design unit 42b of the third embodiment regarding the configuration excluding the following configuration. The transmission line design unit 42b refers to the connection line table stored in the internal storage area, and transmits the transmission mode information to the control units 20Y-1 to 20Y-n of the optical communication devices 2bY-1 to 2bY-n through the connection lines 3-1 to 3-n corresponding to the connection destination address information included in the connection request data. On the other hand, the transmission line design unit 42c adds the connection destination address information included in the connection request data to the generated transmission mode information, and transmits the information to the control unit 20aY of the optical communication device 2fY through the connection line 3-1. Thus, the transmission line design unit 42c does not need to store the connection line table in advance in an internal storage area. As described with reference to Fig. 7, upon receiving the transmission mode information, to which the connection destination address information is added, transmitted by the transmission line design unit 42c through the connection line 3-1, the control unit 20aY outputs the transmission mode information to any one of the optical transmission/reception units 21aY-1 to 21aY-n corresponding to the connection destination address information added to the received transmission mode information.

The wavelength multiplexing/separating devices 6X and 6Y are devices in which the wavelength multiplexing/separating unit 6aX included in the optical transmission system 102 illustrated in Fig. 8 is a single device, the wavelength multiplexing/separating device 6X includes a wavelength separating unit 7aX and the wavelength multiplexing unit 8aX, and the wavelength multiplexing/separating device 6Y includes a wavelength separating unit 7aY and the wavelength multiplexing unit 8aY. Note that, as does the optical communication device 2aX of the optical transmission system 102 illustrated in Fig. 8, the optical communication device 2fY may include the wavelength multiplexing/separating device 6Y as an internal functional unit, that is, a wavelength multiplexing/separating unit 6aY.

The connection node device 1d includes an edge function unit 11d and the output port switching unit 14a. The output port switching unit 14a connects the wavelength path 61-B of the basic wavelength included in the optical transmission line 51 to a connection information processing unit 13b of the edge function unit 11d, and performs switching processing of connecting any one of wavelength paths 61-1 to 61-m included in the optical transmission line 51 to any one of wavelength paths 62-1 to 62-n included in the optical transmission line 52 in response to a switching instruction signal from the control unit 12d.

The edge function unit 11d includes the connection information processing unit 13b and the control unit 12d. The connection information processing unit 13b and the control unit 12d have the following configurations in addition to the configurations of the connection information processing unit 13a and the control unit 12b of the third embodiment. In the optical transmission system 102b, as in a case of the optical transmission system 101b illustrated in Fig. 14, each of the plurality of optical communication devices 2eX-1 to 2eX-m includes one optical transmission/reception unit 21aX-1 to 21aX-m. Thus, as in the optical transmission system 102 illustrated in Fig. 8, the timing of transmitting the connection request data cannot be set to different timings using the transmission control unit 29X.

The connection information processing unit 13b and the control unit 12d have a configuration in which the wavelengths of the basic wavelengths allocated to the optical transmission/reception units 21aX-1 to 21aX-m are set to different wavelengths in order to prevent the connection request data from colliding in the wavelength path 61-B of the basic wavelength. The connection information processing unit 13b includes, for example, a wavelength variable light source having the same configuration as the wavelength variable light source 25aX-1 illustrated in Fig. 9 instead of the single-wavelength light source 36. Hereinafter, when the wavelength variable light source included in the connection information processing unit 13b is illustrated, the wavelength variable light source is referred to as a wavelength variable light source 36a with reference sign "36a" added. The digital signal processing unit 32a is connected to the wavelength variable light source 36a and outputs a wavelength designation signal to the wavelength variable light source 36a.

The control unit 12d allocates a basic wavelength of a different wavelength to each of the optical transmission/reception units 21aX-1 to 21aX-m. Thus, the control unit 12d selects the basic wavelength to be allocated to each of the optical transmission/reception units 21aX-1 to 21aX-m in advance, and stores each of the selected basic wavelengths and the address information of each of the optical transmission/reception units 21aX-1 to 21aX-m corresponding thereto in an internal storage area in advance in association with each other. The control unit 12d outputs basic wavelength designation information including the address information of each of the optical transmission/reception units 21aX-1 to 21aX-m stored in the internal storage area and the basic wavelengths corresponding thereto to the digital signal processing unit 32a of the connection information processing unit 13b. Thereafter, the basic wavelength designation information is transmitted to the optical transmission/reception units 21aX-1 to 21aX-m through the basic mode before the basic wavelength is changed, that is, the wavelength path 61-B of the optical transmission line 51 by processing similar to that in a case of transmitting the transmission mode information by the transmission data signal.

Each of the optical transmission/reception units 21aX-1 to 21aX-m has the same configuration as the optical transmission/reception units 21aX-1 to 21aX-m of the third embodiment, but a configuration of processing for receiving an optical signal including the basic wavelength designation information is added. **In** a case where the basic wavelength designation information is included in the reception data signals output from the photodetectors 28X-1 to 28X-m, the digital signal processing units 23aX-1 to 23aX-m included respectively in the optical transmission/reception units 21aX-1 to 21aX-m read the basic wavelength designation information. The digital signal processing units 23aX-1 to 23aX-m output the read basic wavelength designation information to the control units 71aX-1 to 71aX-m connected thereto, respectively. The control units 71aX-1 to 71aX-m capture the basic wavelength designation information output from the digital signal processing units 23aX-1 to 23aX-m, and read the basic wavelength corresponding to its own address information included in the captured basic wavelength designation information, that is, the address information stored in the internal storage area. Each of the control units 71aX-1 to 71aX-m outputs a wavelength designation signal designating the read basic wavelength to the wavelength variable light sources 25aX-1 to 25aX-m corresponding thereto.

Thus, each of the optical transmission/reception units 21aX-1 to 21aX-m generates an optical signal with a different basic wavelength. For example, when transmitting the transmission mode information, the control unit 12d reads the basic wavelength corresponding to the connection source address information included in the transmission mode information from the internal storage area. The control unit 12d generates a wavelength designation signal on the basis of information indicating the read basic wavelength. The control unit 12d outputs the generated wavelength designation signal to the wavelength variable light source 36a. The wavelength variable light source 36a generates and outputs continuous light having the basic wavelength designated by the wavelength designation signal. Thus, the basic wavelength of the continuous light generated by the wavelength variable light source 36a is changed. The control unit 12d outputs the transmission mode information to the digital signal processing unit 32a. The digital signal processing unit 32a captures the transmission mode information output from the control unit 12d and generates a transmission data signal including the captured transmission mode information. The digital signal processing unit 32a outputs the generated transmission data signal to the optical modulator 37. The optical modulator 37 modulates the continuous light of the changed basic wavelength output from the wavelength variable light source 36a on the basis of the transmission data signal to generate an optical signal.

Thus, the optical transmission/reception units 21aX-1 to 21aX-m and the connection node device 1d are connected with the basic wavelengths of different wavelengths, and it is possible to avoid collision of connection request data. However, in this case, when the optical transmission/reception units 21aX-1 to 21aX-m transmit the connection request data with respective basic wavelengths allocated thereto, the connection request data collides in the photodetector 34 of the connection node device 1b. In order to avoid this collision, the connection node device 1d needs to individually terminate wavelength paths of a plurality of different basic wavelengths. For example, it is assumed that the maximum number of basic wavelengths allocated by the connection node device 1d is determined in advance. The optical reception unit 33 of the connection information processing unit 13b of the connection node device 1d includes a plurality of photodetectors 34 whose number matches the maximum number of basic wavelengths, and the optical switch unit 15aT of the output port switching unit 14a connects the output of the wavelength separating unit 7a and the plurality of photodetectors 34 so that each of the plurality of photodetectors 34 is connected to a different basic wavelength. In this manner, the control unit 12d of the connection node device 1d can distinctively capture the connection request data transmitted by each of the optical transmission/reception units 21aX-1 to 21aX-m. Note that, instead of the optical reception unit 33 including the plurality of photodetectors 34, the edge function unit 11d may include a plurality of connection information processing units 13b whose number matches the maximum number of basic wavelengths.

Note that the configurations (part 1) and (part 2) for avoiding collision of the connection request data described above are configurations in which the timing information or initial setting information for avoiding collision of connection request data, which is basic wavelength setting information, is transmitted from the side of the control units 12c and 12d of the connection node devices 1c and 1d to the optical transmission/reception units 21X-1 to 21X-m and 21aX-1 to 21aX-m. Means for transmitting the initial setting information for avoiding the collision of the connection request data from the connection node devices 1c and 1d may be applied to, for example, the optical transmission system 102 illustrated in Fig. 8, and may be used in combination with means for setting the timing of transmitting the connection request data using the transmission control unit 29X to a different timing. By using these in combination, it is possible to more reliably avoid collision of connection request data. In the optical transmission system 102 illustrated in Fig. 8, the control unit 12b of the connection node device 1b may transmit the initial setting information including information indicating the transmission timing of the connection request data to the transmission control unit 29X of the optical communication device 2aX in advance, and the transmission control unit 29X may transmit, as a response thereto, information indicating that reception of the initial setting information has been completed to the control unit 12b to share the timing of transmitting and receiving the connection request data with each other, and then the transmission control unit 29X may output a timing signal to each of the optical transmission/reception units 21aX-1 to 21aX-m on the basis of the information indicating the transmission timing of the connection request data included in the initial setting information.

A configuration for transmitting the timing information included in the control unit 12c of the optical transmission system 101b illustrated in Fig. 14 may be added to the control unit 12d of the optical transmission system 102b illustrated in Fig. 15, and the control unit 12d may use a means for changing the basic wavelength and a means for transmitting the timing signal in combination or use one of the means.

As a method of avoiding collision of the connection request data, for example, the following method may be applied. In a case where there is no response from the connection node devices 1c and 1d for a predetermined fixed time after each of the optical transmission/reception units 21X-1 to 21X-m and 21aX-1 to 21aX-m transmits the connection request data, for example, in a case where the transmission mode information in which the destination is itself cannot be obtained, the optical transmission/reception units 21X-1 to 21X-m and 21aX-1 to 21aX-m may stop the optical output in the basic mode for a predetermined fixed time or a randomly determined time. This makes it possible to reduce the probability of occurrence of collision of the connection request data.

### (Configuration in which Connection Node Device Includes Wavelength Conversion Unit)

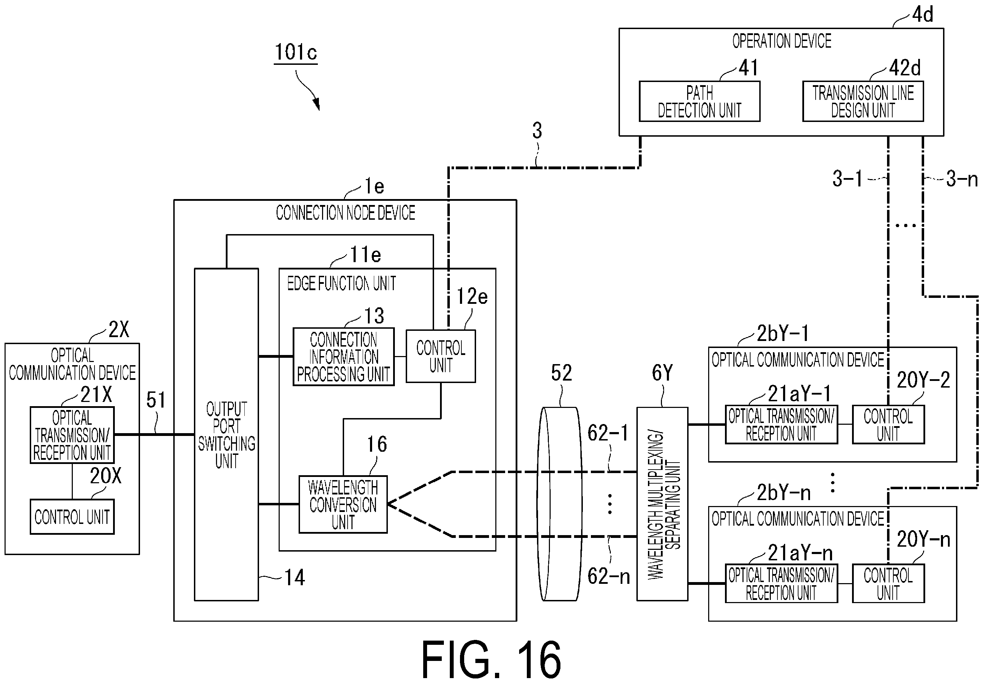

Fig. 16 is a block diagram illustrating a configuration of an optical transmission system 101c according to another configuration example of the second embodiment. The optical transmission system 101c includes a connection node device 1e, the optical communication device 2X, the plurality of optical communication devices 2bY-1 to 2bY-n, an operation device 4d, the wavelength multiplexing/separating device 6Y, the optical transmission line 51, the optical transmission line 52, the connection line 3, and the connection lines 3-1 to 3-n. The optical transmission line 51 connects the optical communication device 2X and the connection node device 1e. The optical transmission line 52 connects the wavelength multiplexing/separating device 6Y and the connection node device 1e. The connection line 3 connects the operation device 4d and the connection node device 1e. The connection lines 3-1 to 3-n connect the operation device 4d and each of the optical communication devices 2bY-1 to 2bY-n.

The connection node device 1e includes an edge function unit 11e and the output port switching unit 14. The edge function unit 11e includes a control unit 12e, the connection information processing unit 13, and a wavelength conversion unit 16. The control unit 12e has the same configuration as the control unit 12a of the second embodiment regarding the configuration excluding the following configuration. That is, the control unit 12e transmits information in which the connection node device 1e includes the wavelength conversion unit 16 and information indicating a wavelength band that can be converted by the wavelength conversion unit 16 (hereinafter, these two pieces of information are collectively referred to as "wavelength conversion unit information"), the connection information output by the connection information processing unit 13, and the connection request data to the operation device 4d through the connection line 3. The control unit 12e outputs information of the center wavelength included in the transmission mode information transmitted by a transmission line design unit 42d of the operation device 4d to the wavelength conversion unit 16.

The operation device 4d includes the path detection unit 41 and the transmission line design unit 42d. The transmission line design unit 42d has the same configuration as the transmission line design unit 42 of the second embodiment regarding the configuration excluding the following configuration. The transmission line design unit 42 stores in advance the transmission line information of each of the optical transmission lines 52-1 to 52-n in the internal storage area, or acquires the transmission line information of each of the optical transmission lines 52-1 to 52-n on demand. On the other hand, the transmission line design unit 42d stores the transmission line information of the optical transmission line 52 in an internal storage area in advance, or acquires the transmission line information of the optical transmission line 52 on demand. The transmission line design unit 42d selects the configuration information by the predetermined selection processing on the basis of calculated transmission line characteristics, information indicating a free resource of the optical transmission line 52 corresponding to the connection destination address information detected by the path detection unit 41, the desired bit rate information and the specification information of the optical transmission/reception unit 21X included in the connection request data, and the wavelength conversion unit information. The transmission line design unit 42d generates transmission mode information including the selected configuration information.

In the optical transmission system 101c, the following processing is performed by having the above configuration. This processing will be described with reference to the flowchart illustrated in Fig. 6. First, the processing of steps Sa1 and Sa2 illustrated in Fig. 6 is performed. However, in step Sa1, it is assumed that the control unit 20X of the optical communication device 2X generates the connection request instruction signal including the address information of the optical transmission/reception unit 21aY-i included in the optical communication device 2bY-i as the address information of the connection destination, and the optical communication device 2aY-i is connected to the connection line 3-i. In the processing of step Sa3, the control unit 12e transmits the wavelength conversion unit information in addition to the connection information and the connection request data to the operation device 4d through the connection line 3.

In the processing of step Sa4, the path detection unit 41 of the operation device 4d detects the identification information for specifying the optical transmission line 52 corresponding to the address information of the optical transmission/reception unit 21aY-i on the basis of the connection request data. In the processing of step Sa5, the transmission line design unit 42d captures the identification information for specifying the optical transmission line 52 output by the path detection unit 41. The transmission line design unit 42d reads and acquires the transmission line information of the optical transmission line 52 corresponding to the captured identification information for specifying the optical transmission line 52 from the internal storage area, or acquires the transmission line information of the optical transmission line 52 on demand. The transmission line design unit 42d calculates transmission line characteristics on the basis of the acquired transmission line information of the optical transmission line 52 and the received connection information.

In the processing of step Sa6, the transmission line design unit 42d selects the configuration information by the predetermined selection processing on the basis of the calculated transmission line characteristics, received wavelength conversion unit information, and the desired bit rate information and the specification information of the optical transmission/reception unit 21X included in the received connection request data. The transmission line design unit 42d generates transmission mode information including the selected configuration information and the connection source address information included in the connection request data.

In the processing of step Sa7-1, the transmission line design unit 42d refers to the connection line table stored in the internal storage area, and transmits the generated transmission mode information to the control unit 20Y-i of the optical communication device 2bY-i through the connection line 3-i corresponding to the connection destination address information included in the connection request data. Thereafter, instead of the processing of step Sa8-1, the same processing as in step Sb9-1 illustrated in Fig. 10 is performed by the control unit 20Y-i and the optical transmission/reception unit 21aY-i.

Thus, in the optical transmission/reception unit 21aY-i, the wavelength variable light source 25aY-i generates continuous light having the output optical power indicated in the transmission mode information and having the center wavelength indicated in the transmission mode information, and outputs the continuous light to the optical modulator 26Y-i. The optical modulator 26Y-i performs optical modulation using the modulation scheme indicated in the transmission mode information. The digital signal processing unit 23aY-i generates a transmission data signal on the basis of setting parameters such as the modulation scheme, the baud rate, the bit rate, the FEC type, and the signal band permitted to be used indicated in the transmission mode information, and outputs the transmission data signal to the optical modulator 26Y-i.

In the processing of step Sa7-2, the transmission line design unit 42d transmits the generated transmission mode information and the identification information for specifying the optical transmission line 52 detected by the path detection unit 41 to the connection node device 1e via the connection line 3. Thereafter, the processing in steps Sa8-2 and Sa9 is performed by the control unit 12e of the connection node device 1e, the connection information processing unit 13, the output port switching unit 14, and the optical transmission/reception unit 21X of the optical communication device 2X.

In the processing of step Sa10, the control unit 12e of the connection node device 1e outputs information indicating the center wavelength included in the transmission mode information received through the connection line 3 to the wavelength conversion unit 16. On the basis of the connection source address information included in the transmission mode information, here, the address information of the optical transmission/reception unit 21X, the control unit 12e detects the identification information for specifying the optical transmission line 51 from the address path correspondence table stored in an internal storage area or the address path correspondence table acquired on demand. The control unit 12e generates a switching instruction signal on the basis of the detected identification information for specifying the optical transmission line 51 and the identification information for specifying the optical transmission line 52 received from the transmission line design unit 42d of the operation device 4d. The control unit 12e outputs the generated switching instruction signal to the output port switching unit 14. Thus, the output port switching unit 14 connects the optical transmission line 51 and the wavelength conversion unit 16.

When the optical transmission/reception unit 21X of the optical communication device 2X transmits an optical signal to the connection node device 1e through the optical transmission line 51, the output port switching unit 14 of the connection node device 1e outputs the optical signal received through the optical transmission line 51 to the wavelength conversion unit 16. The wavelength conversion unit 16 captures the optical signal output from the output port switching unit 14. The wavelength conversion unit 16 converts the wavelength of the captured optical signal into a center wavelength given from the control unit 12e and sends it to the optical transmission line 52. Here, the center wavelength given from the control unit 12e is the center wavelength indicated in the transmission mode information. Thus, the wavelength of the optical signal sent from the wavelength conversion unit 16 to the optical transmission line 52 is the same as the wavelength of the optical signal transmitted from the optical transmission/reception unit 21aY-1 included in the optical communication device 2bY-i. Therefore, when the wavelength path of the center wavelength indicated in the transmission mode information is a wavelength path 62-i, the wavelength conversion unit 16 and the optical transmission/reception unit 21aY-i are connected by the wavelength path 62-i.

The optical signal sent from the wavelength conversion unit 16 to the optical transmission line 52 is transmitted to the wavelength separating unit 7aY included in the wavelength multiplexing/separating device 6Y by the wavelength path 62-i. The wavelength separating unit 7aY demultiplexes a wavelength-multiplexed optical signal transmitted by the optical transmission line 52 for each wavelength. The wavelength separating unit 7aY outputs each of demultiplexed optical signals to the optical transmission/reception units 21aY-1 to 21aY-n corresponding to each wavelength. Thus, the optical signal transmitted by the optical transmission/reception unit 21X of the optical communication device 2X reaches the optical transmission/reception unit 21aY-i of the optical communication device 2bY-i.

In the optical transmission system 101c described above, since the edge function unit 11e of the connection node device 1e includes the wavelength conversion unit 16, even if the optical transmission/reception unit 21X of the optical communication device 2X includes the single-wavelength light source 25X, which is a light source that cannot change the wavelength, the wavelength can be converted into any wavelength by the wavelength conversion unit 16. Thus, through the connection node device 1e, it is possible to switch the wavelength using the optical transmission/reception unit 21X at a lower cost than the optical transmission/reception unit 21aX-1 including the wavelength variable light source 25aX-1 and to connect to any optical transmission/reception units 21aY-1 to 21aY-n through any one of the wavelength paths 62-1 to 62-n included in the optical transmission line 52.

### (Other Configuration Examples)

Note that the following configuration may be employed in addition to the configurations illustrated in the optical transmission systems 101, 101a, 101b, 101c, 102, 102a, and 102b described above. For example, in the optical transmission system 102 illustrated in Fig. 8, the optical communication device 2aX may not include the wavelength multiplexing/separating unit 6aX, and one ends of optical transmission lines (reference signs of the m optical transmission lines are 51-1 to 51-m) may be connected one by one to the respective optical transmission/reception units 21aX-1 to 21aX-m, and the other ends of the optical transmission lines 51-1 to 51-m may be connected to the output port switching unit 14a.

In the optical transmission system 102a illustrated in Fig. 13, instead of the optical communication device 2bY-1 connected to the optical transmission line 52-1, the optical communication device 2fY illustrated in Fig. 15 and the wavelength multiplexing/separating device 6Y connected to the optical communication device 2fY may be provided, and the wavelength multiplexing/separating device 6Y may be connected to the optical transmission line 52-1. In the optical transmission system 102a illustrated in Fig. 13, instead of the optical communication device 2bY-1 connected to the optical transmission line 52-1, the optical communication devices 2bY-1 to 2bY-n illustrated in Fig. 16 and the wavelength multiplexing/separating device 6Y connected to the optical communication devices 2bY-1 to 2bY-n may be provided, and the wavelength multiplexing/separating device 6Y may be connected to the optical transmission line 52-1. In the optical transmission system 102a illustrated in Fig. 13, instead of the optical communication devices 2bY-1 to 2bY-n, the optical communication device 2fY illustrated in Fig. 15 may be provided, and the optical transmission/reception units 21aY-1 to 21aY-n may be connected one by one to the respective optical transmission lines 52-1 to 52-n. In the optical transmission system 102a illustrated in Fig. 13, instead of the optical communication device 2dX, two optical communication devices 2aX illustrated in Fig. 8 may be provided, the wavelength multiplexing/separating unit 6aX of one optical communication device 2aX may be connected to the optical transmission line 51-1, and the wavelength multiplexing/separating unit 6aX of the other optical communication device 2aX may be connected to the optical transmission line 51-2.

In the optical transmission system 101b illustrated in Fig. 14, one optical communication device including the optical transmission/reception units 21X-1 to 21X-m instead of the optical communication devices 2X-1 to 2X-m, one control unit 20aX connected to each of the optical transmission/reception units 21X-1 to 21X-m, and the transmission control unit 29X connected to each of the optical transmission/reception units 21X-1 to 21X-m may be applied, and the optical transmission/reception units 21X-1 to 21X-m may be connected one by one to the respective optical transmission lines 51-1 to 51-m. In the optical transmission system 101b illustrated in Fig. 14, the optical communication device 2cY illustrated in Fig. 7 may be provided instead of the optical communication devices 2Y-1 to 2Y-n, and the optical transmission/reception units 21Y-1 to 21Y-n may be connected one by one to the respective optical transmission lines 52-1 to 52-n.

In the optical transmission system 101c illustrated in Fig. 16, the optical communication devices 2X-1 to 2X-m illustrated in Fig. 14 may be provided instead of the optical communication device 2X, a plurality of optical transmission lines 51-1 to 51-m may be connected to the output port switching unit 14 instead of one optical transmission line 51, and the optical transmission/reception units 21X-1 to 21X-m may be connected one by one to the respective optical transmission lines 51-1 to 51-m. In the optical transmission system 101c illustrated in Fig. 16, instead of the optical communication device 2X and the optical transmission line 51, one optical communication device including the optical transmission/reception units 21X-1 to 21X-m, one control unit 20aX connected to each of the optical transmission/reception units 21X-1 to 21X-m, and the transmission control unit 29X connected to each of the optical transmission/reception units 21X-1 to 21X-m, and the optical transmission lines 51-1 to 51-m connected to each of the optical transmission/reception units 21X-1 to 21X-m and the output port switching unit 14 may be provided.

In the optical transmission system 102 illustrated in Fig. 8, the optical communication device 2aX may not include the wavelength multiplexing/separating unit 6aX inside, but may include it as the wavelength multiplexing/separating device 6X outside as in the optical transmission system 102b in Fig. 15. Similarly, in the optical transmission system 102a illustrated in Fig. 13, the optical communication device 2dX may not include the wavelength multiplexing/separating units 6aX-1 and 6aX-1 inside, but may include wavelength multiplexing/separating devices 6X-1 and 6X-2 outside as in the optical transmission system 102b in Fig. 15.

For example, in the third embodiment and another configuration example of the third embodiment, an optical transmission/reception unit having the same configuration as the optical transmission/reception unit 21X that includes the single-wavelength light source 25X illustrated in Fig. 2 instead of the optical transmission/reception units 21aX-1 to 21aX-m including the wavelength variable light sources 25aX-1 to 25a-m illustrated in Fig. 9 may be applied. A configuration that does not include the operation devices 4, 4a, 4b, 4c, and 4d like the optical transmission system 100 illustrated in Fig. 1 may be applied to the above-described configuration including the operation devices 4, 4a, 4b, 4c, and 4d.

In the first to third embodiments and other configuration examples of each of the embodiments described above, the control unit 12 of the first embodiment and the transmission line design units 42, 42a, 42b, 42c, and 42d of the second and third embodiments select the configuration information for specifying the transmission mode by the predetermined selection processing on the basis of the transmission line characteristics, the desired bit rate information, and the specification information of the optical transmission/reception units 21X, 21X-1 to 21X-m, 21aX, and 21aX-1 to 21aX-m. On the other hand, the transmission mode may be specified as follows.

For example, some combination patterns of the transmission line characteristics, the desired bit rate information, and the specification information of the optical transmission/reception units 21X, 21X-1 to 21X-m, 21aX, and 21aX-1 to 21aX-m are selected. The configuration information for each selected pattern is selected, and a transmission mode information table in which the selected configuration information is associated with each combination of the transmission line characteristics, the desired bit rate information, and the specification information of the optical transmission/reception units 21X, 21X-1 to 21X-m, 21aX, and 21aX-1 to 21aX-m is generated in advance, and stored in advance in the internal storage area of the control unit 12 and the transmission line design units 42, 42a, 42b, 42c, and 42d. In such a configuration, instead of the processing of selecting the configuration information, the control unit 12 and the transmission line design units 42, 42a, 42b, 42c, and 42d may refer to the transmission mode information table stored in the internal storage area, read a combination of the configuration information corresponding to the combination of the transmission line characteristics, the desired bit rate information, and the specification information of the optical transmission/reception units 21X, 21X-1 to 21X-m, 21aX, and 21aX-1 to 21aX-m from the transmission mode information table, and generate transmission mode information including the read combination of the configuration information and the connection source address information included in the connection request data.

Further, a different number (hereinafter referred to as a "transmission mode number") is added to each record of the transmission mode information table, and the transmission mode information table to which the transmission mode number is added is stored in advance in the internal storage areas of the control units 12b and 12d and the control units 71X, 71X-1 to 71X-m, 71aX, 71aX-1 to 71aX-m, 71Y, 71Y-1 to 71Y-n, 71aY, and 71aY-1 to 71aY-n in addition to the internal storage areas of the control unit 12 and the transmission line design units 42, 42a, 42b, 42c, and 42d. The reason for storing the transmission mode information table also in the internal storage areas of the control units 12b and 12d of the connection node devices 1b and 1d is that the control units 12b and 12d generate the switching instruction signal to be output to the output port switching unit 14a on the basis of the center wavelength included in the transmission mode information.

The control unit 12 and the transmission line design units 42, 42a, 42b, 42c, and 42d detect the transmission mode number corresponding to the combination of the transmission line characteristics, the desired bit rate information, and the specification information of the optical transmission/reception units 21X, 21X-1 to 21X-m, 21aX, and 21aX-1 to 21aX-m with reference to the transmission mode information table stored in the internal storage area. The control unit 12 and the transmission line design units 42, 42a, 42b, 42c, and 42d generate transmission mode information including the detected transmission mode number and the connection source address information included in the connection request data.

When the control units 12b and 12d and the control units 71X, 71X-1 to 71X-m, 71aX, 71aX-1 to 71aX-m, 71Y, 71Y-1 to 71Y-n, 71aY, and 71aY-1 to 71aY-n capture the transmission mode information transmitted by the control unit 12 and the transmission line design units 42, 42a, 42b, 42c, and 42d, they refer to the transmission mode information table in an internal storage area and read the configuration information corresponding to the transmission mode number included in the captured transmission mode information. According to such a procedure, the control units 12b and 12d and the control units 71X, 71X-1 to 71X-m, 71aX, 71aX-1 to 71aX-m, 71Y, 71Y-1 to 71Y-n, 71aY, and 71aY-1 to 71aY-n may be notified of the transmission mode specified by using the transmission mode number.

Note that, in the second and third embodiments and other configuration examples of each of the embodiments, the transmission line design units 42, 42a, 42b, 42c, and 42d calculate the transmission line characteristics End-To-End, that is, between the connection source and the connection destination on the basis of the connection information received from the connection node devices 1a, 1b, 1c, 1d, and 1e and the transmission line information of the optical transmission lines 52 and 52-i corresponding to the connection destination address information included in the connection request data. On the other hand, the following configuration may be employed.

The control units 12a, 12b, 12c, 12d, and 12e of the connection node devices 1a, 1b, 1c, 1d, and 1e calculate transmission line characteristics on the basis of the connection information of the optical transmission lines 51 and 51-1 to 51-m, and transmit the calculated transmission line characteristics to the operation devices 4, 4a, 4b, 4c, and 4d instead of the connection information. The transmission line design units 42, 42a, 42b, 42c, and 42d of the operation devices 4, 4a, 4b, 4c, and 4d calculate the transmission line characteristics of the optical transmission lines 52 and 52-i corresponding to the connection destination address information included in the connection request data on the basis of the transmission line information of the optical transmission lines 52 and 52-1 to 52-n stored in the internal storage area or the transmission line information of the optical transmission lines 52 and 52-1 to 52-n acquired on demand. The transmission line design units 42, 42a, 42b, 42c, and 42d may calculate approximate transmission line characteristics End-To-End on the basis of the transmission line characteristics received from the control units 12a, 12b, 12c, 12d, and 12e and the transmission line characteristics calculated on the basis of the transmission line information of the optical transmission lines 52 and 52-i. Note that the transmission line design units 42, 42a, 42b, 42c, and 42d may have the following configuration instead of calculating the transmission line characteristics of the optical transmission lines 52 and 52-1 to 52-n on the basis of the transmission line information of the optical transmission lines 52 and 52-1 to 52-n. The transmission line design units 42, 42a, 42b, 42c, and 42d calculate the transmission line characteristics of the optical transmission lines 52 and 52-1 to 52-n in advance on the basis of transmission line information of the optical transmission lines 52 and 52-1 to 52-n, and store the calculated transmission line characteristics of the optical transmission lines 52 and 52-1 to 52-n in the internal storage area in advance. With such a configuration, the transmission line design units 42, 42a, 42b, 42c, and 42d can acquire the transmission line characteristics of the optical transmission lines 52 and 52-1 to 52-n by performing processing of reading the transmission line characteristics of the optical transmission lines 52 and 52-1 to 52-n from the internal storage area instead of the processing of calculating the transmission line characteristics of the optical transmission lines 52 and 52-1 to 52-n.

In the first to third embodiments and other configuration examples of each of the embodiments, the output port switching unit 14 includes two optical switch units 15T and 15R, and the output port switching unit 14a includes two optical switch units 15aT and 15aR. On the other hand, the output port switching units 14 and 14a may include one optical switch unit, and may be configured to separate the port for the transmission direction and the port for the reception direction by port setting in the one optical switch unit.

The output port switching unit 14a described above is assumed to be applied with, for example, WSS, fiber patch panel, or the like. On the other hand, an arrayed waveguide grating (AWG) may be applied as the output port switching unit 14a. For example, it is determined in advance that the AWG is applied to the output port switching unit 14a of the optical transmission system 102b illustrated in Fig. 15, a wavelength path equal to or more than 1530 nm and less than 1540 nm is output to the connection information processing unit 13b, and a wavelength path equal to or more than 1540 nm and less than 1560 nm is output to the optical transmission line 52. The control unit 12d transmits information indicating that the connection node device 1d includes the AWG as the output port switching unit 14a and information indicating a wavelength path preset in the AWG to the operation device 4c together with the connection information and the like. The transmission line design unit 42c of the operation device 4c generates transmission mode information by adding the information indicating that the AWG is included and the information indicating the wavelength path preset in the AWG received from the control unit 12d. In this manner, by applying the AWG to the output port switching unit 14a, the optical transmission/reception units 21aX-1 to 21aX-m can switch from the connection to the connection node device 1d to the optical transmission line 52 by changing the wavelengths of the wavelength variable light sources 25aX-1 to 25aX-m included in each unit according to the transmission mode information. Thus, the control unit 12d does not need to output the switching instruction signal to the output port switching unit 14a.

### (Fourth Embodiment)

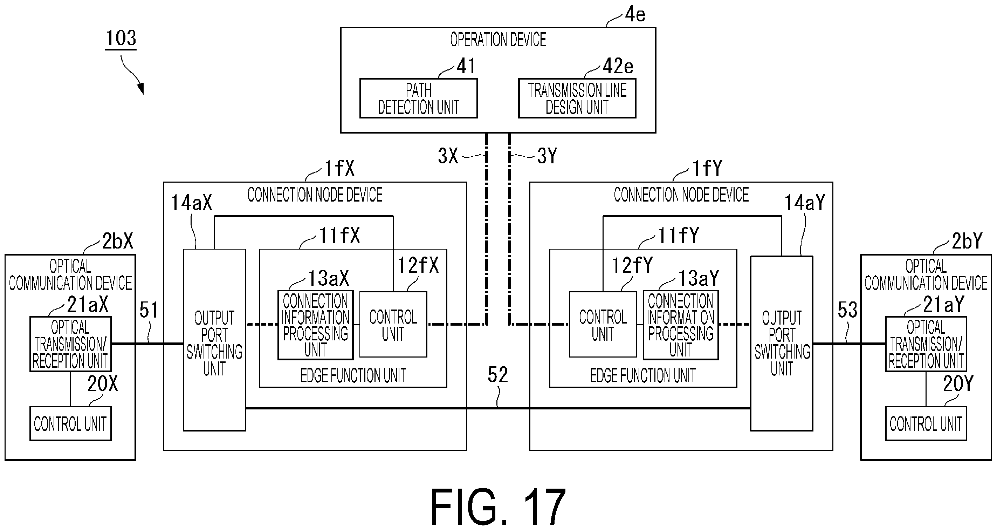

Fig. 17 is a block diagram illustrating a configuration of an optical transmission system 103 in a fourth embodiment. In the fourth embodiment, the same reference signs are given to the same configurations as those of the first to third embodiments and other configuration examples of each of the embodiments, and different configurations will be described below. The optical transmission system 103 includes optical communication devices 2bX and 2bY, connection node devices 1fX and 1fY, an operation device 4e, the optical transmission line 51 that connects the optical transmission/reception unit 21aX of the optical communication device 2bX and an output port switching unit 14aX of the connection node device 1fX, the optical transmission line 53 that connects the optical transmission/reception unit 21aY of the optical communication device 2bY and an output port switching unit 14aY of the connection node device 1fY, the optical transmission line 52 that connects the output port switching unit 14aX of the connection node device 1fX and the output port switching unit 14aY of the connection node device 1fY, a connection line 3X that connects the connection node device 1fX and the operation device 4e, and a connection line 3Y that connects the connection node device 1fY and the operation device 4e. Here, the optical transmission line 52 is, for example, an optical transmission line constituting a carrier network of a communication carrier, and the optical transmission lines 51 and 53 are, for example, dark fibers. The optical communication devices 2bX and 2bY are, for example, communication devices used by users.

The optical transmission/reception units 21aX and 21aY included in the optical communication devices 2bX and 2bY have the same configuration as the optical transmission/reception unit 21aX-1 of the optical transmission system 102 illustrated in Fig. 8. Hereinafter, when a functional unit included in each of the optical transmission/reception units 21aX and 21aY is illustrated, the branch number "X-1" of the reference sign of each functional unit included in the optical transmission/reception unit 21aX-1 is replaced with "X" or "Y".

The output port switching units 14aX and 14aY included in the connection node devices 1fX and 1fY have the same configuration as the output port switching unit 14a of the connection node device 1b of the optical transmission system 102 illustrated in Fig. 8. Hereinafter, when a functional unit included in each of the output port switching units 14aX and 14aY is illustrated, the reference sign "a" of each functional unit included in the output port switching unit 14a is replaced with "aX" or "aY".

The connection information processing units 13aX and 13aY have the same configuration as the connection information processing unit 13a of the connection node device 1b of the optical transmission system 102 illustrated in Fig. 8. Hereinafter, when a functional unit included in each of the connection information processing units 13aX and 13aY is illustrated, the branch number "a" of the reference sign of each functional unit included in the connection information processing unit 13a is replaced with "aX" or "aY".

The control units 12fX and 12fY included in the connection node devices 1fX and 1fY have the following configuration in addition to the configuration included in the control unit 12b of the connection node device 1b of the optical transmission system 102 illustrated in Fig. 8. Identification information for specifying each of the connection node devices 1fX and 1fY is added in advance to each of them. The control unit 12fX stores the identification information for specifying the connection node device 1fX in an internal storage area in advance. When transmitting the connection information and the connection request data to the operation device 4e, the control unit 12fX adds the identification information for specifying the connection node device 1fX stored in the internal storage area and transmits the connection information and the connection request data to the operation device 4e. Similarly, the control unit 12fY stores the identification information for specifying the connection node device 1fY in an internal storage area in advance. When transmitting the connection information and the connection request data to the operation device 4e, the control unit 12fY adds the identification information for specifying the connection node device 1fY stored in the internal storage area and transmits the connection information and the connection request data to the operation device 4e.

The operation device 4e includes the path detection unit 41 and a transmission line design unit 42e. The transmission line design unit 42e stores the transmission line information of the optical transmission line 52 in advance in association with the identification information for specifying the optical transmission line 52 in an internal storage area. Note that the transmission line design unit 42e may calculate the transmission line information of the optical transmission line 52 in advance by predetermined calculation on the basis of the optical signal transmitted by the optical transmission line 52 and store the transmission line information in the internal storage area, or may acquire the transmission line information from an external device on demand at a specific timing such as when laying a network. The transmission line information of the optical transmission line 52 may be obtained in advance by a method other than the predetermined calculation.

The transmission line design unit 42e stores information indicating free resources of the optical transmission line 52 in advance in the internal storage area. Here, the information indicating the free resources is, for example, information indicating a wavelength, or a wavelength band, or an optical transmission path that is not used for communication when determining the free state of a resource. Note that the information indicating the free resources stored in the internal storage area of the transmission line design unit 42e is updated by the transmission line design unit 42e every time a communication path is established. The transmission line design unit 42e stores in advance, in the internal storage area, the connection line table in which the identification information for specifying the connection node device 1fX is associated with the connection line 3X, and information for specifying the connection node device 1fY is associated with the connection line 3Y.

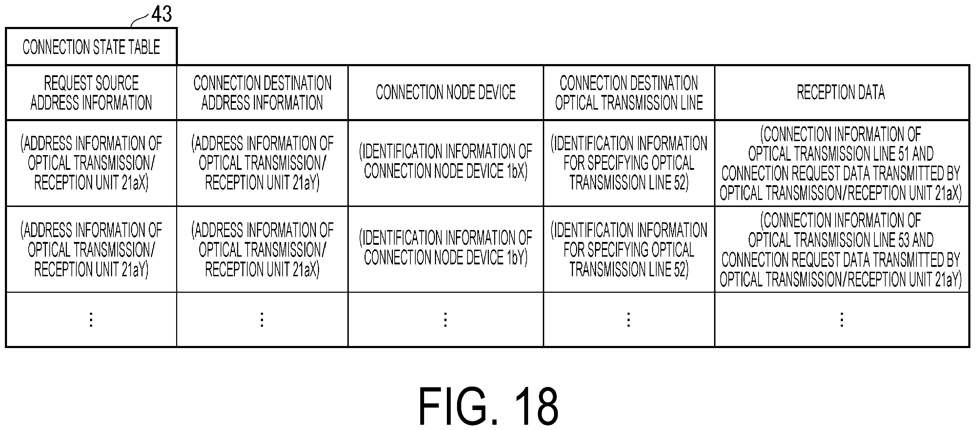

The transmission line design unit 42e stores a connection state table 43 illustrated in Fig. 18 in the internal storage area. The record format of the connection state table 43 includes items of "request source address information", "connection destination address information", "connection node device", "connection destination optical transmission line", and "reception data". In the item of "request source address information", the connection source address information included in the connection request data is written. In the item of "connection destination address information", the connection destination address information included in the connection request data is written.

In the item of "connection node device", the identification information for specifying the connection node devices 1fX and 1fY received together with the connection request data by the transmission line design unit 42e is written. In the item of "connection destination optical transmission line", the identification information for specifying the optical transmission line 52 corresponding to the connection destination address information included in the connection request data detected by the path detection unit 41 is written. In the item of "reception data", connection information received by the transmission line design unit 42e and the connection request data are written.

In order to connect the optical transmission/reception unit 21aX and the optical transmission/reception unit 21aY, the transmission line design unit 42e refers to the connection state table 43 and calculates the transmission line characteristics of the optical transmission line from the optical transmission line 51 to the optical transmission line 53 via the optical transmission line 52. The transmission line design unit 42e specifies transmission modes to be applied to the optical transmission units 24aX and 24aY on the basis of the calculated transmission line characteristics.

### (Processing of Optical Transmission System of Fourth Embodiment)

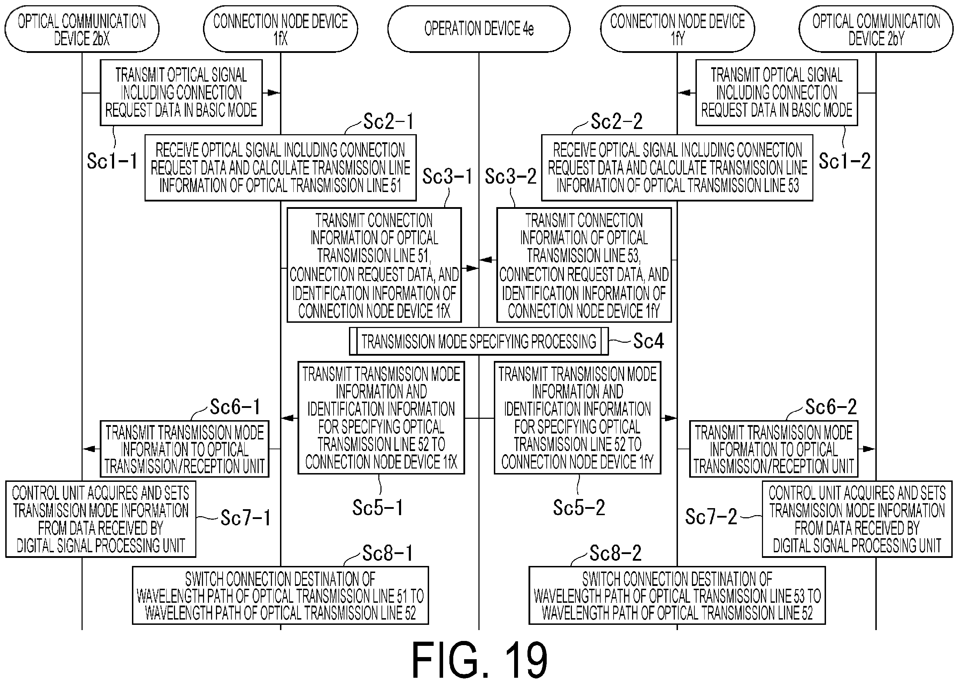

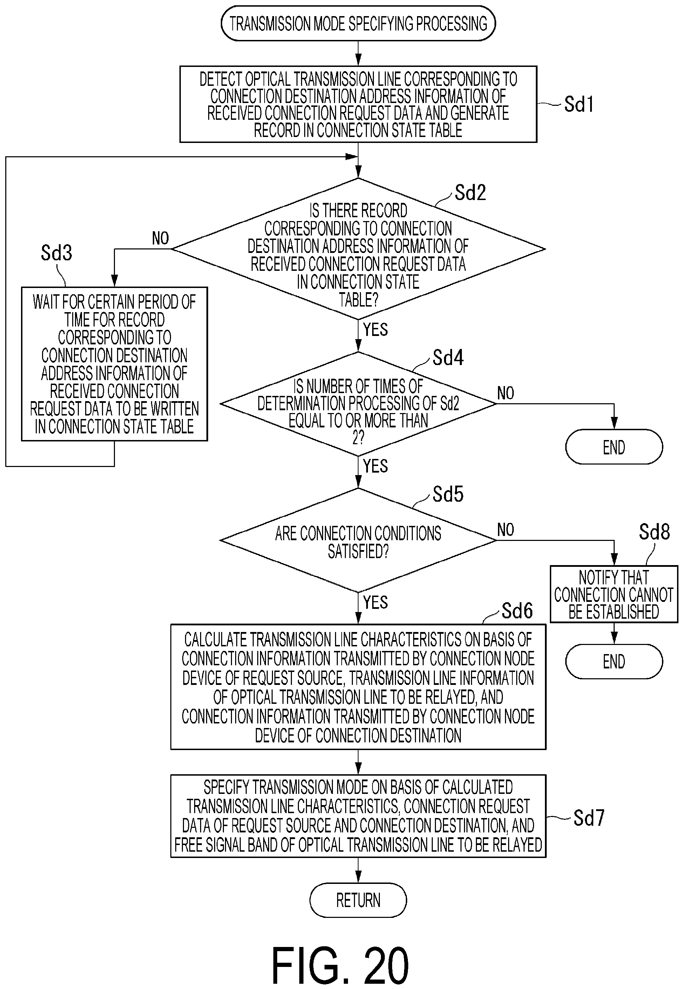

Next, processing by the optical transmission system 103 of the fourth embodiment will be described with reference to Figs. 19 and 20. Fig. 19 is a flowchart illustrating a flow of processing by the optical transmission system 103 of the fourth embodiment. In the initial state, the output port switching unit 14aX of the connection node device 1fX connects the wavelength path of the basic wavelength of the optical transmission line 51 to the connection information processing unit 13aX of the edge function unit 11fX of the connection node device 1fX. In the initial state, the output port switching unit 14aY of the connection node device 1fY connects the wavelength path of the basic wavelength of the optical transmission line 53 to the connection information processing unit 13aY of the edge function unit 11fY of the connection node device 1fY.

Hereinafter, processing in which the optical transmission/reception unit 21aX included in the optical communication device 2bX connects to the optical transmission/reception unit 21aY of the optical communication device 2bY as a connection destination and the optical transmission/reception unit 21aY included in the optical communication device 2bY connects to the optical transmission/reception unit 21aX of the optical communication device 2bX as a connection destination will be described.

The control unit 20X of the optical communication device 2bX generates a connection request instruction signal including the address information of the optical transmission/reception unit 21aY and the desired bit rate in order to establish connection to the optical transmission/reception unit 21aY included in the optical communication device 2bY. The control unit 20X outputs the generated connection request instruction signal to the control unit 71aX of the optical transmission/reception unit 21aX. The control unit 71aX captures the connection request signal output from the control unit 20X, and sets the address information of the optical transmission/reception unit 21aY included in the captured connection request signal as the connection destination address. The control unit 71aX sets the address information of the optical transmission/reception unit 21aX stored in the internal storage area as the connection source address information. The control unit 71aX generates connection request data including the connection destination address information and the connection source address information, the desired bit rate included in the connection request instruction signal, and the specification information of the optical transmission/reception unit 21aX stored in the internal storage area. Thereafter, the same processing as in step Sb2 in Fig. 10 is performed by the optical transmission/reception unit 21aX of the optical communication device 2bX (step Sc1-1).

The control unit 20Y of the optical communication device 2bY generates a connection request instruction signal including the address information of the optical transmission/reception unit 21aX and the desired bit rate in order to establish connection to the optical transmission/reception unit 21aX included in the optical communication device 2bX. The control unit 20Y outputs the generated connection request instruction signal to the control unit 71aY of the optical transmission/reception unit 21aY. The control unit 71aY captures the connection request signal output from the control unit 20Y, and sets the address information of the optical transmission/reception unit 21aX included in the captured connection request signal as the connection destination address. The control unit 71aY sets the address information of the optical transmission/reception unit 21aY stored in the internal storage area as the connection source address information. The control unit 71aY generates connection request data including the connection destination address information and the connection source address information, the desired bit rate included in the connection request instruction signal, and the specification information of the optical transmission/reception unit 21aY stored in the internal storage area. Thereafter, the same processing as in step Sb2 in Fig. 10 is performed by the optical transmission/reception unit 21aY of the optical communication device 2bY (step Sc1-2).

In step Sc2-1, the same processing as in step Sb3 in Fig. 10 is performed in the output port switching unit 14aX and the connection information processing unit 13aX of the connection node device 1fX. Here, the transmission line information calculated by the connection information generation unit 38aX of the connection node device 1fX is the transmission line information of the optical transmission line 51, and the connection information generation unit 38aX generates the connection information of the optical transmission line 51. In step Sc2-2, the same processing as in step Sb3 in Fig. 10 is performed in the output port switching unit 14aY and the connection information processing unit 13aY of the connection node device 1fY. Here, the transmission line information calculated by the connection information generation unit 38aY of the connection node device 1fY is transmission line information of the optical transmission line 53, and the connection information generation unit 38aY generates connection information of the optical transmission line 53.

The control unit 12fX captures the connection information of the optical transmission line 51 output from the connection information generation unit 38aX and the connection request data. The control unit 12fX transmits the captured connection information of the optical transmission line 51, the captured connection request data, and the identification information for specifying the connection node device 1fX stored in the internal storage area to the operation device 4e through the connection line 3X (step Sc3-1). The control unit 12fY captures the connection information of the optical transmission line 53 output from the connection information generation unit 38aY and the connection request data. The control unit 12fY transmits the captured connection information of the optical transmission line 53, the captured connection request data, and the identification information for specifying the connection node device 1fY stored in the internal storage area to the operation device 4e through the connection line 3Y (step Sc3-2).

The operation device 4e performs transmission mode specifying processing (step Sc4). Fig. 20 is a flowchart illustrating a flow of processing of a subroutine of the transmission mode specifying processing. Hereinafter, after the processing of step Sc3-1, processing when the operation device 4e receives the connection information of the optical transmission line 51, the connection request data, and the identification information for specifying the connection node device 1fX transmitted by the control unit 12fX of the connection node device 1fX will be described.

The path detection unit 41 of the operation device 4e receives the connection request data transmitted by the control unit 12fX of the connection node device 1fX and the identification information for specifying the connection node device 1fX. The path detection unit 41 refers to the path information table stored in the internal storage area or the path information table acquired on demand, and detects connection destination address information included in the received connection request data, here, the identification information for specifying the optical transmission line 52 corresponding to the address information of the optical transmission/reception unit 21aY. The path detection unit 41 outputs the detected identification information for specifying the optical transmission line 52 and the received identification information for specifying the connection node device 1fX to the transmission line design unit 42e.

The transmission line design unit 42e receives the connection information of the optical transmission line 51, the connection request data, and the identification information for specifying the connection node device 1fX transmitted by the control unit 12fX of the connection node device 1fX. The transmission line design unit 42e captures the identification information for specifying the optical transmission line 52 output by the path detection unit 41 and the identification information for specifying the connection node device 1fX. In this case, a combination of the connection information of the optical transmission line 51, the connection request data, and the identification information for specifying the connection node device 1fX received by the transmission line design unit 42e from the control unit 12fX of the connection node device 1fX, and a combination of the identification information for specifying the optical transmission line 52 captured as the output of the path detection unit 41 by the transmission line design unit 42e and the identification information for specifying the connection node device 1fX match in terms of the identification information for specifying the connection node device 1fX. Thus, assuming that these combinations have a correspondence relationship, the transmission line design unit 42e performs the following processing on the basis of the connection information of the optical transmission line 51, the connection request data, the identification information for specifying the optical transmission line 52, and the identification information for specifying the connection node device 1fX.

The transmission line design unit 42e generates one new record in the connection state table 43 stored in the internal storage area. The transmission line design unit 42e writes the connection source address information included in the received connection request data, here, the address information of the optical transmission/reception unit 21aX, in the item of "request source address information" of the generated record. The transmission line design unit 42e writes the connection destination address information included in the received connection request data, here, the address information of the optical transmission/reception unit 21aY, in the item of "connection destination address information" of the record.

The transmission line design unit 42e writes the identification information for specifying the received connection node device 1fX in the item of "connection node device" of the record. The transmission line design unit 42e writes the identification information for specifying the optical transmission line 52 captured as the output of the path detection unit 41 in the item of "connection destination optical transmission line" of the record. The transmission line design unit 42e writes the received connection information of the optical transmission line 51 and the connection request data in the item of "reception data" of the record.

For example, in a case where the processing of step Sd1 executed due to the processing of step Sc3-1 in Fig. 19 is completed before the processing of step Sd1 executed due to the processing of step Sc3-2, a record related to the optical transmission/reception unit 21aY of the optical communication device 2bY is not generated in the connection state table 43 of the transmission line design unit 42e at the time when the processing of step Sd1 executed due to the processing of step Sc3-1 is completed. On the other hand, in a case where the processing of step Sd1 executed due to the processing of step Sc3-2 is completed before the processing of step Sd1 executed due to the processing of step Sc3-1, the record related to the optical transmission/reception unit 21aY of the optical communication device 2bY is generated in the connection state table 43 of the transmission line design unit 42e at the time when the processing of step Sd1 executed due to the processing of step Sc3-1 is completed.

In order to determine any of these states, the transmission line design unit 42e refers to the connection state table 43 to determine whether or not there is a record in which the address information of the optical transmission/reception unit 21aY written in the item of "connection destination address information" of the newly generated record is written in the item of "request source address information", and adds "1" to the value of the counter of the number of times of processing provided in the internal storage area. However, the initial value of the processing number counter is "0" (step Sd2).

It is assumed that the transmission line design unit 42e determines that there is no record in which the address information of the optical transmission/reception unit 21aY written in the item of "connection destination address information" of the newly generated record is written in the item of "request source address information" (step Sd2, No). In this case, the processing of step Sd1 executed due to step Sc3-2 is not completed. Thus, the transmission line design unit 42e waits for a certain period of time for the record related to the optical transmission/reception unit 21aY of the optical communication device 2bY to be generated in the connection state table 43 (step Sd3).

When it is determined that there is a record in which the address information of the optical transmission/reception unit 21aY written in the item of "connection destination address information" of the newly generated record is written in the item of "request source address information" (step Sd2, Yes), the transmission line design unit 42e determines whether or not the value of the counter of the number of times of processing stored in the internal storage area is equal to or more than "2" (step Sd4).

The reason for performing the determination processing in step Sd4 is to stop one transmission mode specifying processing so that the transmission mode specifying processing in step Sc4 related to the optical transmission/reception unit 21aX of the optical communication device 2bX performed after the processing in step Sc3-1 and the transmission mode specifying processing in step Sc4 related to the optical transmission/reception unit 21aY of the optical communication device 2bY performed after the processing in step Sc3-2 are not performed in parallel. In a case where the value of the counter of the number of times of processing is "1", it means that the determination processing of step Sd2 has been performed only once, and at the time of the determination processing, a record has already been generated by the processing of step Sd1 of the preceding transmission mode specifying processing in the connection state table 43. Thus, in this case, the preceding transmission mode specifying processing is preferentially performed, and the subsequent transmission mode specifying processing is stopped.

When it is determined that the value of the counter of the number of times of processing stored in the internal storage area is not equal to or more than "2" (step Sd4, No), the transmission line design unit 42e ends the processing. On the other hand, when it is determined that the value of the counter of the number of times of processing stored in the internal storage area is equal to or more than "2" (step Sd4, Yes), the transmission line design unit 42e performs the following determination processing.

The transmission line design unit 42e determines whether or not connection conditions are satisfied in the two records of the connection target stored in the connection state table 43, that is, a record in which the address information of the optical transmission/reception unit 21aX is written in the item of "request source address information" and a record in which the address information of the optical transmission/reception unit 21aY written in the item of "connection destination address information" of the record is written in the item of "request source address information" (step Sd5). Here, for example, the connection conditions are that, in two records of the connection target stored in the connection state table 43, the address information written in the item of "request source address information" of one matches the address information written in the item of "connection destination address information" of the other, and the contents of the item of "connection destination optical transmission line" coincide with each other.

Here, the address information of the optical transmission/reception unit 21aY is written in the item of "connection destination address information" of the record in which the item of "request source address information" is the address information of the optical transmission/reception unit 21aX. The address information of the optical transmission/reception unit 21aX is written in the item of "connection destination address information" of the record in which the item of "request source address information" is the address information of the optical transmission/reception unit 21aY. Thus, the first connection condition that the address information written in the item of "request source address information" of the one matches the address information written in the item of "connection destination address information" of the other is satisfied. The identification information for specifying the optical transmission line 52 is written in the item of "connection destination optical transmission line" of the record in which the item of "request source address information" is the address information of the optical transmission/reception unit 21aX, and the identification information for specifying the optical transmission line 52 is written in the item of "connection destination optical transmission line" of the record in which the "request source address information" is the address information of the optical transmission/reception unit 21aY. Therefore, the second connection condition that the contents of the item of "connection destination optical transmission line" match is also satisfied.

Thus, the transmission line design unit 42e determines that the connection conditions are satisfied (step Sd5, Yes). The transmission line design unit 42e reads the connection information of the optical transmission line 51 from the item of "reception data" of the record in which the "request source address information" is the address information of the optical transmission/reception unit 21aX. The transmission line design unit 42e reads the connection information of the optical transmission line 53 from the item of "reception data" of the record in which the "request source address information" is the address information of the optical transmission/reception unit 21aY.

The transmission line design unit 42e reads and acquires the transmission line information of the optical transmission line 52 from the internal storage area, or acquires the transmission line information of the optical transmission line 52 on demand. On the basis of the read connection information of the optical transmission line 51 and connection information of the optical transmission line 53 and the acquired transmission line information of the optical transmission line 52, the transmission line design unit 42e calculates transmission line characteristics by, for example, a transmission design tool such as GNPy provided inside (step Sd6).

The transmission line design unit 42e selects the configuration information by the predetermined selection processing on the basis of the calculated transmission line characteristics, information indicating a free resource of the optical transmission line 52 corresponding to the connection destination address information detected by the path detection unit 41 stored in the internal storage area, and the desired bit rate information included in the connection request data written in the item of "reception data" of a record in which the item of "request source address information" is the address information of the optical transmission/reception unit 21aX and a record in which the item of "request source address information" is the address information of the optical transmission/reception unit 21aY and the specification information of the optical transmission/reception units 21aX and 21aY. The transmission line design unit 42e generates transmission mode information including the selected configuration information and the connection source address information included in the connection request data (step Sd7), and returns to the processing of the flowchart illustrated in Fig. 19.

On the other hand, when it is determined that the connection conditions are not satisfied (step Sd5, No), the transmission line design unit 42e notifies the outside that the connection is not possible, and ends the processing.

The transmission line design unit 42e refers to the connection line table stored in the internal storage area, and transmits the generated transmission mode information and the identification information for specifying the optical transmission line 52 detected by the path detection unit 41 to the control unit 12fX of the connection node device 1fX through the connection line 3X (step Sc5-1). The transmission line design unit 42e refers to the connection line table stored in the internal storage area, and transmits the generated transmission mode information and the identification information for specifying the optical transmission line 52 detected by the path detection unit 41 to the control unit 12fY of the connection node device 1fY via the connection line 3Y (step Sc5-2). Note that the processing in steps Sc5-1 and Sc5-2 may be performed in parallel, may be performed in the order of steps Sc5-1 and Sc5-2, or may be performed in the reverse order.

Thereafter, in the connection node device 1fX, the same processing as in step Sb9-2 in Fig. 10 is performed in the edge function unit 11fX and the output port switching unit 14aX (step Sc6-1), and the same processing as in step Sb10 is performed in the optical transmission/reception unit 21aX of the optical communication device 2bX (step Sc7-1). In the connection node device 1fY, the same processing as in step Sb9-2 in Fig. 10 is performed in the edge function unit 11fY and the output port switching unit 14aY (step Sc6-2), and the same processing as in step Sb10 is performed in the optical transmission/reception unit 21aY of the optical communication device 2bY (step Sc7-2).

The control unit 12fX of the connection node device 1fX performs processing similar to that in step Sb11 in Fig. 10, that is, switching processing of connecting the wavelength path of the center wavelength designated in the transmission mode information, which is the wavelength path of the optical transmission line 52 corresponding to the received identification information for specifying the optical transmission line 52, and the wavelength path of the center wavelength designated in the transmission mode information, which is the wavelength path of the optical transmission line 51 (step Sc8-1). The control unit 12fY of the connection node device 1fY performs processing similar to that in step Sb11 in Fig. 10, that is, switching processing of connecting the wavelength path of the center wavelength designated in the transmission mode information, which is the wavelength path of the optical transmission line 52 corresponding to the received identification information for specifying the optical transmission line 52, and the wavelength path of the center wavelength designated in the transmission mode information, which is the wavelength path of the optical transmission line 53 (step Sc8-2). Thus, the optical transmission/reception unit 21aX and the optical transmission/reception unit 21aY are connected by the wavelength path of the center wavelength designated in the transmission mode information, which is the wavelength path included in each of the optical transmission line 51, the optical transmission line 52, and the optical transmission line 53.

Note that, for the timing at which steps Sc8-1 and Sc8-2 are performed, any of a method of performing the processing of steps Sc8-1 and Sc8-2 after the elapse of the above-described time measured in advance, a method of performing the processing of steps Sc8-1 and Sc8-2 at the timing when the information indicating that the reception of the transmission mode information is completed, and a method of performing the processing of steps Sc8-1 and Sc8-2 upon reception of the notification that the optical output in the basic mode is stopped may be applied.

In the optical transmission system 103, the above-described configuration of the transmission mode information table may be applied, or a configuration in which the optical transmission/reception units 21aX and 21aY and the control units 12fX and 12fY of the connection node devices 1fX and 1fY are notified of the transmission mode specified by the transmission mode number may be applied.

In the configuration of the above-described fourth embodiment, the operation device 4e is connected to the connection node device 1fX and the connection node device 1fY, reads and acquires the transmission line information of the optical transmission line 52, which is the second optical transmission line stored in advance in an internal storage area, from the internal storage area, or acquires the transmission line information of the optical transmission line 52 on demand, and specifies the transmission mode on the basis of the acquired transmission line information of the optical transmission line 52, the connection information of the optical transmission line 51, which is the first optical transmission line, acquired by the connection information processing unit 13aX of the connection node device 1fX from the optical signal transmitted by the optical transmission/reception unit 21aX included in the optical communication device 2bX, which is the first optical communication device, the connection request data included in the optical signal and transmitted by the optical transmission/reception unit 21aX included in the optical communication device 2bX, the connection information of the optical transmission line 53, which is the third optical transmission line, acquired by the connection information processing unit 13aY of the connection node device 1fY from the optical signal transmitted by the optical transmission/reception unit 21aY included in the optical communication device 2bY, which is the second optical communication device, and the connection request data included in the optical signal and transmitted by the optical transmission/reception unit 21aY included in the optical communication device 2bY, and transmits transmission mode information indicating the specified transmission mode to the control unit 12fX of the connection node device 1fX and the control unit 12fY of the connection node device 1fY. The output port switching unit 14aX of the connection node device 1fX performs the switching processing after the control unit 12fX transmits the transmission mode information to the optical transmission/reception unit 21aX through the optical transmission line 51, and the output port switching unit 14aY of the connection node device 1fY performs the switching processing after the control unit 12fY transmits the transmission mode information to the optical transmission/reception unit 21aY of the optical communication device 2bY through the optical transmission line 53. Thus, the optical transmission/reception unit 21aX included in the optical communication device 2bX and the optical transmission/reception unit 21aY included in the optical communication device 2bY are connected via the optical transmission line 51, the optical transmission line 52, and the optical transmission line 53. The optical transmission/reception unit 21aX included in the optical communication device 2bX receives the transmission mode information received by the control unit 12fX of the connection node device 1fX from the operation device 4e and sent to the optical transmission line 51, and transmits and receives an optical signal through the optical transmission line 51 in the transmission mode indicated by the received transmission mode information. The optical transmission/reception unit 21aY included in the optical communication device 2bY receives the transmission mode information received by the control unit 12fY of the connection node device 1fY from the operation device 4e and sent to the optical transmission line 53, and transmits and receives an optical signal through the optical transmission line 53 in the transmission mode indicated by the received transmission mode information. Thus, when the optical transmission/reception units 21aX and 21aY included in the optical communication devices 2bX and 2bY are connected via the plurality of optical transmission lines 51, 52, and 53, the optical transmission/reception units can be connected by the optical path of the optimum transmission mode without manual intervention. Therefore, it is possible to reduce the cost and time required for setting the light path.

Note that, in step Sd8 illustrated in Fig. 20 of the fourth embodiment described above, in addition to notifying the outside that the connection cannot be established, the optical transmission/reception unit 21aX of the optical communication device 2bX and the optical transmission/reception unit 21aY of the optical communication device 2bY may be notified through the wavelength path of the basic wavelength that the connection cannot be established.

### (Another Configuration Example (Part 1) of Fourth Embodiment)

The optical transmission system 103 of the fourth embodiment includes the two connection node devices 1fX and 1fY, but may include a larger number of connection node devices having the same configuration (hereinafter referred to as connection node devices 1f-1 to 1f-k, and connection lines connected to each of the connection node devices 1f-1 to 1f-k are referred to as connection lines 3-1 to 3-k, where k is an integer equal to or more than 3). It is assumed that a plurality of optical transmission/reception units, which are functional units having the same configuration as the optical transmission/reception units 21aX and 21aY, is connected to each of the connection node devices 1f-1 to 1f-k in the forms described in the second and third embodiments and other configuration examples of each of the embodiments, for example. In this case, it is assumed that the transmission line design unit 42e of the operation device 4e receives, for example, connection information of the optical transmission line connected to the connection node device 1f-1 transmitted by the control unit 12f-1 of the connection node device 1f-1, connection request data for requesting connection to the optical transmission/reception unit included in the optical communication device connected to any one of the connection node devices 1f-2 to 1f-k, and the identification information for specifying the connection node device 1fX-1.

The transmission line design unit 42e starts the transmission mode specifying processing in step Sc4 in Fig. 19, and in a case where a record related to the optical transmission/reception unit included in the optical communication device serving as a connection destination is not generated in the connection state table 43, the transmission line design unit waits for a certain period of time as illustrated in the processing in step Sd3 in Fig. 20. In a case where a record related to the optical transmission/reception unit included in the optical communication device serving as a connection destination is not generated in the connection state table 43 even after waiting for a certain period of time, it is also assumed that the connection node devices 1f-2 to 1f-k have failed to transmit connection information or the like. In preparation for such a case, the transmission line design unit 42e of the operation device 4e may transmit a trigger signal for transmitting connection information and the like to all the connection node devices 1f-2 to 1f-k other than the connection node device 1f-1 through the connection lines connected to the respective connection node devices 1f-2 to 1f-k, and cause the connection node devices 1f-2 to 1f-k to retransmit the connection information and the like.

### (Another Configuration Example (Part 2) of Fourth Embodiment)

For example, it is assumed that the optical transmission/reception unit 21aX of the optical communication device 2bX of the fourth embodiment transmits connection request data with the optical transmission/reception unit 21aY of the optical communication device 2bY as a connection destination, and the control unit 12fY of the connection node device 1fY receives a trigger signal for retransmitting connection information and the like transmitted by the transmission line design unit 42e of the operation device 4e described above. The control unit 12fY transmits a transmission line information acquisition instruction signal for acquiring transmission line information to all the optical communication devices connected to the connection node device 1fY in the basic mode by communication in the basic mode. Here, the following description will be made assuming that, for example, only one optical communication device 2bY is connected to the connection node device 1fY as illustrated in Fig. 17.

The photodetector 28Y of the optical reception unit 27Y of the optical transmission/reception unit 21aY included in the optical communication device 2bY receives an optical signal including a transmission line information acquisition instruction signal transmitted by the optical transmission line 53, converts the received optical signal into a reception data signal of an electrical signal, and outputs the reception data signal to the digital signal processing unit 23aY. The digital signal processing unit 23aY captures the reception data signal output from the photodetector 28Y, reads the transmission line information acquisition instruction signal from the captured reception data signal, and outputs the read transmission line information acquisition instruction signal to the control unit 71aY. Upon receiving the transmission line information acquisition instruction signal output from the digital signal processing unit 23aY, the control unit 71aY acquires information regarding the optical transmission line 53 from the reception data signal captured by the digital signal processing unit 23aY. Here, the information regarding the optical transmission line 53 may be transmission line information of the optical transmission line 53 calculated by the control unit 71aY by predetermined calculation on the basis of the reception data signal captured by the digital signal processing unit 23aY, or may be information necessary for calculation of the transmission line information of the optical transmission line 53.

The control unit 71aY outputs the acquired information regarding the optical transmission line 53 to the digital signal processing unit 23aY in order to transmit the information to the connection node device 1fY. Note that, in a case where the control unit 71aY has connection request data whose connection is suspended, the control unit 71aY outputs the connection request data again to the digital signal processing unit 23aY together with the calculated transmission line information of the optical transmission line 53.

In this case, the connection information generation unit 38aY of the connection node device 1fY can acquire the connection information of the optical transmission line 53 on the basis of the information regarding the optical transmission line 53 transmitted by the optical communication device 2bY instead of the processing of calculating the transmission line information of the optical transmission line 53. More specifically, in a case where the information regarding the optical transmission line 53 is the transmission line information of the optical transmission line 53, the connection information generation unit 38aY can acquire the transmission line information of the optical transmission line 53 without performing the processing of calculating the transmission line information of the optical transmission line 53. In a case where the information regarding the optical transmission line 53 is information necessary for calculating the transmission line information of the optical transmission line 53, the transmission line information of the optical transmission line 53 can be acquired by calculating the transmission line information of the optical transmission line 53 by predetermined calculation on the basis of the information.

Furthermore, in a case where the connection destination address information included in the connection request data transmitted again by the control unit 71aY of the optical transmission/reception unit 21aY is the address information of the optical transmission/reception unit 21aX of the optical communication device 2bX, the optical transmission/reception unit 21aX and the optical transmission/reception unit 21aY can be connected by the trigger signal. Thus, in the processing of step Sd3 in Fig. 20, the transmission line design unit 42e of the operation device 4e does not wait for a certain period of time but transmits the trigger signal, thereby actively acquiring the transmission line information of the optical transmission line 53 and the connection request data from the optical transmission/reception unit 21aY of the optical communication device 2bY and connecting the optical transmission/reception unit 21aX and the optical transmission/reception unit 21aY.

Note that the transmission line information of the optical transmission line 53 calculated by the control unit 71aY of the optical transmission/reception unit 21aY and the transmission line information of the optical transmission line 53 calculated by the connection information generation unit 38aY of the connection node device 1fY by predetermined calculation on the basis of the information necessary for calculating the transmission line information of the optical transmission line 53 are the transmission line information of the optical transmission line 53 in a direction from the connection node device 1fY to the optical communication device 2bY. On the other hand, the transmission line information of the optical transmission line 53 calculated by the connection information generation unit 38aY of the connection node device 1fY in the fourth embodiment is transmission line information of the optical transmission line 53 in a direction from the optical communication device 2bY to the connection node device 1fY. The characteristics of an optical fiber 53T and an optical fiber 53R included in the optical transmission line 53 can be generally regarded as similar. Thus, the similar transmission line characteristics can be calculated and the similar transmission modes can be specified using the transmission line information of any optical transmission line 53.

The control unit 12fY of the connection node device 1fY may transmit the transmission line information acquisition instruction signal to the optical transmission/reception unit included in the newly connected optical communication device. The transmission line information acquisition instruction signal and the information regarding the optical transmission line 53 acquired by the control unit 71aY of the connection node device 1fY may be transmitted by a free space of the overhead of the transmission frame, or may be transmitted by a communication channel of the transmission frame or a payload area of the transmission frame. In the first to fourth embodiments and another configuration example of each embodiment, also in a case of acquiring the transmission line information of the optical transmission lines 51 and 51-1 to 51-m, means for acquiring the transmission line information of the optical transmission line 53 described above, that is, means for calculating the transmission line information of the optical fibers 51R and 51R-1 to 51R-m may be applied instead of calculating the transmission line information of the optical fibers 51T and 51T-1 to 51T-m included in the optical transmission lines 51 and 51-1 to 51-m.

In the fourth embodiment, instead of the optical communication devices 2bX and 2bY, the optical communication device 2X including the optical transmission/reception unit 21X having a single-wavelength light source 25X and the optical communication device 2Y including the optical transmission/reception unit 21Y having a single-wavelength light source 25Y may be connected to the connection node devices 1fX and 1fY, respectively.

Note that, in the first to fourth embodiments, the connection request data and the transmission mode information are transmitted by using the free space of the overhead area of the transmission frame. On the other hand, the connection request data and the transmission mode information may be transmitted by the communication channel of the transmission frame or may be transmitted by the payload area of the transmission frame.

In the first to fourth embodiments, the connection information including the BER is generated, but the connection information not including the BER may be generated.

In the third and fourth embodiments, the optical input information is transmitted using the communication channel. On the other hand, the optical input information may be transmitted by a general communication channel (GCC) of the frame header.

In the first and second embodiments described above, since the number of the optical transmission/reception units 21X that transmit the connection request data is one, the control unit 12 and the transmission line design unit 42 of the operation device 4 may not include the connection source address information included in the connection request data when generating the transmission mode information. In the fourth embodiment, since one optical transmission/reception unit 21aX or 21aY is connected to each of the connection node devices 1fX and 1fY, the operation device 4e may not include the connection source address information included in the connection request data when generating the transmission mode information also in this case. Also in a case where m = 1 in the third embodiment, the connection source address information included in the connection request data may not be included when the transmission mode information is generated. In a case where the connection source address information is not included in the transmission mode information, the control units 71X, 71Y, 71aX, 71aY, 71X-1, 71Y-1, 71aX-1, and 71aY-1 of the optical transmission/reception units 21X, 21Y, 21aX, 21aY, 21X-1, 21Y-1, 21aX-1, and 21aY-1 do not need to determine whether or not the captured transmission mode information includes the address information added to the optical transmission/reception units 21X, 21Y, 21aX, 21aY, 21X-1, 21Y-1, 21aX-1, and 21aY-1 including itself stored in the internal storage area when capturing the transmission mode information output from the digital signal processing units 23X, 23Y, 23aX, 23aY, 23X-1, 23Y-1, 23aX-1, and 23aY-1, and can set the captured transmission mode information as the transmission mode information corresponding to the connection request data generated by itself.

In the first to fourth embodiments and each of the other configuration examples, the basic output optical power may not be determined in advance in the basic mode. In this case, in a case where the optical signal is transmitted in the basic mode, the single-wavelength light sources 25X, 25Y, 25X-1 to 25X-m, and 25Y-1 to 25Y-m, the wavelength variable light sources 25aX, 25aY, 25aX-1 to 25aX-m, and 25aY-1 to 25aY-m generate the optical signal with the output optical power of the initial value.

The transmission line design unit 42e of the fourth embodiment calculates the transmission line characteristics End-To-End, that is, between the connection source and the connection destination on the basis of the connection information received from each of the connection node devices 1fX and 1fY and the transmission line information of the optical transmission line 52 corresponding to the connection destination address information included in the connection request data. On the other hand, the following configuration may be employed.

Each of the control units 12fX and 12fY of the connection node devices 1fX and 1fY calculates the transmission line characteristics on the basis of the connection information of the optical transmission lines 51 and 53, and transmits the calculated transmission line characteristics to the operation device 4e instead of the connection information. The transmission line design unit 42e of the operation device 4e calculates the transmission line characteristics of the optical transmission line 52 on the basis of the transmission line information of the optical transmission line 52 stored in the internal storage area. The transmission line design unit 42e may calculate approximate transmission line characteristics End-To-End on the basis of the transmission line characteristics of the optical transmission line 51 transmitted by the control units 12fX and 12fY, the transmission line characteristics of the optical transmission line 53, and the transmission line characteristics of the optical transmission line 52 calculated on the basis of the transmission line information of the optical transmission line 52. Instead of calculating the transmission line characteristics of the optical transmission line 52 on the basis of the transmission line information of the optical transmission line 52, the transmission line design unit 42e may calculate the transmission line characteristics of the optical transmission line 52 in advance on the basis of the transmission line information of the optical transmission line 52, store the calculated transmission line characteristics of the optical transmission line 52 in advance in the internal storage area, and read the transmission line characteristics of the optical transmission line 52 from the internal storage area instead of the processing of calculating the transmission line characteristics of the optical transmission line 52.

In the first to fourth embodiments and other configuration examples of each of the embodiments, the following configuration may be employed. For example, the connection information generation units 38, 38a, and 38aX included in the connection node devices 1, 1a, 1b, 1c, 1d, 1e, and 1fX calculate the transmission line information of the optical transmission line 51 a plurality of times. In the fourth embodiment, the connection information generation unit 38aY included in the connection node device 1fY further calculates the transmission line information of the optical transmission line 53 a plurality of times. The control unit 12 and the transmission line design units 42, 42a, 42b, 42c, 42d, and 42e acquire all the transmission line information calculated a plurality of times as described above by the connection information generation units 38, 38a, 38aX, and 38aY. The control unit 12 and the transmission line design units 42, 42a, 42b, 42c, 42d, and 42e calculate a plurality of transmission line characteristics corresponding to each of the plurality of pieces of acquired transmission line information, and specify a plurality of transmission modes corresponding to each of the plurality of transmission line characteristics on the basis of each of the plurality of calculated transmission line characteristics. The control unit 12 and the transmission line design units 42, 42a, 42b, 42c, 42d, and 42e may select one transmission mode by majority decision among the plurality of specified transmission modes, that is, may select the transmission mode of the largest number of types among the plurality of types of transmission modes, and may set the selected transmission mode as the final transmission mode.

In the first to fourth embodiments and other configuration examples of each of the embodiments described above, in a case of the connection node devices 1, 1a, 1c, 1e, 1fX, and 1fY, for example, a wavelength variable light source that is similar to the wavelength variable light source 25aX and is a wavelength variable light source in which the wavelength of continuous light to be generated is predetermined as the basic wavelength may be applied instead of the single-wavelength light sources 36, 36X, and 36Y included in the connection information processing units 13, 13a, 13aX, and 13aY, or at timings when the connection information processing units 13, 13a, 13aX, and 13aY are included in the connection node devices 1, 1a, 1b, 1c, 1d, 1e, 1fX, and 1fY, the control units 12, 12a, 12b, 12c, 12e, 12fX, and 12fY of the connection node devices 1, 1a, 1b, 1c, 1e, 1fX, and 1fY may output a wavelength designation signal designating the basic wavelength to the wavelength variable light source, and set the wavelength of the wavelength variable light source to the basic wavelength. Similarly, instead of the single-wavelength light sources 25X, 25X-1 to 25X-m, 25Y, and 25Y-1 to 25Y-n included in the optical transmission/reception unit 21X, 21X-1 to 21X-m, 21Y, and 21Y-1 to 21Y-n, a wavelength variable light source that is similar to the wavelength variable light source 25aX and is a wavelength variable light source in which the wavelength of continuous light to be generated is predetermined as the basic wavelength may be applied, or at timings the optical transmission/reception units 21X, 21X-1 to 21X-m, 21Y, and 21Y-1 to 21Y-n are included in the optical communication devices 2X, 2X-1 to 2X-m, 2Y, 2cY, and 2Y-1 to 2Y-n, the control units 20X, 20X-1 to 20X-m, 20Y, 20aY, and 20Y-1 to 20Y-n of the optical communication devices 2X, 2X-1 to 2X-m, 2Y, 2Y-1 to 20Y-n may output a wavelength designation signal designating the basic wavelength to the wavelength variable light source via the control units 71X, 71X-1 to 71X-m, 71Y, and 71Y-1 to 71Y-n, and set the wavelength of the wavelength variable light source to the basic wavelength.

In the first to fourth embodiments and other configuration examples of each of the embodiments, the control units 71X, 71X-1 to 71X-m, 71aX-1 to 71aX-m, 71aX, and 71aY generate connection request data. On the other hand, the control units 20X, 20aX, 20X-1 to 20X-m, and 20Y may store address information added to the optical transmission/reception units 21X, 21X-1 to 21X-m, 21aX-1 to 21aX-m, 21aX, and 21aY connected thereto in an internal storage area, generate connection request data instead of the connection request instruction signal, and output the generated connection request data to the control units 71X, 71X-1 to 71X-m, 71aX-1 to 71aX-m, 71aX, and 71aY included in the optical transmission/reception units 21X, 21X-1 to 21X-m, 21aX-1 to 21aX-m, 21aX, and 21aY serving as connection sources. In this case, the control units 71X, 71X-1 to 71X-m, 71aX-1 to 71aX-m, 71aX, and 71aY only need to capture the connection request data output from the control units 20X, 20aX, 20X-1 to 20X-m, and 20Y and output the captured connection request data, and thus there is no need to generate the connection request data.

In the first to fourth embodiments and other configuration examples of each of the embodiments described above, a configuration in which the connection information generation units 38, 38a, 38aX, and 38aY are mounted may be as follows. For example, in a case of the connection node device 1 of the first embodiment, it is assumed that the IF unit 31, the optical reception unit 33, the optical transmission unit 35, and the digital signal processing unit 32 of the connection information processing unit 13 are provided as one hardware package by being inserted into the main body of the connection node device 1. In this case, the connection information generation unit 38 and the control unit 12 may be functional units generated by execution of a computer program in a central processing unit (CPU) of the main body of the connection node device 1. A hardware package including the IF unit 31, the optical reception unit 33, the optical transmission unit 35, and the digital signal processing unit 32 may further include a CPU, a functional unit of the connection information generation unit 38 may be generated by executing a computer program in the CPU of the hardware package, and a functional unit of the control unit 12 may be generated by executing a computer program in the CPU of the main body of the connection node device 1. Instead of implementing the connection information generation units 38, 38a, 38aX, and 38aY as software as described above, an optical time domain reflectometer (OTDR) may be provided as the connection information generation unit 38 in a hardware package, and the transmission line information may be acquired by measurement by the OTDR.

The connection information generation units 38, 38a, 38aX, and 38aY may be provided outside the connection information processing units 13, 13a, 13b, 13aX, and 13aY, and in this case, the connection information generation units 38, 38a, 38aX, and 38aY and the control units 12, 12a, 12b, 12c, 12d, 12e, 12fX, and 12fY may be integrally configured. A part of the processing of the connection information generation units 38, 38a, 38aX, and 38aY may be performed by any one or both of the digital signal processing units 32, 32a, 32aX, and 32aY or the control units 12, 12a, 12b, 12c, 12d, 12e, 12fX, and 12fY. A configuration may be employed in which a part of the processing of the connection information generation units 38, 38a, 38aX, and 38aY is performed by the digital signal processing units 32, 32a, 32aX, and 32aY, and the remaining processing is performed by the control units 12, 12a, 12b, 12c, 12d, 12e, 12fX, and 12fY, so as not to include the connection information generation units 38, 38a, 38aX, and 38aY. The processing of the connection information generation units 38, 38a, 38aX, and 38aY may be performed by the digital signal processing units 32, 32a, 32aX, and 32aY, and the connection information generation units 38, 38a, 38aX, and 38aY may not be included.

In the first to fourth embodiments described above, for example, when a failure occurs that the optical transmission lines 51 and 51-1 to 51-m are disconnected and the optical transmission/reception units 21X, 21X-1 to 21X-m, 21aX-1 to 21aX-m, and 21aX cannot generate a path for transmitting and receiving an optical signal, the location causing the failure may be separated on the basis of a transmission line loss measurement result performed by the test light transmitted from the connection node device 1, 1a, 1b, 1c, 1d, 1e, and 1fX side.

### (Fifth Embodiment)

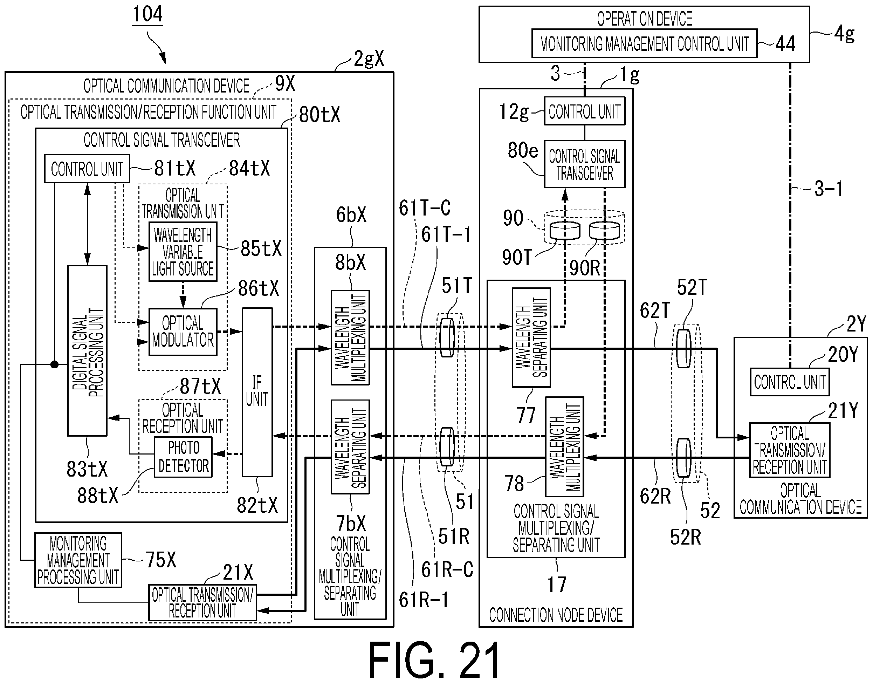

The fifth and subsequent embodiments are embodiments that solve the above-described "problem related to monitoring management". Fig. 21 is a block diagram illustrating a configuration of an optical transmission system 104 of a fifth embodiment. In the fifth embodiment, the same components as those described in each of the above embodiments are denoted by the same reference signs, and different components will be described below. In Fig. 21, a thick dotted line indicates a path of a wavelength of light of the control signal, and a thick solid line indicates a path of a wavelength of light of the main signal.

The optical transmission system 104 includes a connection node device 1g, an optical communication device 2gX, the optical communication device 2Y, an operation device 4g, the optical transmission line 51, the optical transmission line 52, and the connection lines 3 and 3-1. The optical communication device 2gX is, for example, a transmission/reception device that transmits and receives an optical signal such as a transponder used by a user, and the optical communication device 2Y is, for example, an optical transmission device owned by a communication carrier, which is a node device in a carrier network, or a white box type transponder owned by a communication carrier or a data center company. Each of the optical transmission/reception unit 21X included in the optical communication device 2gX and the optical transmission/reception unit 21Y included in the optical communication device 2Y is a functional unit that transmits and receives a main signal, and each configuration is the configuration described in the first and second embodiments.

The optical transmission line 51 is, for example, a dark fiber, includes an optical fiber 51T and an optical fiber 51R, and connects the optical communication device 2gX and the connection node device 1g. The optical transmission line 52 includes the optical fiber 52T and the optical fiber 52R, and connects the optical communication device 2Y and the connection node device 1g. The connection line 3 connects the connection node device 1g and the operation device 4g. The connection line 3-1 connects the optical communication device 2Y and the operation device 4g.

The connection node device 1g, the optical transmission line 52, and the optical communication device 2Y are components of a communication network on the operator side such as a communication carrier, what is called a carrier network. However, as described above, the connection node device 1g may be installed by a person other than a communication carrier such as a data center company. As described above, the optical transmission line 51 is, for example, a dark fiber, and may be provided by a telecommunications carrier that is an operator of the carrier network, or may be provided to a user by being installed by a person other than the telecommunications carrier, for example, a data center company. Thus, the portion of the dark fiber is not included in what is called a carrier network. Therefore, the optical communication device 2gX connected to the optical transmission line 51, which is a dark fiber, is not a target of monitoring or management for the communication carrier, and when the user of the optical communication device 2gX desires monitoring or management by the communication carrier, another communication path connected to the operation device 4g is secured, the operation device 4g and the optical communication device 2gX are connected, and the communication carrier is requested to monitor or manage the optical communication device 2gX. Thus, an additional cost for setting another communication path is generated for the user. Hereinafter, a method of setting the optical communication device 2gX as a target of monitoring and management by the communication carrier without installing such another communication path will be described.

The optical communication device 2gX includes the optical transmission/reception unit 21X, a control signal multiplexing/separating unit 6bX, a control signal transceiver 80tX, and a monitoring management processing unit 75X. The monitoring management processing unit 75X captures an electrical control signal output from the control signal transceiver 80tX, and performs processing related to monitoring and management according to the type of the captured control signal and data included in the control signal. When transmitting the control signal to the operation device 4g in processing related to monitoring and management, the monitoring management processing unit 75X generates an electrical control signal and outputs the electrical control signal to the control signal transceiver 80tX.

The control signal transceiver 80tX converts the electrical control signal generated by the monitoring management processing unit 75X into an optical control signal and outputs the optical control signal to the control signal multiplexing/separating unit 6bX. The control signal transceiver 80tX converts the optical control signal output from the control signal multiplexing/separating unit 6bX into an electrical control signal and outputs the electrical control signal to the monitoring management processing unit 75X. The control signal transceiver 80tX includes a control unit 81tX, an IF unit 82tX, a digital signal processing unit 83tX, an optical transmission unit 84tX, and an optical reception unit 87tX. The optical transmission unit 84tX includes a wavelength variable light source 85tX and an optical modulator 86tX. The optical reception unit 87tX includes a photodetector 88tX. The control unit 81tX and the digital signal processing unit 83tX are connected to the monitoring management processing unit 75X via an electric line. The IF unit 82tX is connected to the control signal multiplexing/separating unit 6bX via an internal optical fiber, which is not illustrated, of the optical communication device 2gX.

Reference signs are changed for convenience of description in the fifth embodiment, but each of the control unit 81tX, the IF unit 82tX, the digital signal processing unit 83tX, the wavelength variable light source 85tX, the optical modulator 86tX, and the photodetector 88tX included in the control signal transceiver 80tX has the same configuration as the control unit 71aX-1, the IF unit 22X-1, the digital signal processing unit 23aX-1, the wavelength variable light source 25aX-1, the optical modulator 26X-1, and the photodetector 28X-1, which are functional units included in the optical transmission/reception unit 21aX-1 described in the third embodiment and have the same names except for the reference signs.

The control signal multiplexing/separating unit 6bX is connected to the control signal transceiver 80tX and the optical transmission/reception unit 21X via an internal optical fiber, which is not illustrated, of the optical communication device 2gX, and is further connected to the optical transmission line 51. The control signal multiplexing/separating unit 6bX includes a wavelength multiplexing unit 8bX and a wavelength separating unit 7bX. The wavelength multiplexing unit 8bX wavelength-multiplexes the optical signal of the control signal output from the control signal transceiver 80tX and the optical signal of the main signal output from the optical transmission/reception unit 21X. The wavelength multiplexing unit 8bX sends the wavelength-multiplexed optical signal to the optical fiber 51T of the optical transmission line 51. The wavelength separating unit 7bX wavelength-separates the wavelength-multiplexed optical signal sent by the optical fiber 51R of the optical transmission line 51 into an optical signal of a control signal and an optical signal of a main signal. The wavelength separating unit 7bX outputs the separated optical signal of the control signal to the control signal transceiver 80tX, and outputs the separated optical signal of the main signal to the optical transmission/reception unit 21X.

The connection node device 1g includes a control unit 12g, a control signal multiplexing/separating unit 17, a control signal transceiver 80e, and a control signal internal optical line 90. The control signal internal optical line 90 is an optical line including an optical fiber 90T and an optical fiber 90R. The control unit 12g is connected to the connection line 3 and, upon receiving data transmitted by the operation device 4g via the connection line 3, generates an electrical control signal corresponding to the type of the received data, and outputs the generated electrical control signal to the control signal transceiver 80e. Upon capturing the electrical control signal output from the control signal transceiver 80e, the control unit 12g transmits data included in the control signal captured via the connection line 3 to the operation device 4g.

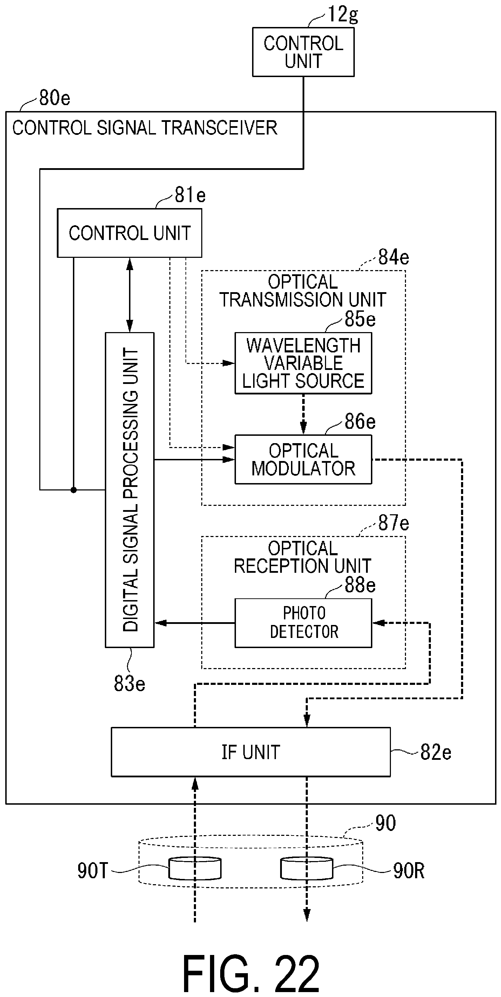

As illustrated in Fig. 22, the control signal transceiver 80e includes a control unit 81e, an IF unit 82e, a digital signal processing unit 83e, an optical transmission unit 84e, and an optical reception unit 87e. The optical transmission unit 84e includes a wavelength variable light source 85e and an optical modulator 86e. The optical reception unit 87e includes a photodetector 88e. The control signal transceiver 80e and the control signal transceiver 80tX included in the optical communication device 2gX have the same configuration. More specifically, the control unit 81e, the **IF** unit 82e, the digital signal processing unit 83e, the optical transmission unit 84e, and the optical reception unit 87e have the same configurations as the functional units included in the control signal transceiver 80tX, that is, the control unit 81tX, the IF unit 82tX, the digital signal processing unit 83tX, the optical transmission unit 84tX, and the optical reception unit 87tX, in which the names of the functional units excluding the reference signs are the same. In the control signal transceiver 80e, the control unit 81e and the digital signal processing unit 83e are connected to the control unit 12g via an electric line. The IF unit 82e is connected to the control signal internal optical line 90.

The control signal transceiver 80e converts an electrical control signal generated by the control unit 12g into an optical control signal, and outputs the converted optical control signal to the control signal multiplexing/separating unit 17 via the optical fiber 90R of the control signal internal optical line 90. The control signal transceiver 80e captures the optical control signal output from the control signal multiplexing/separating unit 17 via the optical fiber 90T of the control signal internal optical line 90, converts the captured optical control signal into an electrical control signal, and outputs the electrical control signal to the control unit 12g.

The control signal multiplexing/separating unit 17 is connected to the optical transmission line 51, the optical transmission line 52, and the control signal internal optical line 90. The control signal multiplexing/separating unit 17 includes a wavelength multiplexing unit 78 and a wavelength separating unit 77. The wavelength multiplexing unit 78 is connected to the optical fiber 52R of the optical transmission line 52 at an input, is connected to the IF unit 82e of the control signal transceiver 80e via the optical fiber 90R, and is connected to the optical fiber 51R of the optical transmission line 51 at an output. The wavelength separating unit 77 is connected to the optical fiber 51T of the optical transmission line 51 at an input, is connected to the optical fiber 52T of the optical transmission line 52 at an output, and is connected to the IF unit 82e of the control signal transceiver 80e via the optical fiber 90T.

The wavelength separating unit 77 wavelength-separates a wavelength-multiplexed optical signal transmitted by the optical fiber 51T of the optical transmission line 51 into an optical signal of a control signal and an optical signal of a main signal. As illustrated in Fig. 21, it is assumed that a wavelength path 61T-C for transmitting the optical signal of the control signal and the wavelength path 61T-1 for transmitting the optical signal of the main signal are wavelength-multiplexed in the optical fiber 51T of the optical transmission line 51. In this case, the wavelength separating unit 77 separates the wavelength-multiplexed optical signal into the optical signal of the control signal and the optical signal of the main signal by wavelength-separating the wavelength path 61T-C and the wavelength path 61T-1. The wavelength separating unit 77 outputs the separated optical signal of the control signal to the control signal transceiver 80e via the optical fiber 90T of the control signal internal optical line 90. The wavelength separating unit 7b transmits the separated optical signal of the main signal to the optical transmission/reception unit 21Y of the optical communication device 2Y via the optical fiber 52T of the optical transmission line 52.

The wavelength multiplexing unit 78 wavelength-multiplexes the optical signal of the control signal sent from the control signal transceiver 80e that is captured via the optical fiber 90R of the control signal internal optical line 90 and the optical signal of the main signal sent from the optical transmission/reception unit 21Y received via the optical fiber 52R. The wavelength multiplexing unit 78 sends the wavelength-multiplexed optical signal to the optical fiber 51R of the optical transmission line 51. Thus, as illustrated in Fig. 21, in the optical fiber 51R, a wavelength path 61R-C for transmitting the optical signal of the control signal and the wavelength path 61R-1 for transmitting the optical signal of the main signal are brought into a wavelength-multiplexed state. Note that, in Fig. 21, the wavelength path 61T-1 of the optical transmission line 51 and a wavelength path 62T of the optical transmission line 52 are continuous wavelength paths passing through the wavelength separating unit 77, and a wavelength path 62R of the optical transmission line 52 and the wavelength path 61R-1 of the optical transmission line 51 are continuous wavelength paths passing through the wavelength multiplexing unit 78.

Note that the wavelength separating unit 7bX and the wavelength multiplexing unit 8bX of the control signal multiplexing/separating unit 6bX of the optical communication device 2gX, and the wavelength separating unit 77 and the wavelength multiplexing unit 78 of the connection node device 1g described above include, for example, a coupler of 3 dB or the like, a wavelength filter, an optical splitter, an arrayed-waveguide grating (AWG), couplers of C-bands, and a C-band coupler and an O-band coupler.

The operation device 4g includes a monitoring management control unit 44. The monitoring management control unit 44 performs monitoring and management processing on the optical communication device 2gX, the optical communication device 2Y, and the optical transmission lines 51 and 52 in response to an instruction from an operator who operates the operation device 4g. For example, the monitoring management control unit 44 performs processing of acquiring setting information including address information, configuration information, and the like of the optical transmission/reception unit 21 set in the optical transmission/reception unit 21X of the optical communication device 2gX.

### (Assumed Configuration of Actual Operation of Fifth Embodiment)

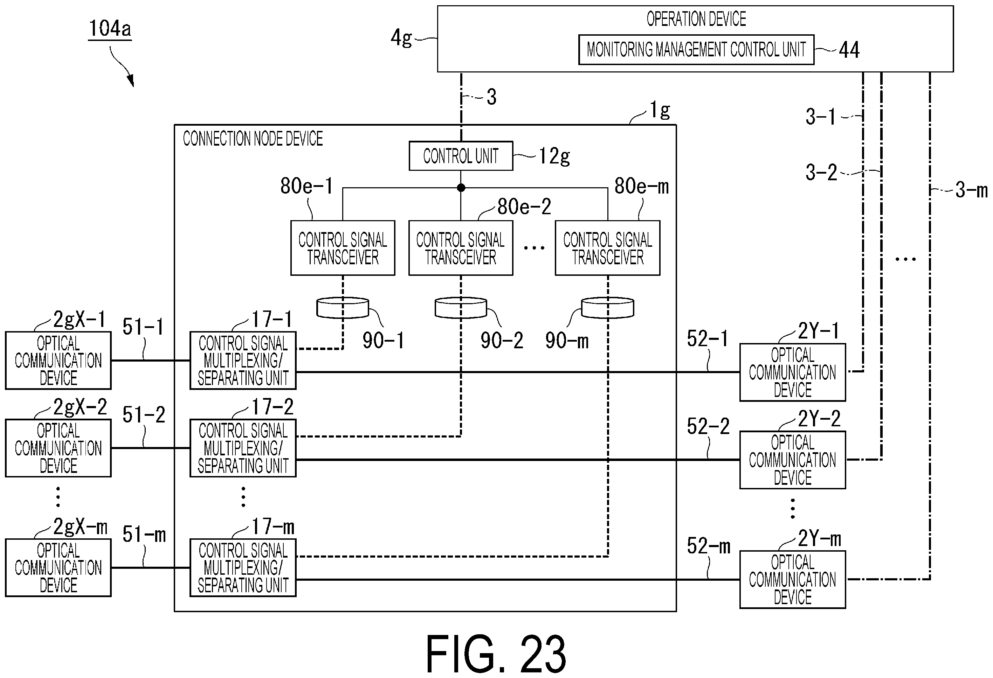

In a case where the optical transmission system 104 of Fig. 21 is actually operated, the connection node device 1g accommodates a plurality of optical communication devices 2gX. Fig. 23 is a block diagram illustrating a configuration in a case where the optical transmission system 104 is applied to such an actual operation scene, and the configuration is hereinafter referred to as an optical transmission system 104a. The optical transmission system 104a includes the connection node device 1g, a plurality of optical communication devices 2gX-1 to 2gX-m, a plurality of optical communication devices 2Y-1 to 2Y-m, the operation device 4g, a plurality of optical transmission lines 51-1 to 51-m, a plurality of optical transmission lines 52 to 52-m, the connection line 3, and a plurality of connection lines 3-1 to 3-m.

Each of the plurality of optical communication devices 2gX-1 to 2gX-m has the same configuration as the optical communication device 2gX. Each of the plurality of optical communication devices 2Y-1 to 2Y-m has the same configuration as the optical communication device 2Y. Each of the plurality of optical communication devices 2Y-1 to 2Y-m is connected to the operation device 4g by the connection line 3-1 to 3-m connected thereto. The connection node device 1g included in the optical transmission system 104a is connected to each of the plurality of optical communication devices 2gX-1 to 2gX-m and each of the plurality of optical communication devices 2Y-1 to 2Y-m. Thus, the connection node device 1g includes m control signal transceivers 80e-1 to 80e-m and m control signal multiplexing/separating units 17-1 to 17-m corresponding to the number of optical communication devices 2gX-1 to 2gX-m. Each of the control signal transceivers 80e-1 to 80e-m has the same configuration as the control signal transceiver 80e. Each of the control signal multiplexing/separating units 17-1 to 17-m has the same configuration as the control signal multiplexing/separating unit 17.

Each of the optical communication devices 2gX-1 to 2gX-m and each of the control signal multiplexing/separating units 17-1 to 17-m are connected by the optical transmission lines 51-1 to 51-m. Each of the control signal multiplexing/separating units 17-1 to 17-m and each of the optical communication devices 2Y-1 to 2Y-m are connected by the optical transmission lines 52 to 52-m. Each of the optical transmission lines 51-1 to 51-m includes two optical fibers as does the optical transmission line 51, and each of the optical transmission lines 52 to 52-m includes two optical fibers as does the optical transmission line 52.

Each of the control signal transceivers 80e-1 to 80e-m and each of the control signal multiplexing/separating units 17-1 to 17-m are connected by control signal internal optical lines 90-1 to 90-m. Each of the control signal internal optical lines 90-1 to 90-m includes two optical fibers similarly to the control signal internal optical line 90. The control unit 12g included in the connection node device 1g is connected to each of the control signal transceivers 80e-1 to 80e-m via an electric line.

Hereinafter, when functional units of the optical communication devices 2gX-1 to 2gX-m corresponding to functional units included in the optical communication device 2gX are illustrated, when functional units of the optical communication devices 2Y-1 to 2Y-m corresponding to functional units included in the optical communication device 2Y are illustrated, when functional units of the control signal transceivers 80e-1 to 80e-m corresponding to functional units included in the control signal transceiver 80e are illustrated, when functional units of the control signal multiplexing/separating units 17-1 to 17-m corresponding to functional units included in the control signal multiplexing/separating unit 17 are illustrated, and when the optical fibers of the control signal internal optical lines 90-1 to 90-m corresponding to the optical fibers 90T and 90R of the control signal internal optical line 90 are illustrated, they are illustrated by adding a branch number of a reference sign to be indicated to the original reference sign. For example, a functional unit of the optical communication device 2gX-1 corresponding to the monitoring management processing unit 75X included in the optical communication device 2gX is indicated as a monitoring management processing unit 75X-1.

**In** the fifth embodiment, unlike the first to fourth embodiments described above, a wavelength path of light used by each of the optical communication devices 2gX-1 to 2gX-m and each of the optical communication devices 2Y-1 to bY-m to transmit and receive the main signal is manually generated. For example, an operator of a communication carrier manually performs processing performed by the control unit 12 of the connection node device 1 of the first embodiment or the path detection unit 41 and the transmission line design unit 42 of the operation device 4 of the second embodiment, and generates configuration information indicating an optimum transmission mode in each of m combinations of a combination of the optical transmission lines 51-1 and 52-1, a combination of the optical transmission lines 51-2 and 52-2,..., and a combination of the optical transmission lines 51-m and 52-m. The operator generates setting information for setting the wavelength path of the main signal between each of the optical communication devices 2gX-1 to 2gX-m and each of the optical communication devices 2Y-1 to 2Y-m on the basis of the generated configuration information.

For example, the operator connects a terminal device for management to each of the control units 71X-1 to 71X-m included in the optical transmission/reception units 21X-1 to 21X-m of the optical communication devices 2gX-1 to 2gX-m. The operator operates the terminal device for management to write, to each of the internal storage areas of the control units 71X-1 to 71X-m, the setting information corresponding to each of them, and operates the optical transmission/reception units 21X-1 to 21X-m according to the written setting information. For example, the operator operates the monitoring management control unit 44 of the operation device 4g to write, to each of the internal storage areas of the control units 71Y-1 to 71Y-m included in the optical transmission/reception units 21Y-1 to 21Y-m of the optical communication devices 2Y-1 to 2Y-m, the setting information corresponding to each of them, and performs an operation to operate the optical transmission/reception units 21Y-1 to 21Y-m according to the written setting information. Thus, a path of a wavelength of light is generated between each of the optical transmission/reception units 21X-1 to 21X-m and each of the optical transmission/reception units 21Y-1 to 21Y-m, and a wavelength path of the main signal is opened between each of the optical transmission/reception units 21X-1 to 21X-m and each of the optical transmission/reception units 21Y-1 to 21Y-m.

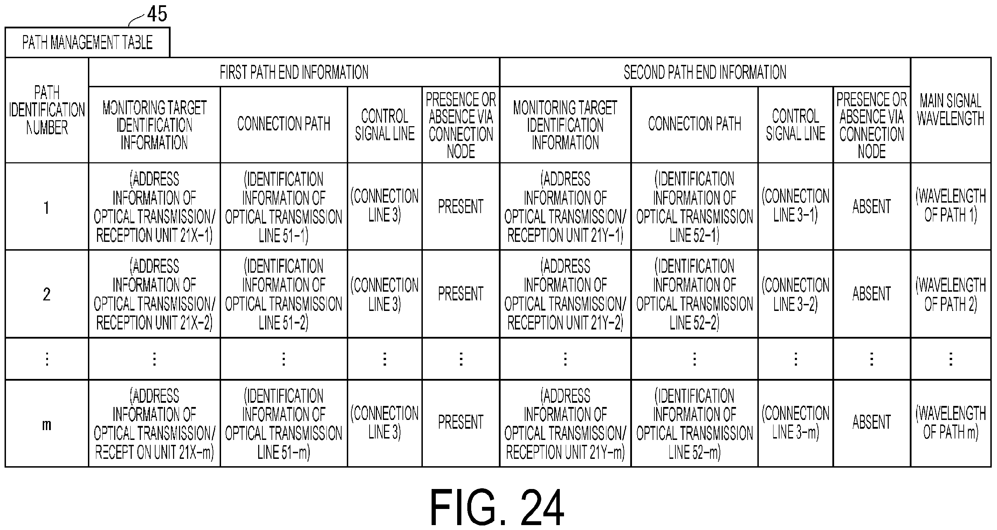

The operator performs an operation of generating a path management table 45 indicating the generated wavelength path in an internal storage area of the monitoring management control unit 44 of the operation device 4g on the basis of the setting information used to generate the wavelength path of the main signal, and the like. The path management table 45 is, for example, a table in a data format having items of "path identification number", "first path end information", "second path end information", and "main signal wavelength" illustrated in Fig. 24. In the "path identification number", a path identification number added to uniquely specify the generated wavelength path of the main signal is written. Here, an example is illustrated in which path identification numbers "1", "2", ..., and "m" are added to the wavelength paths of the main signals generated in the optical transmission lines 51-1 and 52-1, the wavelength paths of the main signals generated in the optical transmission lines 51-2 and 52-2, and the wavelength paths of the main signals ... generated in the optical transmission lines 51-m and 52-m, respectively. In the item of "main signal wavelength" in the end, the wavelength value of the wavelength path of the main signal corresponding to the path identification number in the corresponding item of "path identification number" is written.

Each of the items of "first path end information" and "second path end information" has the same sub-items, that is, items of "monitoring target identification information", "connection path", "control signal line", and "presence or absence via connection node". In the "monitoring target identification information", address information for specifying the optical transmission/reception units 21X-1 to 21X-m and 21Y-1 to 21Y-m connected to one end of the wavelength path is written. In the item of "connection path", identification information for specifying the optical transmission lines 51-1 to 51-m and 52-1 to 52-m directly connected to the optical transmission/reception units 21X-1 to 21X-m and 21Y-1 to 21Y-m indicated by the address information of the corresponding item of "monitoring target identification information" is written.

In the item of "control signal line", identification information for specifying the connection lines 3 and 3-1 to 3-m for accessing the optical transmission/reception units 21X-1 to 21X-m and 21Y-1 to 21Y-m corresponding to the address information written in the corresponding item of "monitoring target identification information" is written. In a case of the optical transmission/reception units 21X-1 to 21X-m, since the operation device 4g accesses via the connection node device 1g, identification information for specifying the connection line 3 connecting the operation device 4g and the connection node device 1g is written.

On the other hand, in a case of the optical transmission/reception units 21Y-1 to 21Y-m, since the operation device 4g can directly access the connection lines 3-1 to 3-m, identification information for specifying each of the connection lines 3-1 to 3-m is written. Note that identification information for uniquely specifying each of the connection lines 3, 3-1, 3-2, ... is added to each of all the connection lines 3, 3-1, 3-2, ... in advance. In the item of "presence or absence via connection node", "present" is written in a case where access can be made via the connection node device 1g, and "absent" is written in a case where access can be made without going via the connection node device 1g.

Note that Fig. 24 illustrates an example in which the data on the user's optical communication devices 2gX-1 to 2gX-m is written in the item of "first path end information" and the data on the communication carrier-side optical communication devices 2Y-1 to 2Y-m is written in the item of" second path end information", but the opposite pattern, that is, the data on the communication carrier-side optical communication devices 2Y-1 to 2Y-m may be written in the item of "first path end information" and the information regarding the user's optical communication devices 2gX-1 to 2gX-m may be written in the item of" second path end information ".

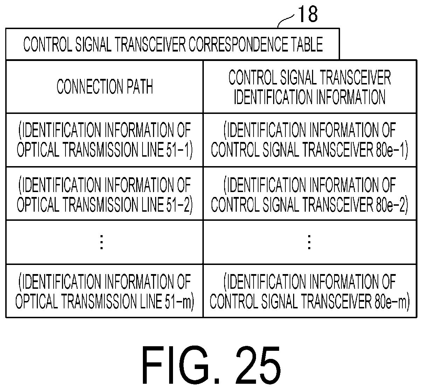

The operator performs an operation to generate a control signal transceiver correspondence table 18 indicating which of the optical transmission lines 51-1 to 51-m each of the control signal transceivers 80e-1 to 80e-m is provided in an internal storage area of the control unit 12g of the connection node device 1g on the basis of the configuration of the connection node device 1g. As illustrated in Fig. 25, the control signal transceiver correspondence table 18 is a table in a data format having items of "connection path" and "control signal transceiver identification information". In the item of "control signal transceiver identification information", identification information for specifying the control signal transceivers 80e-1 to 80e-m is written. Note that the identification information for uniquely specifying each of the control signal transceivers 80e-1 to 80e-m is added in advance to each of the control signal transceivers 80e-1 to 80e-m. In the item of "connection path", the identification information for specifying the optical transmission lines 51-1 to 51-m and 52-1 to 52-m corresponding to the control signal transceivers 80e-1 to 80e-m indicated by the identification information of the corresponding item of "control signal transceiver identification information" is written.

### (Processing by Optical Transmission System of Fifth Embodiment)

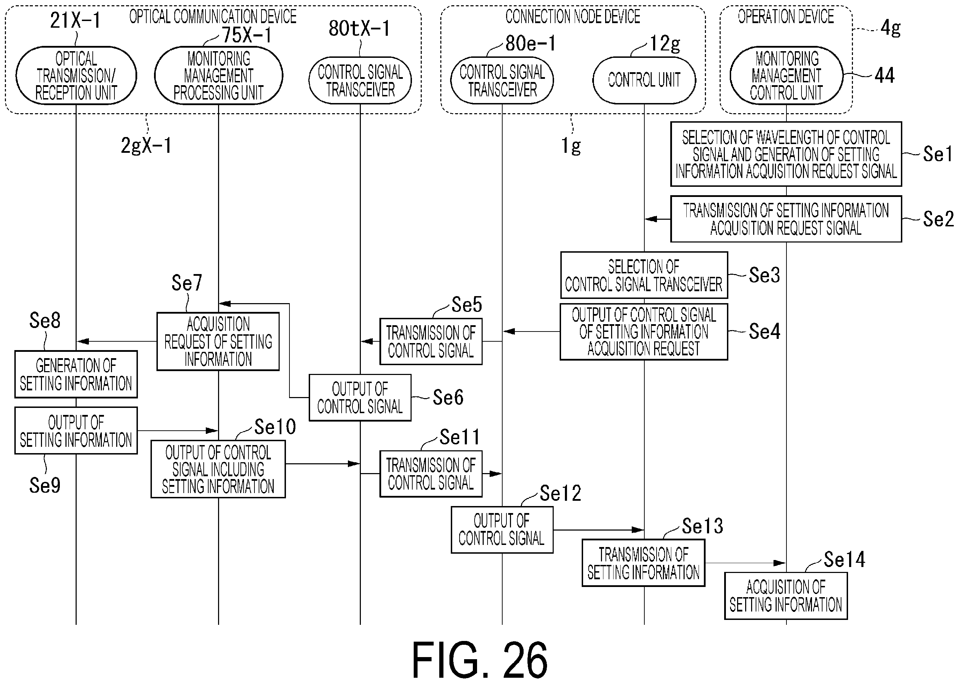

An example of processing performed by the optical transmission system 104a will be described with reference to a sequence diagram illustrated in Fig. 26. As a precondition for starting the processing illustrated in the sequence diagram illustrated in Fig. 26, it is assumed that the optical transmission system 104a is in the following state. One wavelength path of the main signal is generated between each of the optical transmission/reception units 21X-1 to 21X-m of the optical communication devices 2gX-1 to 2gX-m and each of the optical transmission/reception units 21Y-1 to 21Y-m of the optical communication devices 2Y-1 to 2Y-m. It is an operating state where transmission and reception of the optical signal of the main signal are performed by the wavelength path generated in each of a combination of the optical transmission/reception units 21X-1 and 21Y-1, a combination of the optical transmission/reception units 21X-2 and 21Y-2, ..., a combination of the optical transmission/reception units 21X-m and 21Y-m. In the internal storage area of the monitoring management control unit 44, the path management table 45 illustrated in Fig. 24 is generated by operation of the operator. In the internal storage area of the control unit 12g of the connection node device 1g, the control signal transceiver correspondence table 18 illustrated in Fig. 25 is generated by operation of the operator.

For example, processing assuming a case where the operator acquires the setting information set in the optical transmission/reception unit 21X-1 in order to confirm the transmission mode and the like of the digital signal processing unit 23X-1 of the optical transmission/reception unit 21X-1 of the optical communication device 2gX-1 connected to the connection node device 1g will be described with reference to the sequence diagram of Fig. 26.

The operator performs an operation of generating and transmitting a setting information acquisition request signal in which the address information of the optical transmission/reception unit 21X-1 is designated on the monitoring management control unit 44 of the operation device 4g. Upon receiving this operation, the monitoring management control unit 44 detects a record of a path identification number in which the address information of the item of "monitoring target identification information" matches the designated address information of the optical transmission/reception unit 21X-1 by referring to the path management table 45 stored in the internal storage area. As illustrated in Fig. 24, since the address information of the optical transmission/reception unit 21X-1 exists in the item of "monitoring target identification information" as a sub-item of the "first path end information" of the record of the path identification number "1", the monitoring management control unit 44 detects the record of the path identification number "1".

The monitoring management control unit 44 refers to the item "presence or absence via connection node" as a sub-item of the "first path end information" on the side where the address information of the optical transmission/reception unit 21X-1 is included in the item of "monitoring target identification information" in the detected record of the path identification number "1". When the item of "presence or absence via connection node" is "present", the monitoring management control unit 44 performs processing of selecting a wavelength value for transmitting and receiving a control signal since the connection node device 1g is present as a transmission destination of the setting information acquisition request signal. The monitoring management control unit 44 refers to the wavelength value of the wavelength path of the main signal in the item of "main signal wavelength" of the detected record of the path identification number "1", and selects a wavelength value different from the referred value as the wavelength value of the control signal.

The monitoring management control unit 44 reads the identification information for specifying the optical transmission line 51-1 written in the item of "connection path" as a sub-item of the "first path end information" of the detected record of the path identification number "1", and generates the setting information acquisition request signal including the read identification information for specifying the optical transmission line 51-1 and the selected wavelength value of the control signal (step Se1). The monitoring management control unit 44 transmits the setting information acquisition request signal generated via the connection line 3 indicated in the item of "control signal line" as a sub-item of the "first path end information" of the detected record of the path identification number "1" to the connection node device 1g (step Se2).

The control unit 12g of the connection node device 1g receives the setting information acquisition request signal transmitted by the monitoring management control unit 44 via the connection line 3. The control unit 12g reads the identification information for specifying the optical transmission line 51-1 included in the received setting information acquisition request signal. The control unit 12g refers to the control signal transceiver correspondence table 18 stored in the internal storage area, and detects a record in which the identification information of the item of "connection path" matches the read identification information for specifying the optical transmission line 51-1. The control unit 12g selects the control signal transceiver 80e-1 to 80e-m corresponding to the identification information written in the item of "control signal transceiver identification information" of the detected record as the control signal transceiver 80e-1 to 80e-m that transmits the control signal. As illustrated in Fig. 25, the identification information for specifying the optical transmission line 51-1 is associated with the identification information of the control signal transceiver 80e-1. Thus, here, the control unit 12g selects the control signal transceiver 80e-1 (step Se3).

The control unit 12g reads the wavelength value of the control signal included in the received setting information acquisition request signal, and outputs the read wavelength value of the control signal to the control unit 81e-1 of the selected control signal transceiver 80e-1. Upon receiving the wavelength value of the control signal from the control unit 12g, the control unit 81e-1 outputs a wavelength designation signal that designates the received wavelength value to the wavelength variable light source 85e-1. Thus, the wavelength variable light source 85e-1 generates and outputs continuous light having a wavelength value different from the wavelength value of the optical signal of the main signal transmitted by the optical fiber 51T of the optical transmission line 51, which is the wavelength value of the control signal selected by the monitoring management control unit 44.

The control unit 12g generates an electrical control signal of the type of the setting information acquisition request including the information included in the received setting information acquisition request signal. The control unit 12g outputs the generated electrical control signal to the digital signal processing unit 83e-1 of the selected control signal transceiver 80e-1 (step Se4).

Upon capturing the electrical control signal output from the control unit 12g, the digital signal processing unit 83e-1 of the control signal transceiver 80e-1 outputs the captured electrical control signal to the optical modulator 86e-1. The optical modulator 86e-1 optically modulates the continuous light having the wavelength of the control signal output from the wavelength variable light source 85e-1 with the captured electrical control signal. The optical modulator 86e-1 outputs the optical signal of the control signal generated by the optical modulation to the IF unit 82e-1. The IF unit 82e-1 captures the optical signal of the control signal output from the optical modulator 86e-1. The IF unit 82e-1 outputs the captured optical signal of the control signal to the wavelength multiplexing unit 78-1 of the control signal multiplexing/separating unit 17-1 via the optical fiber 90R-1 of the control signal internal optical line 90-1.

The wavelength multiplexing unit 78-1 wavelength-multiplexes the optical signal of the control signal output from the IF unit 82e-1 and captured via the optical fiber 90R-1 and the optical signal of the main signal transmitted from the optical transmission/reception unit 21Y-1 of the optical communication device 2Y-1 and received via a wavelength path 62R-1 of the optical fiber 52R included in the optical transmission line 52. The wavelength multiplexing unit 78-1 sends the wavelength-multiplexed optical signal to the optical fiber 51R-1 of the optical transmission line 51-1.

The optical fiber 51R-1 transmits the wavelength-multiplexed optical signal sent from the wavelength multiplexing unit 78-1 to the wavelength separating unit 7bX-1 of the control signal multiplexing/separating unit 6bX-1 included in the optical communication device 2gX-1. The wavelength separating unit 7bX-1 wavelength-separates the wavelength-multiplexed optical signal transmitted by the optical fiber 51R-1 into the optical signal of the control signal and the optical signal of the main signal. The wavelength separating unit 7bX-1 outputs the separated optical signal of the control signal to the IF unit 80tX-1 of the control signal transceiver 82tX-1, and outputs the separated optical signal of the main signal to the optical transmission/reception unit 21X-1 (step Se5).

The IF unit 82tX-1 of the control signal transceiver 80tX-1 captures the optical signal of the control signal output from the wavelength separating unit 7bX-1, and outputs the captured optical signal of the control signal to the photodetector 88tX-1. The photodetector 88tX-1 receives the optical signal of the control signal output from the IF unit 82tX-1, and converts the received optical signal into an electrical control signal. The photodetector 88tX-1 outputs the control signal to the digital signal processing unit 83tX-1. The digital signal processing unit 83tX-1 captures the control signal output from the photodetector 88tX-1. The digital signal processing unit 83tX-1 outputs the captured control signal to the monitoring management processing unit 75X-1 (step Se6).

The monitoring management processing unit 75X-1 captures the control signal output from the digital signal processing unit 83tX-1. Since the type of the captured control signal is the type of the setting information acquisition request, the monitoring management processing unit 75X-1 outputs the setting information acquisition request signal to the control unit 71X-1 of the optical transmission/reception unit 21X-1 (step Se7). Upon receiving the setting information acquisition request signal from the monitoring management processing unit 75X-1, the control unit 71X-1 of the optical transmission/reception unit 21X-1 performs processing of acquiring the setting information as follows. That is, the control unit 71X-1 performs processing of collecting the information set in the optical transmission unit 24X-1 from the digital signal processing unit 23X-1 and the optical transmission unit 24X-1. The control unit 71X-1 generates, as setting information, information obtained by adding information such as address information of the optical transmission/reception unit 21X-1 stored in the internal storage area of itself to the information collected from the digital signal processing unit 23X-1 and the optical transmission unit 24X-1 (step Se8).

The control unit 71X-1 of the optical transmission/reception unit 21X-1 outputs the acquired setting information to the monitoring management processing unit 75X-1 (step Se9). The monitoring management processing unit 75X-1 captures the setting information output from the control unit 71X-1, and generates an electrical control signal including the captured setting information. The monitoring management processing unit 75X-1 reads the wavelength value of the control signal from the control signal captured in the processing of step Se7, and outputs the read wavelength value of the control signal to the control unit 81tX-1 of the control signal transceiver 80tX-1. Note that the processing in which the monitoring management processing unit 75X-1 outputs the wavelength value of the control signal to the control unit 81tX-1 of the control signal transceiver 80tX-1 may be performed in advance at the timing of step Se7. Upon receiving the wavelength value of the control signal from the monitoring management processing unit 75X-1, the control unit 81tX-1 outputs a wavelength designation signal designating the received wavelength value to the wavelength variable light source 85tX-1. Thus, the wavelength variable light source 85tX-1 generates and outputs continuous light having a wavelength value different from the wavelength value of the optical signal of the main signal transmitted by the optical fiber 51R of the optical transmission line 51, which is the wavelength value of the control signal selected by the monitoring management control unit 44. The monitoring management processing unit 75X-1 outputs an electrical control signal including the generated setting information to the digital signal processing unit 83tX-1 of the control signal transceiver 80tX-1 (step Se10).

The digital signal processing unit 83tX-1 of the control signal transceiver 80tX-1 captures the electrical control signal output from the monitoring management processing unit 75X-1, and then outputs the captured electrical control signal to the optical modulator 86tX-1. The optical modulator 86tX-1 optically modulates the continuous light having the wavelength of the control signal output from the wavelength variable light source 85tX-1 with the captured electrical control signal. The optical modulator 86tX-1 outputs the optical signal of the control signal generated by the optical modulation to the IF unit 82tX-1. The IF unit 82tX-1 captures the optical signal of the control signal output from the optical modulator 86tX-1. The IF unit 82tX-1 outputs the captured optical signal of the control signal to the wavelength multiplexing unit 8bX-1 of the control signal multiplexing/separating unit 6bX-1. The wavelength multiplexing unit 8bX-1 wavelength-multiplexes the optical signal of the control signal output from the IF unit 82tX-1 and the optical signal of the main signal transmitted from the optical transmission/reception unit 21X-1. The wavelength multiplexing unit 8bX-1 sends the wavelength-multiplexed optical signal to the optical fiber 51T-1 of the optical transmission line 51-1.

The optical fiber 51T-1 transmits the wavelength-multiplexed optical signal sent from the wavelength multiplexing unit 8bX-1 to the wavelength separating unit 77-1 of the control signal multiplexing/separating unit 17-1 included in the connection node device 1g. The wavelength separating unit 77-1 wavelength-separates the wavelength-multiplexed optical signal transmitted by the optical fiber 51T-1 into the optical signal of the control signal and the optical signal of the main signal. The wavelength separating unit 77-1 sends the separated optical signal of the control signal to the optical fiber 90T-1 of the control signal internal optical line 90-1, and sends the separated optical signal of the main signal to the optical fiber 52T-1 of the optical transmission line 52-1 (step Se11).

The IF unit 82e-1 of the control signal transceiver 80e-1 captures the optical signal of the control signal output from the wavelength separating unit 77-1 via the optical fiber 90T-1, and outputs the captured optical signal of the control signal to the photodetector 88e-1. The photodetector 88e-1 receives the optical signal of the control signal output from the IF unit 82e-1, and converts the received optical signal into an electrical control signal. The photodetector 88e-1 outputs the control signal to the digital signal processing unit 83e-1. The digital signal processing unit 83e-1 captures the control signal output from the photodetector 88e-1. The digital signal processing unit 83e-1 outputs the captured control signal to the control unit 12g (step Se12).

The control unit 12g captures the control information output from the digital signal processing unit 83e-1, and reads the setting information included in the captured control information. The control unit 12g transmits the read setting information to the monitoring management control unit 44 of the operation device 4g via the connection line 3 (step Se13). The monitoring management control unit 44 receives and captures the setting information transmitted from the control unit 12g (step Se14). Thus, the operator can check the intended transmission mode or the like of the digital signal processing unit 23X-1 of the optical transmission/reception unit 21X-1 of the optical communication device 2gX-1 by referring to the setting information captured by the monitoring management control unit 44.

In the processing of step Se1, the monitoring management control unit 44 may generate the setting information acquisition request signal including the designated address information of the optical transmission/reception unit 21X-1 in addition to the read identification information for specifying the optical transmission line 51-1 and the wavelength value of the selected control signal. In this case, in the processing of step Se7, the monitoring management processing unit 75X-1 includes the address information of the optical transmission/reception unit 21X-1 included in the captured control signal in the setting information acquisition request signal output to the control unit 71X-1 of the optical transmission/reception unit 21X-1. In this manner, in the processing of step Se8, the control unit 71X-1 of the optical transmission/reception unit 21X-1 may generate the setting information when the address information included in the setting information acquisition request signal received from the monitoring management processing unit 75X-1 matches the address information of the optical transmission/reception unit 21X-1 stored in the internal storage area of itself, and when the address information does not match the address information, the received setting information acquisition request signal may be discarded and the setting information may not be generated, and an error message may be output to the monitoring management processing unit 75X-1 in the processing of step Se9. When the error message is notified, the monitoring management processing unit 75X-1 generates an electrical control signal including the error message and the address information of the optical transmission/reception unit 21X-1 included in the control signal captured in the processing of step Se7 in the processing of step Se10, and outputs the electrical control signal to the control signal transceiver 80tX-1. Thereafter, processing similar to the processing of steps Se11 to Se14 described above is performed, and the monitoring management control unit 44 of the operation device 4g acquires the error message, and the operator can know an error such as a mismatch between the setting of the path management table 45 and the actual configuration, for example.

Note that, when the operator performs an operation of sending the setting information acquisition request signal in which the address information of the optical transmission/reception unit 21Y-1 is designated to the monitoring management control unit 44, the monitoring management control unit 44 detects the record of the path identification number "1" from the path management table 45 as in the processing of step Se1 described above. However, in this case, in the path management table 45, "absent" is written in the item of "presence or absence via connection node" on the "second path end information" side including the address information of the optical transmission/reception unit 21Y-1. Thus, the monitoring management control unit 44 transmits the setting information acquisition request signal including the address information of the optical transmission/reception unit 21Y-1 to the optical communication device 2Y via the connection line 3-1 written in the item of "control signal line" on the "second path end information" side without selecting the wavelength value of the control signal. Upon receiving the setting information acquisition request signal transmitted by the monitoring management control unit 44 via the connection line 3-1, the control unit 20Y-1 of the optical communication device 2Y-1 outputs the setting information acquisition request signal to the control unit 71Y-1 of the optical transmission/reception unit 21Y-1. Thereafter, processing similar to that in step Se8 is performed by the control unit 71Y-1. The control unit 71Y-1 outputs the generated setting information to the control unit 20Y-1. The control unit 20Y-1 captures the setting information output from the control unit 71Y-1, and transmits the captured setting information to the monitoring management control unit 44 via the connection line 3-1.

The optical transmission system 104 of the fifth embodiment includes the connection node device 1g, the optical communication device 2gX that is a user-side optical communication device, the optical transmission line 51 that is the first optical transmission line connecting the connection node device 1g and the optical communication device 2gX, and the optical transmission line 52 that is the second optical transmission line connected to the connection node device 1g. In the connection node device 1g, the control signal transceiver 80e that is a node-side control signal transceiver transmits and receives a control signal. The control signal multiplexing/separating unit 17 that is a node-side control signal multiplexing/separating unit wavelength-multiplexes the control signal transmitted by the control signal transceiver 80e and the main signal received via the optical transmission line 52 and sends the wavelength-multiplexed signal to the optical transmission line 51, wavelength-separates the optical signal received via the optical transmission line 51 into the control signal and the main signal, outputs the separated control signal to the control signal transceiver 80e, and sends the separated main signal to the optical transmission line 52. In the optical communication device 2gX, the optical transmission/reception unit 21X transmits and receives the main signal. The control signal transceiver 80tX that is a user-side control signal transceiver transmits and receives the control signal. The control signal multiplexing/separating unit 6bX that is a user-side control signal multiplexing/separating unit wavelength-multiplexes the control signal transmitted by the control signal transceiver 80tX and the main signal transmitted by the optical transmission/reception unit 21X and sends the wavelength-multiplexed signal to the optical transmission line 51, wavelength-separates the optical signal received via the optical transmission line 51 into the control signal and the main signal, outputs the separated control signal to the control signal transceiver 80tX, and outputs the separated main signal to the optical transmission/reception unit 21X. Thus, a path for transmitting and receiving the optical signal of the control signal separately from the path for transmitting and receiving the optical signal of the main signal is generated between the connection node device 1g and the optical communication device 2gX via the optical transmission line 51. Thus, it is possible to access the user-side optical communication device 2gX to perform monitoring and management without using a communication path different from a communication path of the optical transmission line for transmitting and receiving the main signal with respect to the user-side optical communication device 2gX having only the communication path.

**In** the above-described fifth embodiment, when selecting the wavelength value of the control signal, the monitoring management control unit 44 selects, as the wavelength value of the control signal, a wavelength value different from the wavelength value of the wavelength path of the main signal in the item of "main signal wavelength" of the record detected from the path management table 45. More specifically, the monitoring management control unit 44 selects a value different from the wavelength value of the wavelength path of the main signal in the item of "main signal wavelength" and satisfies the following control signal wavelength selection conditions as the wavelength value of the control signal. Here, the control signal wavelength selection conditions are, for example, conditions that it is a wavelength value in a range allowed to be set in the wavelength variable light sources 85tX and 85e of the control signal transceivers 80tX and 80e, is a wavelength value in a range allowed in the optical fibers 51T and 51R of the optical transmission line 51, and is a range in which the photodetectors 88tX and 88e of the control signal transceivers 80tX and 80e can receive and photoelectrically convert light, and the like. **In** this case, if the monitoring management control unit 44 can select, as the wavelength value of the control signal, a value close to the wavelength value of the main signal and in the range of wavelengths to be amplified by the optical amplifier for amplifying the main signal in the optical transmission line 51, the optical signal of the control signal can be amplified together with the optical signal of the main signal by the optical amplifier. However, when there is a concern about the influence of the main signal on the optical signal, it is preferable to select a value away from the wavelength value of the main signal as the wavelength value of the control signal.

In the above-described fifth embodiment, the monitoring management control unit 44 may be incorporated in the control unit 12g of the connection node device 1g, and the control unit 12g and the control unit 20Y of the optical communication device 2Y may be directly connected by the connection line 3. The optical transmission system 104 of the fifth embodiment as described above may be applied to the optical transmission system 100 of the first embodiment described above. That is, after replacing the optical communication device 2X of the optical transmission system 100 of the first embodiment with the optical communication device 2gX of the fifth embodiment, the control unit 20X is connected to the optical transmission/reception unit 21X. In the connection node device 1, the control unit 12g incorporating the monitoring management control unit 44 is further incorporated into the control unit 12 of the connection node device 1. The connection node device 1 includes the control signal transceiver 80e, the control signal multiplexing/separating unit 17, and the control signal internal optical line 90, and connects the control signal transceiver 80e to the control unit 12. The output of the main signal of the wavelength separating unit 77 of the control signal multiplexing/separating unit 17 is connected to the optical switch unit 15T of the output port switching unit 14 by an optical fiber, and the input of the main signal of the wavelength multiplexing unit 78 is connected to the optical switch unit 15R of the output port switching unit 14 by an optical fiber. In this manner, by performing the processing illustrated in Fig. 3 of the first embodiment, the wavelength path of the main signal can be generated between the optical transmission/reception unit 21X of the optical communication device 2gX and the optical transmission/reception unit 21Y of the optical communication device 2Y without manual intervention, and further, by the processing illustrated in Fig. 26 of the fifth embodiment described above, the control unit 12 of the connection node device 1 can monitor and manage the optical communication device 2gX by the wavelength path of the control signal.

In the above-described fifth embodiment, each of the optical communication devices 2gX and 2Y may include, instead of the optical transmission/reception units 21X and 21Y including the single-wavelength light sources 25X and 25Y, the optical transmission/reception units 21aX and 21aY having the same configuration as the optical transmission/reception unit 21aX-1 including the wavelength variable light source 25aX-1 described in the third embodiment. Thus, the wavelength path of the main signal can be generated at any wavelength.

### (Sixth embodiment)

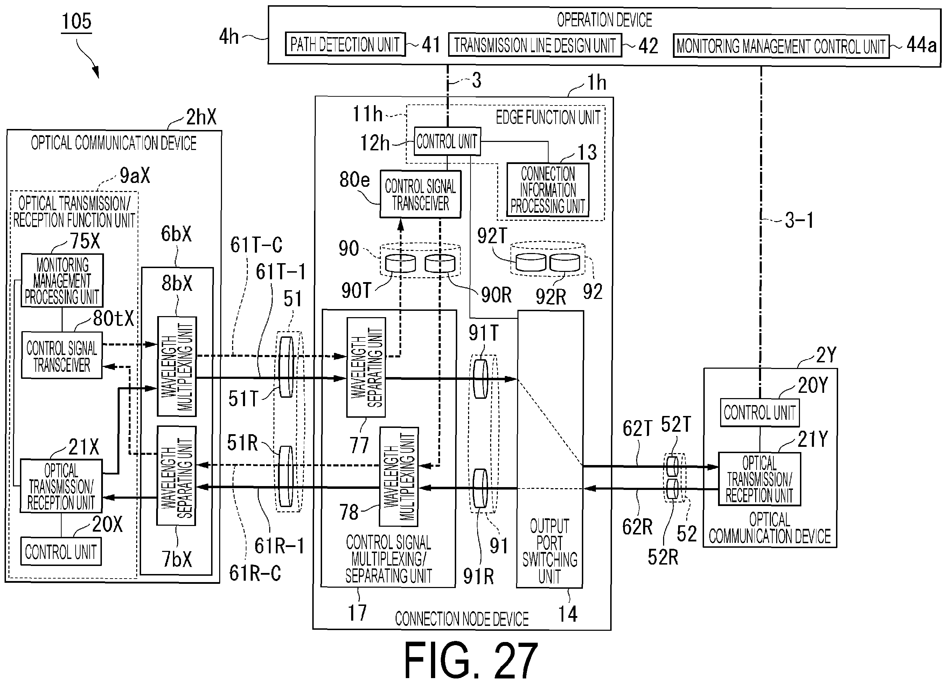

Fig. 27 is a block diagram illustrating a configuration of an optical transmission system 105 according to a sixth embodiment. In the sixth embodiment, the same components as those described in each of the above embodiments are denoted by the same reference signs, and different components will be described below.

The optical transmission system 105 is an optical transmission system in which the optical transmission system 104 of the fifth embodiment illustrated in Fig. 21 is applied to the optical transmission system 101 of the second embodiment illustrated in Fig. 5 to thereby enable monitoring and management using the wavelength path of the control signal while connecting two optical transmission/reception units without manual intervention in an optimum transmission mode. However, while the optical transmission system 101 of the second embodiment includes the optical communication devices 2Y-1 to 2Y-n, the optical transmission system 105 illustrates a configuration example including one optical communication device 2Y in order to simply illustrate the configuration in the sixth embodiment. The optical transmission system 105 includes a connection node device 1h, an optical communication device 2hX, the optical communication device 2Y, an operation device 4h, the optical transmission line 51, the optical transmission line 52, and the connection lines 3 and 3-1.

The optical communication device 2hX has a configuration in which the control unit 20X that generates a connection request instruction signal and outputs the connection request instruction signal to the control unit 71X of the optical transmission/reception unit 21X is added to the optical communication device 2gX illustrated in Fig. 21. The connection node device 1h is a device in which the connection node device 1a of the second embodiment illustrated in Fig. 5 and the connection node device 1g of the fifth embodiment illustrated in Fig. 21 are combined. The connection node device 1 includes an edge function unit 11h, the control signal transceiver 80e, the control signal internal optical line 90, the control signal multiplexing/separating unit 17, the output port switching unit 14, a main signal internal optical line 91, and a connection processing internal optical line 92. The edge function unit 11h includes a control unit 12h and the connection information processing unit 13. The control unit 12h includes the control unit 12a of the connection node device 1a of the second embodiment and the control unit 12g of the connection node device 1g of the fifth embodiment, and further includes a configuration to distribute the received data to one of the control unit 12a and the control unit 12g according to the type of the received data.

The main signal internal optical line 91 connects the control signal multiplexing/separating unit 17 and the output port switching unit 14. More specifically, the main signal internal optical line 91 is an optical line including an optical fiber 91T and an optical fiber 91R. The optical fiber 91T connects the wavelength separating unit 77 of the control signal multiplexing/separating unit 17 and the optical switch unit 15T of the output port switching unit 14. The optical fiber 91R connects the wavelength multiplexing unit 78 of the control signal multiplexing/separating unit 17 and the optical switch unit 15R of the output port switching unit 14.

The connection processing internal optical line 92 connects the connection information processing unit 13 and the output port switching unit 14. The connection processing internal optical line 92 is an optical line including an optical fiber 92T and an optical fiber 92R. The optical fiber 92T connects the IF unit 31 of the connection information processing unit 13 and the optical switch unit 15T of the output port switching unit 14. The optical fiber 92R connects the IF unit 31 of the connection information processing unit 13 and the optical switch unit 15R of the output port switching unit 14.

Fig. 27 illustrates a state in which the wavelength paths 61T-1 and 62T and wavelength paths 62R and 61R-1 used for transmission and reception of the main signal are generated between the optical transmission/reception unit 21X of the optical communication device 2hX and the optical transmission/reception unit 21Y of the optical communication device 2Y. A broken line inside the output port switching unit 14 indicates a state in which the wavelength path 61T-1 and the wavelength path 62T are connected via the wavelength separating unit 77 and the optical fiber 91T by the optical switch unit 15T included in the output port switching unit 14, and the wavelength path 62R and the wavelength path 61R-1 are connected via the optical fiber 91R and the wavelength multiplexing unit 78 by the optical switch unit 15R.

On the other hand, in the state before the wavelength paths 61T-1 and 62T and the wavelength paths 62R and 61R-1 are generated, as described in the second embodiment, there are the wavelength paths of the basic mode connecting the connection information processing unit 13 and the optical transmission/reception unit 21X, that is, two wavelength paths of the basic wavelength. In this state, the optical switch unit 15T of the output port switching unit 14 connects the optical fiber 91T and the optical fiber 92T, and the optical switch unit 15R connects the optical fiber 91R and the optical fiber 92R. Thus, the wavelength path of one basic wavelength is a wavelength path starting from the optical transmission/reception unit 21X, passing through the optical fiber 51T, the optical fiber 91T, and the optical fiber 92T, and ending at the connection information processing unit 13. The wavelength path of the other basic wavelength is a wavelength path starting from the connection information processing unit 13, passing through the optical fiber 92R, the optical fiber 91R, and the optical fiber 51R, and ending at the optical transmission/reception unit 21X.

In a state before the wavelength path of the main signal is generated, in the control signal multiplexing/separating units 6bX and 17, the wavelength multiplexing units 8bX and 78 perform wavelength multiplexing on the optical signal of the control signal and the optical signal of the basic wavelength that is the main signal in this state. The wavelength separating units 7bX and 77 wavelength-separate the optical signal captured at the input into the optical signal of the control signal and the optical signal of the basic wavelength that is the main signal in this state. The wavelength separating unit 7bX outputs the separated optical signal of the basic wavelength to the optical transmission/reception unit 21X, and the wavelength separating unit 77 outputs the separated optical signal of the basic wavelength to the connection information processing unit 13 via the optical fibers 91T and 92T.

The operation device 4h includes the path detection unit 41 and the transmission line design unit 42 included in the operation device 4 of the second embodiment illustrated in Fig. 5, and further includes a monitoring management control unit 44a. The monitoring management control unit 44a has the same configuration as the monitoring management control unit 44 of the fifth embodiment regarding the configuration excluding the following configuration. In a case of the monitoring management control unit 44, the path management table 45 is generated in the internal storage area of the monitoring management control unit 44 by the operator. On the other hand, when the wavelength path of the main signal is generated, the monitoring management control unit 44a generates the path management table 45 in the internal storage area without manual intervention on the basis of the connection request data and the connection information transmitted to the operation device 4h by the control unit 12h of the connection node device 1h, the path information table stored in the internal storage area of the path detection unit 41, the detection result of the path detection unit 41, the transmission mode information including the configuration information generated by the transmission line design unit 42, the connection line table stored in the internal storage area of the transmission line design unit 42, and the like.

Note that, also in the sixth embodiment, similarly to the fifth embodiment, the control signal transceiver correspondence table 18 stored in the internal storage area of the control unit 12h of the connection node device 1h is generated by operation of the operator.

Thus, in the optical transmission system 105 of the sixth embodiment, the control unit 20X outputs the connection request instruction signal including the address information of the optical transmission/reception unit 21Y of the optical communication device 2Y and the desired bit rate to the control unit 71X of the optical transmission/reception unit 21X, whereby the wavelength path of the main signal of the optimum transmission mode is generated between the optical transmission/reception unit 21X and the optical transmission/reception unit 21Y without manual intervention according to the procedure illustrated in Fig. 6 of the second embodiment. Then, in the optical transmission system 105 of the sixth embodiment, similarly to the fifth embodiment, for example, by the operator operating the monitoring management control unit 44a, it is possible to perform monitoring and management processing such as acquiring the setting information of the optical transmission/reception unit 21X of the optical communication device 2hX using the wavelength paths 61T-C and 61R-C of the control signal.

Therefore, in addition to the effects of the optical transmission system 101 of the second embodiment, the optical transmission system 105 of the sixth embodiment can obtain the effect of applying the fifth embodiment, that is, the effect of being capable of accessing the user-side optical communication device 2hX to perform monitoring and management without using a communication path different from a communication path of the optical transmission line for transmitting and receiving the main signal with respect to the user-side optical communication device 2hX having only the communication path.

### (Another Configuration Example of Sixth Embodiment)

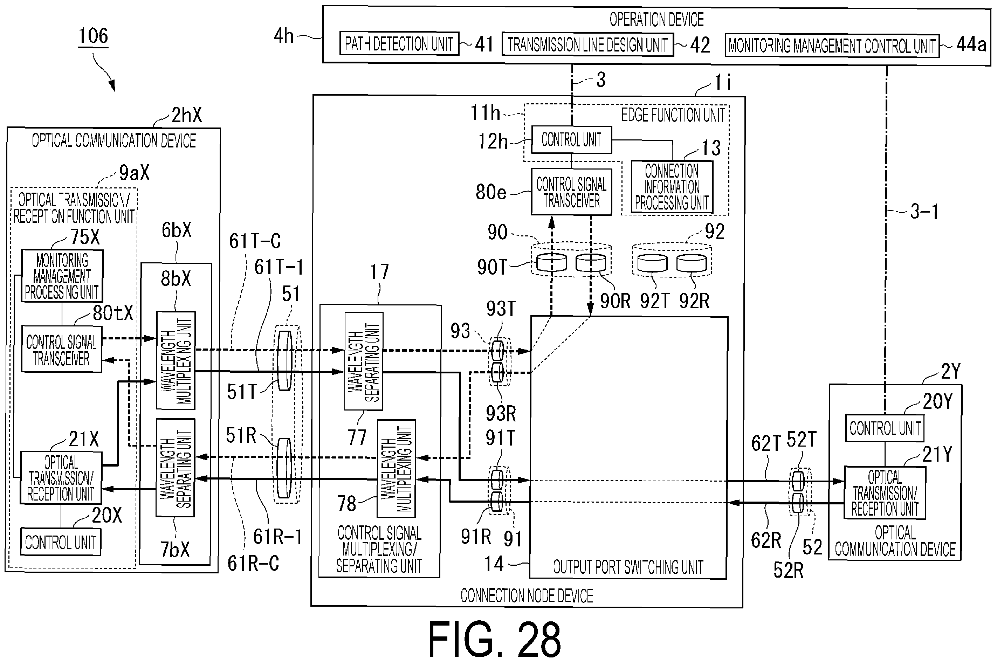

Fig. 28 is a block diagram illustrating a configuration of an optical transmission system 106 that is another configuration example of the sixth embodiment. A difference between the optical transmission system 106 and the optical transmission system 105 illustrated in Fig. 27 is as follows. In the optical transmission system 105, the control signal transceiver 80e includes the connection node device 1h connected to the control signal multiplexing/separating unit 17 via the control signal internal optical line 90. On the other hand, the optical transmission system 106 includes a connection node device 1i that further includes an auxiliary internal optical line 93 and is configured as described below.

The auxiliary internal optical line 93 is an optical line including an optical fiber 93T and an optical fiber 93R. The optical fiber 93T connects the wavelength separating unit 77 of the control signal multiplexing/separating unit 17 and the optical switch unit 15T of the output port switching unit 14, and the optical fiber 93R connects the wavelength multiplexing unit 78 of the control signal multiplexing/separating unit 17 and the optical switch unit 15R of the output port switching unit 14.

The control signal transceiver 80e is connected to the output port switching unit 14 via the optical fiber 90T and the optical fiber 90R of the control signal internal optical line 90. More specifically, the optical fiber 90T connects the IF unit 82e of the control signal transceiver 80e and the optical switch unit 15T of the output port switching unit 14, and the optical fiber 90R connects the IF unit 82e of the control signal transceiver 80e and the optical switch unit 15R of the output port switching unit 14.

In the output port switching unit 14, the optical switch unit 15T connects the optical fiber 90T of the control signal internal optical line 90 and the optical fiber 93T of the auxiliary internal optical line 93 in advance, and the optical switch unit 15R connects the optical fiber 90R of the control signal internal optical line 90 and the optical fiber 93R of the auxiliary internal optical line 93 in advance. As does the output port switching unit 14 of the optical transmission system 105 illustrated in Fig. 27, after generating the wavelength path of the main signal, as indicated by a broken line, the output port switching unit 14 connects the wavelength path 61T-1 and the wavelength path 62T via the wavelength separating unit 77 and the optical fiber 91T, and connects the wavelength path 62R and the wavelength path 61R-1 via the optical fiber 91R and the wavelength multiplexing unit 78.

The wavelength separating unit 77 sends the separated optical signal of the control signal to the optical fiber 93T of the auxiliary internal optical line 93, and sends the separated optical signal of the main signal to the optical fiber 91T of the main signal internal optical line 91. The wavelength multiplexing unit 78 captures the optical signal of the control signal output from the control signal transceiver 80e via the optical fiber 90R of the control signal internal optical line 90, the optical switch unit 15R of the output port switching unit 14, and the optical fiber 93R of the auxiliary internal optical line 93. The wavelength multiplexing unit 78 wavelength-multiplexes the optical signal of the captured control signal and the optical signal of the main signal transmitted by the optical transmission/reception unit 21Y received via the optical fiber 91R of the main signal internal optical line 91, and sends the wavelength-multiplexed optical signal to the optical fiber 51R. Thus, the optical signal of the control signal is transmitted between the control signal transceiver 80e and the control signal multiplexing/separating unit 17 via the control signal internal optical line 90, the output port switching unit 14, and the auxiliary internal optical line 93 inside the connection node device 1i.

The optical transmission systems 105 and 106 of the sixth embodiment may be configured to include a plurality of optical transmission lines 52-1 to 52-n, a plurality of optical communication devices 2Y-1 to 2Y-n, and a plurality of connection lines 3-1 to 3-n as in the optical transmission system 101 illustrated in Fig. 5. The optical transmission systems 105 and 106 may include the plurality of optical transmission lines 52-1 to 52-n, the optical communication device 2cY, and the connection line 3-1 as in the optical transmission system 101a illustrated in Fig. 7. As in a case where the optical transmission system 104 of the fifth embodiment is applied to the optical transmission system 101 of the second embodiment to be the optical transmission systems 105 and 106 of the sixth embodiment, the optical transmission system 104 of the fifth embodiment may be applied to the optical transmission system 101b illustrated in Fig. 14, or the optical transmission system 104 of the fifth embodiment may be applied to the optical transmission system 101c illustrated in Fig. 16.

### (Seventh embodiment)

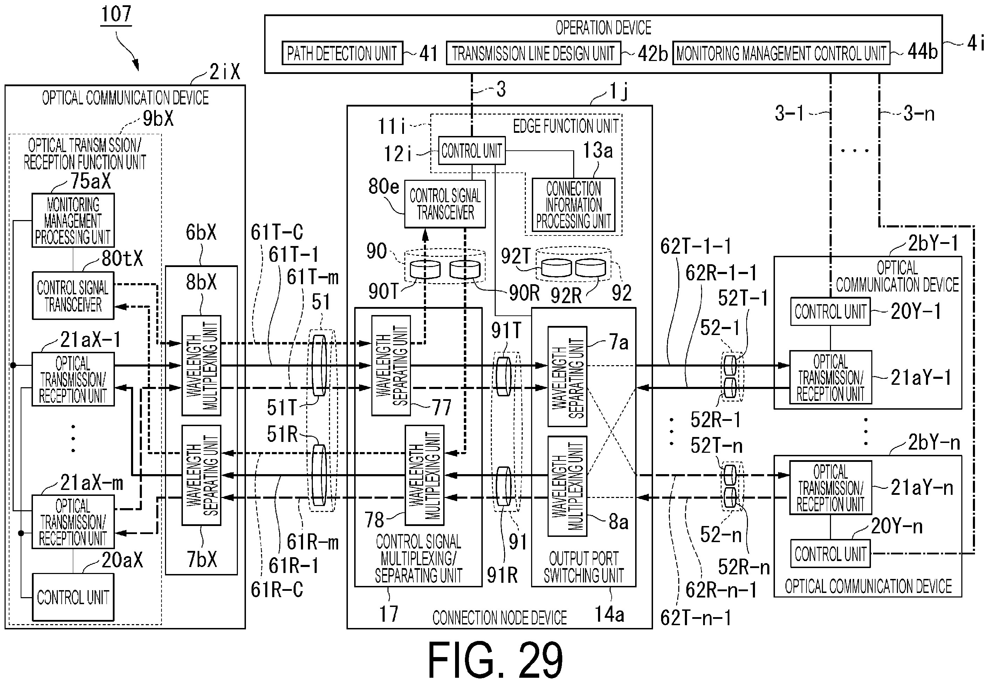

Fig. 29 is a block diagram illustrating a configuration of an optical transmission system 107 of a seventh embodiment. The optical transmission system 107 is an optical transmission system in which the optical transmission system 104 of the fifth embodiment illustrated in Fig. 21 is applied to the optical transmission system 102 of the third embodiment illustrated in Fig. 8, and thus it is possible to perform monitoring and management by using a control signal while connecting two optical transmission/reception units at any wavelength without manual intervention in an optimum transmission mode. The optical transmission system 105 includes a connection node device 1j, an optical communication device 2iX, the optical communication devices 2bY-1 to 2bY-n, an operation device 4i, the optical transmission line 51, the optical transmission lines 52-1 to 52-n, and the connection lines 3 and 3-1 to 3-n.

In the optical communication device 2aX of the third embodiment, the optical communication device 2iX includes a monitoring management processing unit 75aX instead of the transmission control unit 29X, includes the control signal multiplexing/separating unit 6bX instead of the wavelength multiplexing/separating unit 6aX, and further includes the control signal transceiver 80tX. The monitoring management processing unit 75aX has the same configuration as the monitoring management processing unit 75X of the fifth and sixth embodiments regarding the configuration excluding the following configuration. Since the monitoring management processing unit 75X is connected to one optical transmission/reception unit 21X, for example, in the processing of step Se7 of the sequence diagram of Fig. 26 of the fifth embodiment, when the type of the control signal received from the digital signal processing unit 83tX-1 is the type of the setting information acquisition request, the monitoring management processing unit outputs the setting information acquisition request to the control unit 71X-1 of the optical transmission/reception unit 21X-1. On the other hand, the monitoring management processing unit 75aX is connected to the plurality of optical transmission/reception units 21aX-1 to 21aX-m, and thus, when the type of the control signal received from the digital signal processing unit 83tX-1 is the type of the setting information acquisition request, the monitoring management processing unit 75aX refers to the address information included in the setting information acquisition request, and performs distribution processing of outputting the setting information acquisition request signal to any one of the optical transmission/reception units 21aX-1 to 21aX-m corresponding to the address information.

The wavelength multiplexing unit 8bX of the control signal multiplexing/separating unit 6bX wavelength-multiplexes the optical signal of the control signal transmitted by the control signal transceiver 80tX and the optical signal of the main signal transmitted by each of the optical transmission/reception units 21aX-1 to 21aX-m, and sends the wavelength-multiplexed optical signal to the optical fiber 51T. The wavelength separating unit 7bX wavelength-separates the wavelength-multiplexed optical signal transmitted by the optical fiber 51R into the optical signal of the control signal and each of optical signals of a plurality of main signals. The wavelength separating unit 7bX outputs the separated optical signal of the control signal to the control signal transceiver 80tX, and outputs each of the optical signals of the plurality of main signals to the corresponding optical transmission/reception units 21aX-1 to 21aX-m.

The connection node device 1j has a configuration in which the connection node device 1h of the optical transmission system 105 illustrated in Fig. 27 includes an edge function unit 11i instead of the edge function unit 11h and an output port switching unit 14a instead of the output port switching unit 14. The edge function unit 11i includes a control unit 12i and a connection information processing unit 13a. The control unit 12i includes the control unit 12b of the connection node device 1b of the third embodiment and the control unit 12g of the connection node device 1g of the fifth embodiment, and further includes a configuration to distribute the received data to one of the control unit 12b and the control unit 12g according to the type of the received data.

As illustrated in Fig. 9, the output port switching unit 14a includes the wavelength separating unit 7a, the wavelength multiplexing unit 8a, and the optical switch units 15aT and 15aR, and in Fig. 29, the wavelength separating unit 7a and the wavelength multiplexing unit 8a among these functional units are illustrated, and the connection states of the optical switch units 15aT and 15aR in a state where the wavelength path of the main signal is generated are indicated by broken lines.

The wavelength separating unit 77 of the control signal multiplexing/separating unit 17 of the optical transmission system 107 wavelength-separates the wavelength-multiplexed optical signal transmitted by the optical fiber 51T into two optical signals of the optical signal of the control signal and an optical signal in which the plurality of main signals is wavelength-multiplexed. The wavelength separating unit 77 sends the separated optical signal of the control signal to the optical fiber 90T of the control signal internal optical line 90, and sends the separated optical signal in which the plurality of main signals is wavelength-multiplexed to the optical fiber 91T of the main signal internal optical line 91. The wavelength separating unit 7a of the output port switching unit 14a captures the optical signal in which the plurality of main signals is wavelength-multiplexed via the optical fiber 91T, wavelength-separates the captured optical signal into the plurality of main signals, and outputs each of the plurality of separated main signals to the optical switch unit 15aT of the output port switching unit 14a.

Fig. 29 illustrates, as an example, a state in which the wavelength path 61T-C, the wavelength path 61T-1, and a wavelength path 61T-m are wavelength-multiplexed in the optical fiber 51T. Here, an optical signal transmitted by the wavelength path 61T-C is an optical signal of a control signal transmitted by the control signal transceiver 80tX. An optical signal transmitted by the wavelength path 61T-1 is an optical signal of a main signal transmitted by the optical transmission/reception unit 21aX-1. An optical signal transmitted by the wavelength path 61T-m is an optical signal of a main signal transmitted by the optical transmission/reception unit 21aX-m. In this case, the wavelength separating unit 77 in the first stage performs wavelength separation into an optical signal of a control signal transmitted through the wavelength path 61T-C and an optical signal in which two main signals transmitted through the wavelength path 61T-1 and the wavelength path 61T-m are wavelength-multiplexed. The optical fiber 91T transmits the optical signal in which the two main signals transmitted through the wavelength path 61T-1 and the wavelength path 61T-m are wavelength-multiplexed. The wavelength separating unit 7a in the second stage performs wavelength separation into the optical signal of the main signal transmitted through the wavelength path 61T-1 and the optical signal of the main signal transmitted through the wavelength path 61T-m. Thereafter, by the optical switch unit 15aT of the output port switching unit 14a, the wavelength path 61T-1 is connected to a wavelength path 62T-1-1, and the wavelength path 61T-m is connected to a wavelength path 62T-n-1.

The wavelength multiplexing unit 8a of the output port switching unit 14a wavelength-multiplexes the optical signal of the main signal transmitted by each of the optical transmission/reception units 21aY-1 to 21aY-n output from the optical switch unit 15aR of the output port switching unit 14a, and sends the wavelength-multiplexed optical signal to the optical fiber 91R of the main signal internal optical line 91. In a case of the example illustrated in Fig. 29, the wavelength multiplexing unit 8a wavelength-multiplexes the optical signal transmitted by a wavelength path 62R-1-1, that is, the optical signal of the main signal transmitted by the optical transmission/reception unit 21aY-1, and an optical signal transmitted by a wavelength path 62R-n-1, that is, the optical signal of the main signal transmitted by the optical transmission/reception unit 21aY-n. The wavelength multiplexing unit 78 of the control signal multiplexing/separating unit 17 wavelength-multiplexes the optical signal of the control signal captured via the optical fiber 90R of the control signal internal optical line 90 and an optical signal in which a plurality of main signals captured via the optical fiber 91R are wavelength-multiplexed, and sends the wavelength-multiplexed optical signal to the optical fiber 51R.

Thus, the main signal is transmitted and received between the optical transmission/reception unit 21aX-1 and the optical transmission/reception unit 21aY-1, the main signal is transmitted and received between the optical transmission/reception unit 21aX-m and the optical transmission/reception unit 21aY-n, and the control signal is transmitted and received between the control signal transceiver 80tX and the control signal transceiver 80e. Note that Fig. 29 illustrates an example in which the optical transmission/reception unit 21aX-1 and the optical transmission/reception unit 21aY-1 are connected, and the optical transmission/reception unit 21aX-m and the optical transmission/reception unit 21aY-n are connected. However, as described in the third embodiment, each of the optical transmission/reception units 21aX-1 to 21aX-m can be connected to any one of the optical transmission/reception units 21aY-1 to 21aY-n.

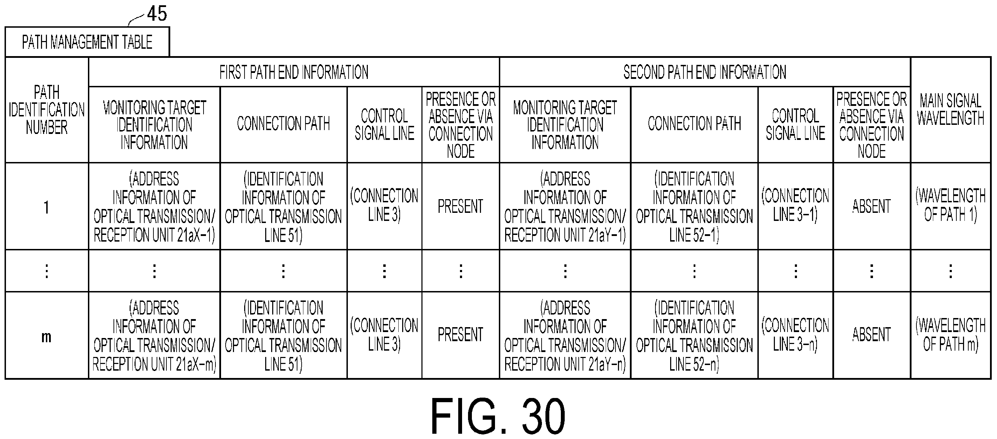

The operation device 4i includes the path detection unit 41 and the transmission line design unit 42b included in the operation device 4b of the third embodiment illustrated in Fig. 8, and further includes a monitoring management control unit 44b. The monitoring management control unit 44b has the same configuration as the monitoring management control unit 44a of the sixth embodiment regarding the configuration excluding the following configuration. In a case of the optical transmission system 107, the path management table 45 generated in an internal storage area of the monitoring management control unit 44b has, for example, the data format illustrated in Fig. 30.

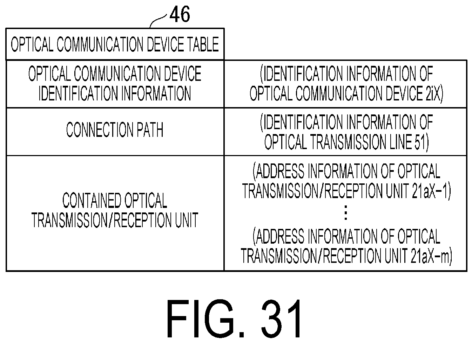

In the optical transmission system 107 of the seventh embodiment, since the optical communication device 2iX includes the plurality of optical transmission/reception units 21aX-1 to 21aX-m, the optical communication device table 46 illustrated in Fig. 31 is further generated in the internal storage area of the monitoring management control unit 44b. The optical communication device table 46 is a table in a data format having items of "optical communication device identification information", "connection path", and "accommodation destination optical transmission/reception unit". **In** the item of "optical communication device identification information", optical communication device identification information added in advance, which is identification information for uniquely specifying the optical communication device 2iX and is added in advance, is written. Note that the optical communication device identification information of the optical communication device 2iX is also written in advance in the internal storage area of the monitoring management processing unit 75aX of the optical communication device 2iX. **In** the item of "connection path", identification information for specifying the optical transmission line 51 to which the control signal transceiver 80e installed in the connection node device 1j corresponding to the optical communication device 2iX is connected is written. Address information of all the optical transmission/reception units 21aX-1 to 21aX-m included in the optical communication device 2iX is written in the item of "accommodation destination optical transmission/reception unit". Note that, in a case where there is a plurality of user-side optical communication devices 2iX connected via the connection node device 1j, the optical communication device table 46 is a table generated for each of the plurality of optical communication devices 2iX, and is a table generated in advance by operation of the operator.

**In** a case where the monitoring management control unit 44b performs the processing of step Se1 in the processing of the sequence diagram of Fig. 26, since the optical signals of the plurality of main signals are wavelength-multiplexed in the optical transmission line 51, in a case where the processing of selecting the wavelength of light of the control signal is performed, it is necessary to select a wavelength different from the wavelengths of light of the plurality of main signals as the wavelength of light of the control signal. Thus, for example, in a case where the address information of the optical transmission/reception unit 21aX-1 is designated by operation of the operator in the processing of step Se1, the monitoring management control unit 44b performs the following processing.

The monitoring management control unit 44b detects the record of the path identification number "1" corresponding to the address information of the optical transmission/reception unit 21aX-1 from the path management table 45. As illustrated in Fig. 30, since the item of "presence or absence via connection node" as a sub-item of the "first path end information" on the side where the address information of the optical transmission/reception unit 21aX-1 is included in the item of "monitoring target identification information" of the record of the path identification number "1" detected by the monitoring management control unit 44b is "present", processing of selecting a wavelength value of the control signal described below is performed.

The monitoring management control unit 44b detects the optical communication device table 46 in which the address information of the optical transmission/reception unit 21aX-1 is included in the item of "contained optical transmission/reception unit" from the internal storage area. Here, it is assumed that the monitoring management control unit 44b detects the optical communication device table 46 illustrated in Fig. 31. The monitoring management control unit 44b reads the identification information for specifying the optical transmission line 51 written in the item of "connection path" of the detected optical communication device table 46. The monitoring management control unit 44b detects all records including the read identification information for specifying the optical transmission line 51 in the item of "connection path" in the path management table 45. The monitoring management control unit 44b refers to the wavelength value in the item of "main signal wavelength" of all the detected records. For example, in a case of the example illustrated in Fig. 30, the identification information for specifying the optical transmission line 51 is included in the item of "connection path" in the records of the path identification numbers" 1" and "m". Thus, the monitoring management control unit 44b refers to the "wavelength of path 1" in the item of "main signal wavelength" in the record of the path identification number "1" and the "wavelength of path m" in the item of "main signal wavelength" in the record of the path identification number "m". The monitoring management control unit 44b selects, as the wavelength value of the control signal, a value that is other than the values of all the referred wavelengths and satisfies the control signal wavelength selection conditions described above. The monitoring management control unit 44b generates a setting information acquisition request signal including the read identification information for specifying the optical transmission line 51-1, the designated address information of the optical transmission/reception unit 21aX-1, and a wavelength value of the selected control signal. Thereafter, the processing of step Se2 and subsequent steps is performed.

With the above configuration, in the optical transmission system 107 of the seventh embodiment, the control unit 20aX outputs the connection request instruction signal including the address information of any one of the optical transmission/reception units 21aY-1 to 21aY-n included in the optical communication devices 2bY-1 to 2bY-n and the desired bit rate to the control units 71aX-1 to 71aX-m of any one of the optical transmission/reception units 21aX-1 to 21aX-m, whereby the wavelength path of the main signal of the optimum transmission mode is generated between any one of the optical transmission/reception units 21aX-1 to 21aX-m of the transmission source of the connection request instruction signal and any one of the optical transmission/reception units 21aY-1 to 21aY-n corresponding to the address information designated in the connection request instruction signal without manual intervention according to the procedure illustrated in Fig. 10 of the third embodiment. Then, in the optical transmission system 107 of the seventh embodiment, as in the fifth embodiment, for example, by the operator operating the monitoring management control unit 44b, it is possible to perform monitoring and management processing such as acquiring the setting information of the optical transmission/reception units 21aX-1 to 21aX-m of the optical communication device 2iX via the wavelength paths 61T-C and 61R-C of the control signal.

In this case, since the optical communication device 2iX includes the plurality of optical transmission/reception units 21aX-1 to 21aX-m, as described above, address information of any one of the optical transmission/reception units 21aX-1 to 21aX-m may be designated by the monitoring management control unit 44b and setting information of any one of the optical transmission/reception units 21aX-1 to 21aX-m corresponding to the designated address information may be acquired, or as in the following procedure, the optical communication device identification information of the optical communication device 2iX may be designated and setting information of all the optical transmission/reception units 21aX-1 to 21aX-m may be collectively acquired.

When acquiring the setting information of all the optical transmission/reception units 21aX-1 to 21aX-m having the wavelength path of the main signal in the optical transmission line 51, the operator designates the optical communication device identification information added to the optical communication device 2iX in the processing of step Se1 in Fig. 26. The monitoring management control unit 44b detects the optical communication device table 46 including the optical communication device identification information of the optical communication device 2iX in the item of "optical communication device identification information" from the internal storage area. As described above, the optical communication device table 46 is a table generated for each of the user-side optical communication devices 2iX connected via the connection node device 1j. Thus, in a case where the monitoring management control unit 44b has detected the optical communication device table 46, it is necessary to perform processing of selecting the wavelength value of the control signal. Here, it is assumed that the monitoring management control unit 44b detects the optical communication device table 46 illustrated in Fig. 31. The monitoring management control unit 44b reads identification information for specifying the optical transmission line 51 from the item of "connection path" of the detected optical communication device table 46. The monitoring management control unit 44b performs processing of selecting the wavelength value of the control signal in the seventh embodiment described above on the basis of the read identification information for specifying the optical transmission line 51. The monitoring management control unit 44b generates an all setting information acquisition request signal including the read identification information for specifying the optical transmission line 51 and the selected wavelength value of the control signal.

**In** the processing of step Se2, the monitoring management control unit 44b specifies the connection line 3 to be connected to the connection node device 1j from the path management table 45 on the basis of the address information of any one of the optical transmission/reception units 21aX-1 to 21aX-m written in the item of "accommodation destination optical transmission/reception unit" of the detected optical communication device table 46. The monitoring management control unit 44b transmits the generated all setting information acquisition request signal to the control unit 12j of the connection node device 1j via the specified connection line 3. Upon receiving the all setting information acquisition request signal in the processing of steps Se3 and Se4, the control unit 12j generates an electrical control signal of the type of the all setting information acquisition request including the information included in the received all setting information acquisition request signal. The control unit 12j specifies the control signal transceiver 80e corresponding to the identification information for specifying the optical transmission line 51 from the control signal transceiver correspondence table 18 stored in the internal storage area, and outputs the generated electrical control signal to the specified control signal transceiver 80e.

Thereafter, the processing of steps Se5 to Se6 is performed, and the monitoring management processing unit 75aX of the optical communication device 2iX captures the electrical control signal of the type of the all setting information acquisition request in the processing of step Se7. Since the type of the captured control signal is the all setting information acquisition request, the monitoring management processing unit 75aX outputs the setting information acquisition request signal to the control units 71aX-1 to 71aX-m of all the optical transmission/reception units 21aX-1 to 21aX-m. Each of the control units 71aX-1 to 71aX-m acquires each piece of setting information as the processing of step Se8, and outputs the acquired setting information to the monitoring management processing unit 75aX as the processing of step Se9. As the processing of step Se10, the monitoring management processing unit 75aX captures the setting information output from each of the control units 71aX-1 to 71aX-m, and generates response information corresponding to the all setting information acquisition request associated with all the captured setting information and the optical communication device identification information of the optical communication device 2iX stored in the internal storage area. The monitoring management processing unit 75aX generates an electrical control signal including the generated response information corresponding to the all setting information acquisition request, and outputs the electrical control signal to the control signal transceiver 80tX.

Thereafter, the processing of steps Se11 to Se13 is performed, and the monitoring management control unit 44b acquires the response information corresponding to the all setting information acquisition request in the processing of step Se14. Since the response information corresponding to the all setting information acquisition request acquired by the monitoring management control unit 44b includes the optical communication device identification information of the optical communication device 2iX and further includes the setting information including the address information of each of the optical transmission/reception units 21aX-1 to 21aX-m, the operator can check the content of the setting information after grasping which of the optical transmission/reception units 21aX-1 to 21aX-m in the optical communication device 2iX the setting information to be referred to is.

Note that, in a case where the monitoring management processing unit 75aX of the optical communication device 2iX has information that can identify the optical transmission/reception units 21aX-1 to 21aX-m, such as the slot number into which each of the optical transmission/reception units 21aX-1 to 21aX-m is inserted and the wavelength value of the main signal generated in each of the optical transmission/reception units 21aX-1 to 21aX-m, when setting information is received from each of the control units 71aX-1 to 71aX-m in step Se10, information that can identify the optical transmission/reception units 21aX-1 to 21aX-m may be further added to each of the received setting information. Thus, when referring to the setting information, the operator can further refer to information that can identify the optical transmission/reception units 21aX-1 to 21aX-m in addition to the address information of the optical transmission/reception units 21aX-1 to 21aX-m, and grasp that the setting information is the setting information of any wavelength or the setting information of any slot of the optical communication device 2iX.

**In** the processing of transmitting the all setting information acquisition request signal described above, the monitoring management control unit 44b of the operation device 4i may generate the all setting information acquisition request signal including the designated optical communication device identification information of the optical communication device 2iX in addition to the read identification information for specifying the optical transmission line 51 and the selected wavelength value of the control signal when generating the all setting information acquisition request signal as the processing of step Se1. In this case, in the processing of step Se7, the monitoring management processing unit 75aX of the optical communication device 2iX may capture the electrical control signal of the type of the all setting information acquisition request output from the control signal transceiver 80tX, perform the processing of acquiring the setting information of the optical transmission/reception units 21aX-1 to 21aX-m described above when the optical communication device identification information included in the captured control signal matches the optical communication device identification information of the optical communication device 2iX stored in the internal storage area, or when they do not match, the monitoring management processing unit 75aX may discard the captured control signal and may not generate the setting information, and perform processing of returning an error message to the monitoring management control unit 44b of the operation device 4i as a response to the all setting information acquisition request signal by a procedure illustrated as a supplement to the processing of the sequence diagram in Fig. 26 of the fifth embodiment.

With the above configuration, in addition to the effects of the optical transmission system 102 of the third embodiment, the optical transmission system 107 of the seventh embodiment can obtain an effect obtained by applying the fifth embodiment, that is, an effect of being capable of accessing the user-side optical communication device 2iX to perform monitoring and management without using a communication path different from a communication path of the optical transmission line for transmitting and receiving the main signal with respect to the user-side optical communication device 2iX having only the communication path.

The connection node device 1j. of the seventh embodiment may have a configuration as illustrated in Fig. 28, that is, a configuration in which the control signal transceiver 80e and the control signal multiplexing/separating unit 17 are connected via the output port switching unit 14a.

In the optical transmission system 107 of the seventh embodiment, similarly to the optical transmission system 102 illustrated in Fig. 8, the optical communication device 2iX may further include the transmission control unit 29X. The optical transmission system 104 of the fifth embodiment may be applied to the optical transmission system 102 of the third embodiment, and the optical transmission system 104 of the fifth embodiment may be applied to each of the optical transmission system 102a illustrated in Fig. 13 and the optical transmission system 102b illustrated in Fig. 15, as it is applied to the optical transmission system 107 of the seventh embodiment. In this case, the two optical transmission lines 51-1 and 51-2 are connected to the optical communication device 2dX of the optical transmission system 102a illustrated in Fig. 13. Thus, the optical communication device identification information of the optical communication device 2dX is written in the item of "optical communication device identification information" of the optical communication device table 46 illustrated in Fig. 31, the identification information for specifying one of the optical transmission lines 51-1 and 51-2 to which the control signal transceiver 80e of the connection node device 1j is connected is written in the item of "connection path", and the address information of the optical transmission/reception units 21aX-1 to 21aX-m is written in the item of "contained optical transmission/reception unit".

### (Another Configuration Example (Part 1) of Seventh Embodiment)

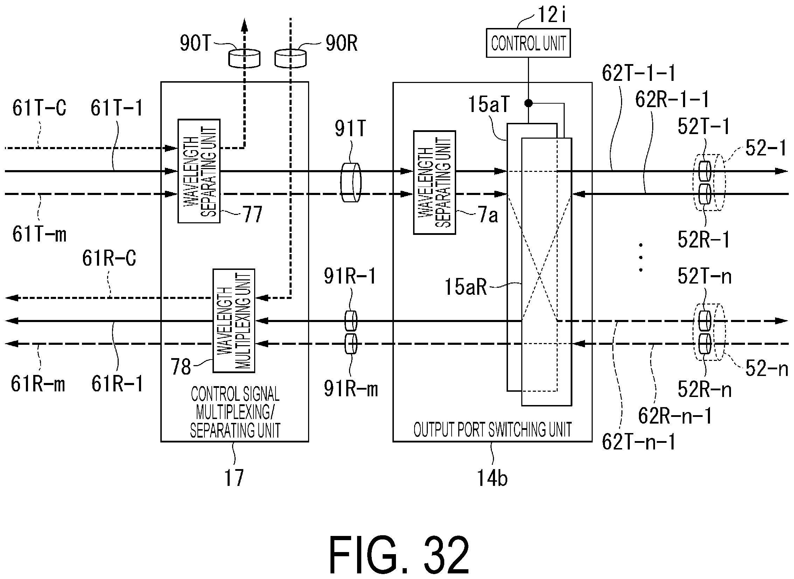

In the connection node device 1j. of the optical transmission system 107 in Fig. 29, the output port switching unit 14a includes the wavelength multiplexing unit 8a, and the control signal multiplexing/separating unit 17 further includes the wavelength multiplexing unit 78. On the other hand, as illustrated in Fig. 32, the connection node device 1j may include an output port switching unit 14b in which the wavelength multiplexing unit 8a is removed from the output port switching unit 14a instead of the output port switching unit 14a, and the wavelength multiplexing unit 78 of the control signal multiplexing/separating unit 17 may perform wavelength multiplexing of the optical signal of the control signal and the optical signal of the main signal including the wavelength multiplexing of the optical signals of the plurality of main signals using the output port switching unit 14b. However, in this case, it is necessary to connect the optical switch unit 15aR of the output port switching unit 14b and the wavelength multiplexing unit 78 of the control signal multiplexing/separating unit 17 with the number of optical fibers matching the number of optical signals of the plurality of main signals. Note that, in the example of Fig. 32, since the number of optical signals of the main signal is two, a state is illustrated in which the optical switch unit 15aR and the wavelength multiplexing unit 78 are connected by two optical fibers 91R-1 and 91R-m. Thus, the number of wavelength multiplexing units in the connection node device 1j can be reduced.

### (Another Configuration Example (Part 2) of Seventh Embodiment)

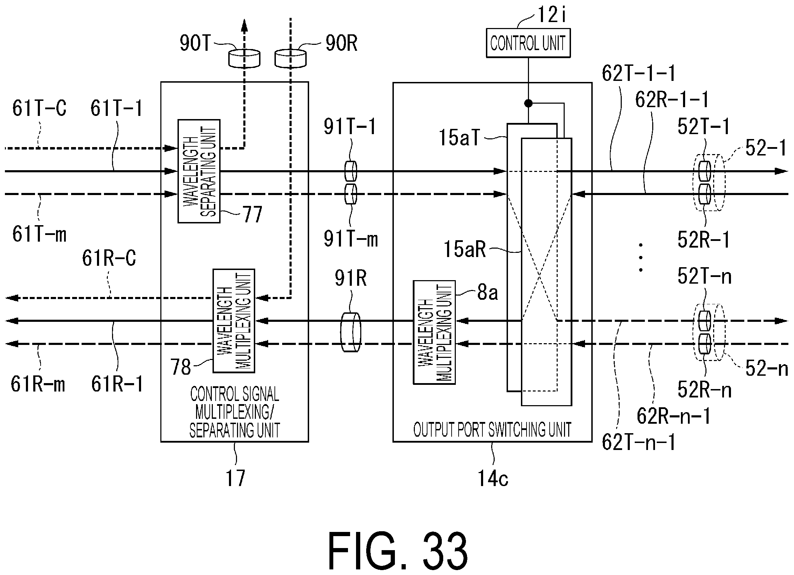

In the connection node device 1j. of the optical transmission system 107 in Fig. 29, the control signal multiplexing/separating unit 17 includes the wavelength separating unit 77, and the output port switching unit 14a further includes a wavelength separating unit 7a. On the other hand, as illustrated in Fig. 33, the connection node device 1j may include an output port switching unit 14c obtained by removing the wavelength separating unit 7a from the output port switching unit 14a instead of the output port switching unit 14a, and may cause the wavelength separating unit 77 of the control signal multiplexing/separating unit 17 to perform the wavelength separation of the optical signals of the plurality of main signals together with the wavelength separation of the optical signal of the control signal using the output port switching unit 14c. However, in this case, it is necessary to connect the optical switch unit 15aT of the output port switching unit 14c and the wavelength separating unit 77 of the control signal multiplexing/separating unit 17 with the number of optical fibers matching the number of optical signals of the plurality of main signals. Note that, in the example of Fig. 33, since the number of optical signals of the main signal is two, a state is illustrated in which the optical switch unit 15aT and the wavelength separating unit 77 are connected by two optical fibers 91T-1 and 91T-m. Thus, the number of wavelength separating units in the connection node device 1j can be reduced.

Instead of the output port switching unit 14a, the wavelength separating unit 7a and the output port switching unit 14 not including the wavelength multiplexing unit 8a may be provided, and as illustrated in Figs. 32 and 33, the wavelength multiplexing unit 78 of the control signal multiplexing/separating unit 17 and the optical switch unit 15R of the output port switching unit 14 may be connected by the number of optical fibers that matches the number of optical signals of the plurality of main signals, and the wavelength separating unit 77 of the control signal multiplexing/separating unit 17 and the optical switch unit 15T of the output port switching unit 14 may be connected by the number of optical fibers that matches the number of optical signals of the plurality of main signals.

In the sixth and seventh embodiments described above, in addition to using the control signal in the processing illustrated in Fig. 26, the control signal may be used in the following cases. For example, even if the wavelength path of the main signal and the wavelength path of the control signal can be generated, there is a problem in the transmission line information of the optical transmission line 51 calculated by the connection information processing units 13 and 13a of the connection node device 1h, and it is also assumed that transmission and reception of an optical signal cannot be performed in the wavelength path of the main signal. In such a case, on the basis of a transmission/reception state of the optical signal of the control signal of the wavelength path of the control signal, or the like, a portion where a cause for that transmission and reception of the optical signal cannot be performed occurs in the wavelength path of the main signal may be separated.

### (Eighth embodiment)

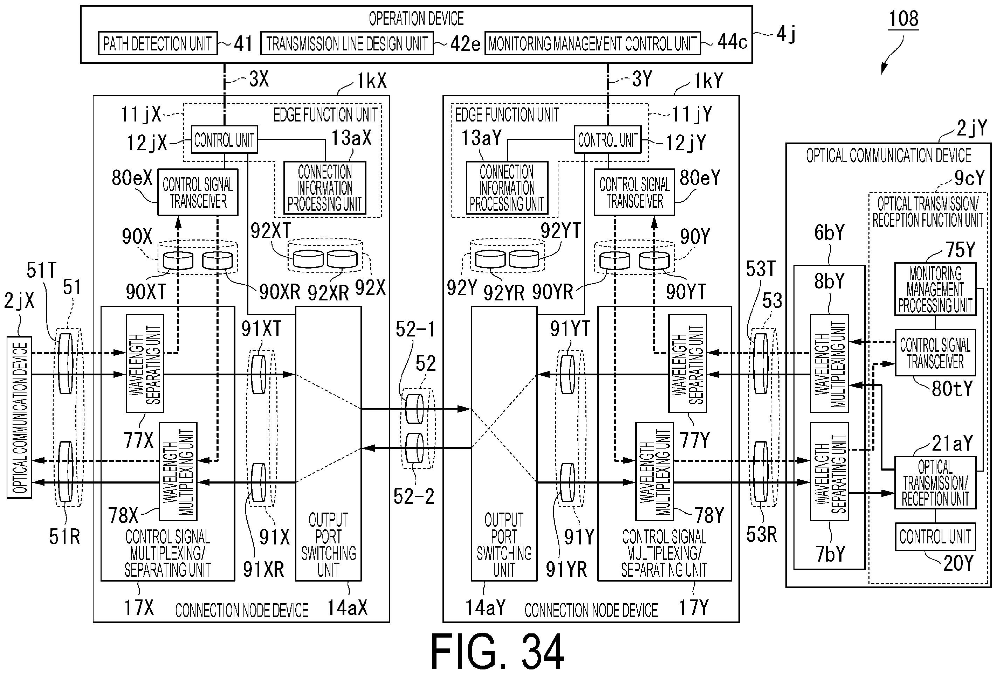

Fig. 34 is a block diagram illustrating a configuration of an optical transmission system 108 of an eighth embodiment. For example, by applying the optical transmission system 104 of the fifth embodiment illustrated in Fig. 21 to the optical transmission system 103 of the fourth embodiment illustrated in Fig. 17 assuming a use case of the Innovative Optical and Wireless Network (IOWN) Global Forum (IGF), the optical transmission system 108 is an optical transmission system that enables monitoring and management of the optical transmission/reception units of two users using a control signal while connecting the optical transmission/reception units of the two users each connected to a connection node device at any wavelength without manual intervention in an optimal transmission mode.

The optical transmission system 108 includes optical communication devices 2jX and 2jY, connection node devices 1kX and 1kY, an operation device 4j, and the optical transmission lines 51, 52, and 53. **In** a case of the optical transmission system 108, the optical communication devices 2jX and 2jY serve as transmission/reception devices that transmit and receive optical signals such as transponders used by users, the connection node devices 1kX and 1kY and the optical transmission line 52 serve as components of what is called a carrier network, and the optical transmission lines 51 and 53 serve as dark fibers.

The optical communication devices 2jX and 2jY have the same configuration. Here, the optical communication device 2jY having an internal configuration illustrated in Fig. 34 will be described, but hereinafter, when a functional unit of the optical communication device 2jX corresponding to a functional unit included in the optical communication device 2jY is illustrated, "Y" of the reference sign of the functional unit included in the optical communication device 2jY is replaced with "X". The optical communication device 2jY has a configuration in which a monitoring management processing unit 75Y, a control signal transceiver 80tY, and a control signal multiplexing/separating unit 6bY are added to the configuration of the optical communication device 2bY of the fourth embodiment. The monitoring management processing unit 75Y has the same configuration as the monitoring management processing unit 75X included in the optical communication device 2gX of the fifth embodiment. The control signal transceiver 80tY and the control signal multiplexing/separating unit 6bY have the same configurations as the control signal transceiver 80tX and the control signal multiplexing/separating unit 6bX included in the optical communication device 2gX of the fifth embodiment, respectively. Hereinafter, when a functional unit of the control signal transceiver 80tY corresponding to a functional unit included in the control signal transceiver 80tX is illustrated, and when a functional unit of the control signal multiplexing/separating unit 6bY corresponding to a functional unit included in the control signal multiplexing/separating unit 6bX is indicated, "X" of the reference sign of the original functional unit is replaced with "Y".

Each of the connection node devices 1kX and 1kY has a configuration in which the configuration of the connection node device 1g of the fifth embodiment is combined with each of the connection node devices 1fX and 1fY of the fourth embodiment. In this combination, in the connection node device 1kX, the control signal multiplexing/separating unit 17X and the output port switching unit 14aX are connected by the main signal internal optical line 91X, and in the connection node device 1kY, the control signal multiplexing/separating unit 17Y and the output port switching unit 14aY are connected by the main signal internal optical line 91Y. Note that Fig. 34 illustrates connection processing internal optical lines 92X and 92Y not illustrated in Fig. 17 of the fourth embodiment in such a manner as to be similar to Figs. 27, 28, and 29 of the sixth and seventh embodiments.

A control unit 12jX included in the connection node device 1kX includes a control unit 12fX and a control unit 12g of the connection node device 1g of the fifth embodiment, and further includes a configuration to distribute the received data to one of the control unit 12fX and the control unit 12g according to the type of the received data. Similarly, the control unit 12jY included in the connection node device 1kY includes a control unit 12fY and a control unit 12g of the connection node device 1g of the fifth embodiment, and further includes a configuration to distribute the received data to one of the control unit 12fY and the control unit 12g according to the type of the received data.

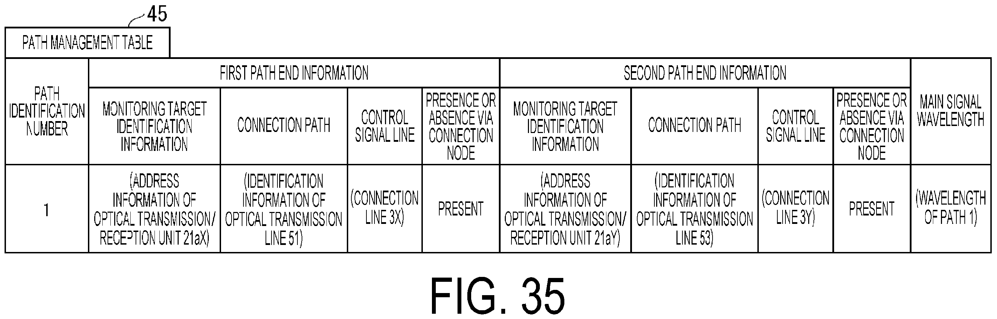

The operation device 4j includes the path detection unit 41 and the transmission line design unit 42e included in the operation device 4e of the fourth embodiment illustrated in Fig. 17, and further includes a monitoring management control unit 44c. The monitoring management control unit 44c has the same configuration as the monitoring management control unit 44a of the sixth embodiment regarding the configuration excluding the following configuration. The data format of the path management table 45 generated in an internal storage area by the monitoring management control unit 44a is, for example, the data format illustrated in Fig. 24. The data written in each item of the data format is generated by the monitoring management control unit 44 on the basis of connection request data and connection information transmitted from the control unit 12h of the connection node device 1h to the operation device 4h, a path information table stored in an internal storage area of the path detection unit 41, a detection result of the path detection unit 41, transmission mode information including the configuration information generated by the transmission line design unit 42, the connection line table stored in an internal storage area of the transmission line design unit 42, and the like. On the other hand, the monitoring management control unit 44c generates the path management table 45 illustrated in Fig. 35 with reference to the connection state table 43 stored in the internal storage area of the transmission line design unit 42e illustrated in Fig. 18 in addition to the data and table referred to by the monitoring management control unit 44 described above when generating the path management table 45.

In the path management table 45 illustrated in Fig. 24, data related to the optical communication device 2iX of the user is written in one of the items of "first path end information" and" second path end information ". On the other hand, in the path management table 45 illustrated in Fig. 35, data regarding the optical communication devices 2jX and 2jY of the users connected to the connection node devices 1kX and 1kY is written in both the items of "first path end information" and "second path end information".

**In** the optical transmission system 108, by performing the connection processing of the fourth embodiment illustrated in Figs. 19 and 20, the wavelength path of the main signal indicated by a bold solid line in Fig. 34 is generated between the optical transmission/reception unit 21aX of the optical communication device 2jX and the optical transmission/reception unit 21aY of the optical communication device 2jY. Then, in the optical transmission system 108 of the eighth embodiment, as in the fifth embodiment, by the operator operating the monitoring management control unit 44c so as to perform processing of acquiring the setting information of the optical transmission/reception unit 21aX of the optical communication device 2jX by, for example, the processing of the sequence diagram of Fig. 26 of the fifth embodiment, a wavelength path of the control signal is generated between the control signal transceiver 80tX of the optical communication device 2jX and the control signal transceiver 80eX of the connection node device 1kX. Similarly, when the processing of acquiring the setting information of the optical transmission/reception unit 21aY of the optical communication device 2jY is performed, the wavelength path of the control signal is generated between the control signal transceiver 80tY of the optical communication device 2jY and the control signal transceiver 80eY of the connection node device 1kY. The monitoring management control unit 44c can monitor and manage the optical communication devices 2jX and 2jY using the generated wavelength path of the control signal.

### (Processing by Optical Transmission System of Eighth Embodiment (Part 1))

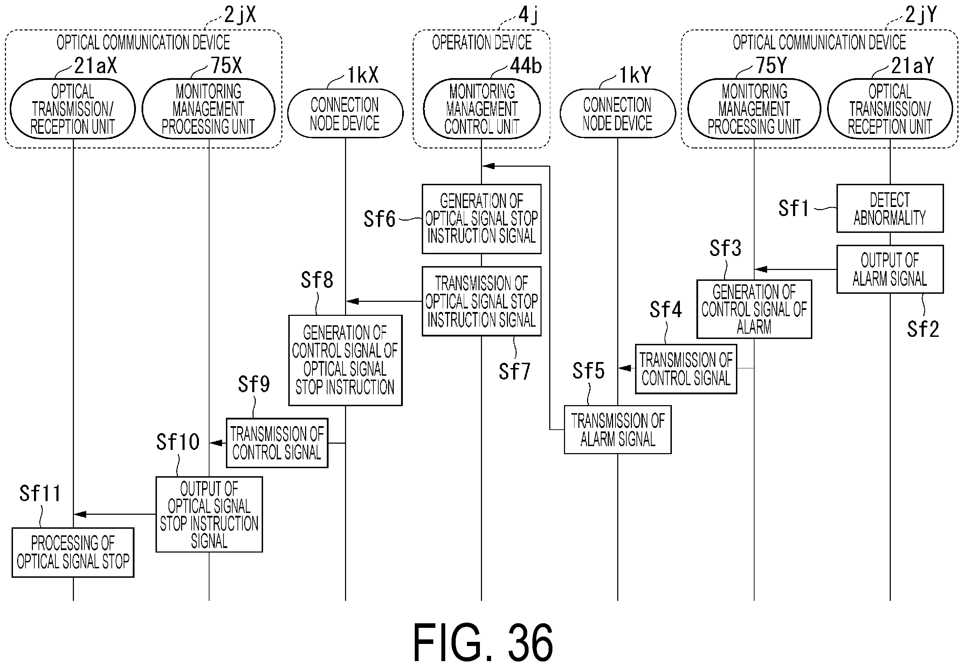

An example of processing performed by the optical transmission system 108 will be described with reference to a sequence diagram illustrated in Fig. 36. As a precondition for starting the processing of the sequence diagram illustrated in Fig. 36, it is assumed that the optical transmission system 108 is in the following state. A wavelength path of one main signal is generated between the optical transmission/reception unit 21aX of the optical communication device 2jX and the optical transmission/reception unit 21aY of the optical communication device 2jY, and the optical signal of the main signal is transmitted and received by the generated wavelength path in an operating state. Between the control signal transceiver 80eX of the connection node device 1kX and the control signal transceiver 80tX of the optical communication device 2jX, and between the control signal transceiver 80eY of the connection node device 1kY and the control signal transceiver 80tY of the optical communication device 2jY, for example, a wavelength path of a control signal is generated by performing processing of acquiring setting information in advance by the processing of the sequence diagram in Fig. 26 of the fifth embodiment described above.

The path management table 45 illustrated in Fig. 35 is generated in an internal storage area of the monitoring management control unit 44c. A control signal transceiver correspondence table 18X in which "identification information for specifying the optical transmission line 51" and "identification information for specifying the control signal transceiver 80eX" are written in the item of "connection path" and the item of "control signal transceiver identification information" corresponding to the item of "connection path" is generated in an internal storage area of the control unit 12jX of the connection node device 1kX. A control signal transceiver correspondence table 18Y in which "identification information for specifying the optical transmission line 53" and "identification information for specifying the control signal transceiver 80eY" are written in the item of "connection path" and the item of "control signal transceiver identification information" corresponding to the item of "connection path" is generated in an internal storage area of the control unit 12jY of the connection node device 1kY.

In the above state, for example, it is assumed that the digital signal processing unit 23aY of the optical transmission/reception unit 21aY of the optical communication device 2jY detects an input power abnormality of an optical signal, deterioration of a forward error correction bit error rate (Pre-FEC-BER (Forward Error Correction Bit Error Rate)), and the like. The digital signal processing unit 23aY outputs an alarm signal including data indicating the detected detection content to the control unit 71aY (step Sf1). Upon capturing the alarm signal output from the digital signal processing unit 23aY, the control unit 71aY reads its own address information stored in the internal storage area, that is, the address information of the optical transmission/reception unit 21aY, and includes the read address information of the optical transmission/reception unit 21aY in the alarm signal. The control unit 71aY outputs an alarm signal including address information of the optical transmission/reception unit 21aY to the monitoring management processing unit 75Y (step Sf2).

Upon receiving the alarm signal from the digital signal processing unit 23aY, the monitoring management processing unit 75Y reads the address information of the optical transmission/reception unit 21aY and the data indicating the detection content included in the alarm signal, and generates an electrical control signal of an alarm type including the read address information of the optical transmission/reception unit 21aY and data indicating the detection content. The monitoring management processing unit 75Y outputs the generated electrical control signal to the control signal transceiver 80tY (step Sf3).

The control signal transceiver 80tY converts the electrical control signal output from the monitoring management processing unit 75Y into an optical control signal and outputs the optical control signal to the wavelength multiplexing unit 8bY of the control signal multiplexing/separating unit 6bY. The wavelength multiplexing unit 8bY wavelength-multiplexes the optical signal of the control signal output from the control signal transceiver 80tY and the optical signal of the main signal output from the optical transmission/reception unit 21aY, and sends the wavelength-multiplexed optical signal to the optical fiber 53T. The optical fiber 53T transmits the optical signal sent from the wavelength multiplexing unit 8bY to the wavelength separating unit 77Y of the control signal multiplexing/separating unit 17Y included in the connection node device 1kY (step Sf4).

Upon receiving the optical signal transmitted by the optical fiber 53T, the wavelength separating unit 77Y of the control signal multiplexing/separating unit 17Y wavelength-separates the received optical signal into the optical signal of the control signal and the optical signal of the main signal. The wavelength separating unit 77Y sends the separated optical signal of the control signal to the optical fiber 90YT, and sends the separated optical signal of the main signal to the optical fiber 91YT. The control signal transceiver 80eY captures the optical signal of the control signal sent from the wavelength separating unit 77Y via the optical fiber 90YT, converts the captured optical signal of the control signal into an electrical control signal, and outputs the electrical control signal to the control unit 12jY. The control unit 12jY captures the control signal output from the control signal transceiver 80eY, and reads data indicating the detection content and address information of the optical transmission/reception unit 21aY included in the captured control signal. Since the type of the captured control signal is the alarm type, the control unit 12jY generates an alarm signal including the read data indicating the detection content and address information of the optical transmission/reception unit 21aY, and transmits the generated alarm signal to the monitoring management control unit 44c of the operation device 4j via the connection line 3Y (step Sf5).

Upon receiving the alarm signal transmitted by the control unit 12jY via the connection line 3Y, the monitoring management control unit 44c reads the data indicating the detection content and the address information of the optical transmission/reception unit 21aY included in the received alarm signal. For example, the monitoring management control unit 44c acquires an abnormality state and an abnormality countermeasure table indicating countermeasures against the abnormality state from the outside in advance and stores the abnormality countermeasure table in the internal storage area, or acquires the abnormality countermeasure table on demand when the alarm signal is received. It is assumed that the monitoring management control unit 44c refers to the abnormality countermeasure table and detects that, for example, the countermeasure corresponding to the read data indicating the detection content is stopping of the optical signal of the main signal on the transmission side.

The monitoring management control unit 44c detects a record corresponding to the read address information of the optical transmission/reception unit 21aY by referring to the path management table 45 stored in the storage area. In a case of the path management table 45 of Fig. 35, the monitoring management control unit 44c detects the record of the path identification number "1" as the record corresponding to the address information of the optical transmission/reception unit 21aY. Since the address information of the optical transmission/reception unit 21aY is included in the "monitoring target identification information" as a sub-item of the "second path end information" of the record, the monitoring management control unit 44c reads the address information of the optical transmission/reception unit 21aX written in the item of "monitoring target identification information" as a sub-item of the "first path end information" in which the data of the transmission source of the optical signal of the main signal is written, and the identification information for specifying the optical transmission line 51 written in the item of "connection path". The monitoring management control unit 44c generates an optical signal stop instruction signal including the read address information of the optical transmission/reception unit 21aX and the identification information for specifying the optical transmission line 51 (step Sf6).

The monitoring management control unit 44c sends the generated optical signal stop instruction signal to the connection line 3X indicated in the item of "control signal line" as a sub-item of the "first path end information" of the detected record (step Sf7). The control unit 12jX of the connection node device 1kX receives the optical signal stop instruction signal transmitted by the monitoring management control unit 44c via the connection line 3X. The control unit 12jX determines that the received optical signal stop instruction signal is a signal of a type to be transmitted by the control signal, and performs the following processing. The control unit 12jX reads the address information of the optical transmission/reception unit 21aX and the identification information for specifying the optical transmission line 51 included in the optical signal stop instruction signal. The control unit 12jX refers to the control signal transceiver correspondence table 18X stored in the internal storage area, and detects the identification information for specifying the control signal transceiver 80eX as data corresponding to the read identification information for specifying the optical transmission line 51. The control unit 12jX generates an electrical control signal of the type of the optical signal stop instruction including the address information of the optical transmission/reception unit 21aX. The control unit 12jX outputs the generated control signal to the detected control signal transceiver 80eX (step Sf8).

The control signal transceiver 80eX converts the electrical control signal output from the control unit 12jX into an optical control signal. The control signal transceiver 80eX sends the optical signal of the control signal generated by the conversion to the optical fiber 90XR. The wavelength multiplexing unit 78X of the control signal multiplexing/separating unit 17X wavelength-multiplexes the optical signal of the control signal sent from the control signal transceiver 80eX captured via the optical fiber 90XR and the optical signal of the main signal sent from the optical transmission/reception unit 21aY received via the optical fiber 91XR. The wavelength multiplexing unit 78X sends the wavelength-multiplexed optical signal to the optical fiber 51R. The optical fiber 51R transmits the optical signal sent from the wavelength multiplexing unit 78X to the wavelength separating unit 7bX of the control signal multiplexing/separating unit 6bX included in the optical communication device 2jX. The wavelength separating unit 7bX wavelength-separates the optical signal transmitted by the optical fiber 51R into an optical signal of a control signal and an optical signal of a main signal. The wavelength separating unit 7bX outputs the separated optical signal of the control signal to the control signal transceiver 80tX, and outputs the separated optical signal of the main signal to the optical transmission/reception unit 21aX. The control signal transceiver 80tX captures the optical signal of the control signal output from the wavelength separating unit 7bX, converts the captured optical signal of the control signal into an electrical control signal, and outputs the electrical control signal to the monitoring management processing unit 75X (step Sf9).

The monitoring management processing unit 75X captures the control signal output from the control signal transceiver 80tX, generates an optical signal stop instruction signal since the captured control signal is the control signal of the type of optical signal stop instruction, and outputs the optical signal stop instruction signal to the control unit 71aX of the optical transmission/reception unit 21aX (step Sf10). Upon receiving the optical signal stop instruction signal from the monitoring management processing unit 75X, the control unit 71aX outputs the stop instruction signal to the digital signal processing unit 23aX, the optical modulator 26X, and the wavelength variable light source 25aX. Upon receiving the stop instruction signal from the control unit 71aX, the digital signal processing unit 23aX and the optical modulator 26X stop the processing. Upon receiving the stop instruction signal from the control unit 71aX, the wavelength variable light source 25aX stops light emission. Thus, the optical transmission/reception unit 21aX stops transmitting the optical signal of the main signal (step Sf11).

As described above, between the optical communication device 2jX of the user and the connection node device 1kX and between the optical communication device 2jY of the user and the connection node device 1kY, an in-band wavelength path via the optical transmission lines 51 and 52 through which the main signal is transmitted, which is the wavelength path of the control signal, is used, and in the carrier network, the operation device 4j can be used to apply a countermeasure corresponding to the detected abnormality to the optical transmission/reception unit 21aX of the opposing optical communication device 2jX on the basis of the abnormality detected in the optical transmission/reception unit 21aY of one optical communication device 2jY.

Note that, in the processing of step Sf10 described above, the monitoring management processing unit 75X may include the address information of the optical transmission/reception unit 21aX included in the captured control signal in the optical signal stop instruction signal output to the control unit 71aX of the optical transmission/reception unit 21aX. In this case, in the processing of step Sf11, the control unit 71aX of the optical transmission/reception unit 21aX may perform processing of outputting a stop instruction signal to the digital signal processing unit 23aX, the optical modulator 26X, and the wavelength variable light source 25aX when the address information included in the optical signal stop instruction signal received from the monitoring management processing unit 75X matches the address information of the optical transmission/reception unit 21aX stored in the internal storage area of itself, or when they do not match, the optical transmission/reception unit 21aX may discard the received optical signal stop instruction signal and perform processing of returning an error message to the monitoring management control unit 44c of the operation device 4j as a response to the optical signal stop instruction signal, for example, by a procedure illustrated as a supplement to the processing of the sequence diagram in Fig. 26 of the fifth embodiment.

### (Processing by Optical Transmission System of Eighth Embodiment (Part 2))

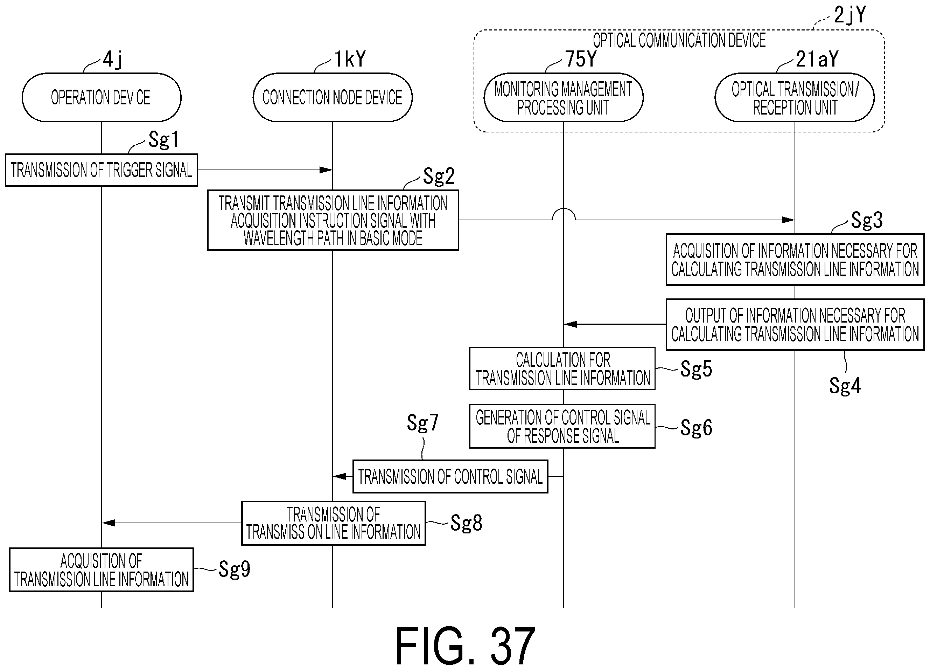

In "another configuration example (part 2) of the fourth embodiment" described above, the optical transmission/reception unit 21aY that has received the transmission line information acquisition instruction signal may use the free space of the overhead of the transmission frame, the communication channel of the transmission frame, or the payload area of the transmission frame as a path when transmitting the response signal to the transmission line information acquisition instruction signal. Instead, a flow of processing of transmitting a response signal to the transmission line information acquisition instruction signal by the optical transmission/reception unit 21aY that has received the transmission line information acquisition instruction signal by using a wavelength path of a control signal between the control signal transceiver 80tY of the optical communication device 2jY and the control signal transceiver 80eY of the connection node device 1kY will be described with reference to a sequence diagram illustrated in Fig. 37.

As a precondition for starting the processing of the sequence diagram illustrated in Fig. 37, it is assumed that the optical transmission system 108 is in the following state. The wavelength path of the main signal is not generated between the optical transmission/reception unit 21aX of the optical communication device 2jX and the optical transmission/reception unit 21aY of the optical communication device 2jY. Thus, the output port switching unit 14aX of the connection node device 1kX is in a state of connecting the optical transmission/reception unit 21aX and the connection information processing unit 13aX. Similarly, the output port switching unit 14aY of the connection node device 1kY is in a state of connecting the optical transmission/reception unit 21aY and the connection information processing unit 13aY. A wavelength path of the basic mode is generated between the optical transmission/reception unit 21aX and the connection information processing unit 13aX and between the optical transmission/reception unit 21aY and the connection information processing unit 13aY. For example, the processing of acquiring the setting information by the processing of the sequence diagram of Fig. 26 of the fifth embodiment described above is performed in advance, so that the wavelength path of the control signal is generated between the control signal transceiver 80tY and the control signal transceiver 80eY.

In the above state, the transmission line design unit 42e of the operation device 4j transmits a trigger signal for retransmitting the connection information and the like to the control unit 12jY of the connection node device 1kY via the connection line 3Y (step Sg1).

Upon receiving the trigger signal transmitted from the transmission line design unit 42e via the connection line 3Y, the control unit 12jY determines that the received trigger signal is a signal related to the connection processing of the main signal, and generates the transmission line information acquisition instruction signal. The control unit 12jY outputs the generated transmission line information acquisition instruction signal to the digital signal processing unit 32aY of the connection information processing unit13aY. The digital signal processing unit 32aY captures the transmission line information acquisition instruction signal output from the control unit 12jY, and outputs the captured transmission line information acquisition instruction signal to the optical transmission unit 35Y. Upon capturing the transmission line information acquisition instruction signal output from the digital signal processing unit 32aY, the optical transmission unit 35Y generates an optical signal including the captured transmission line information acquisition instruction signal and having the wavelength of the basic mode, that is, the basic wavelength by optical modulation. The optical transmission unit 35Y sends the optical signal of the main signal generated via the IF unit 31Y to an optical fiber 92YR of the connection processing internal optical line 92Y.

The output port switching unit 14aY sends the optical signal of the basic wavelength captured via the optical fiber 92YR to the optical fiber 91YR of the main signal internal optical line 91Y. The wavelength multiplexing unit 78Y of the control signal multiplexing/separating unit 17Y wavelength-multiplexes the optical signal of the basic wavelength received via the optical fiber 91YR and the optical signal of the control signal sent from the control signal transceiver 80eY captured via the optical fiber 90YR of the control signal internal optical line 90Y, and sends the wavelength-multiplexed optical signal to the optical fiber 53R (step Sg2).

The wavelength separating unit 7bY of the control signal multiplexing/separating unit 6bY of the optical communication device 2jY wavelength-separates the optical signal transmitted by the optical fiber 53R into the optical signal of the control signal and the optical signal of the basic wavelength. The wavelength separating unit 7bY outputs the separated optical signal of the basic wavelength to the optical transmission/reception unit 21aY, and outputs the separated optical signal of the control signal to the control signal transceiver 80tY. The optical reception unit 27Y of the optical transmission/reception unit 21aY captures the optical signal of the basic wavelength output from the wavelength separating unit 7bY via the IF unit 22Y, converts the captured optical signal into an electrical reception data signal, and outputs the electrical reception data signal to the digital signal processing unit 23aY. The digital signal processing unit 23aY captures the reception data signal output from the photodetector 28Y, reads the transmission line information acquisition instruction signal from the captured reception data signal, and outputs the read transmission line information acquisition instruction signal to the control unit 71aY. Upon capturing the transmission line information acquisition instruction signal output from the digital signal processing unit 23aY, the control unit 71aY acquires information regarding the optical transmission line 53 from the captured reception data signal. Here, the information regarding the optical transmission line 53 is, for example, information necessary for calculating transmission line information of the optical transmission line 53 (step Sg3). The control unit 71aY outputs the acquired information regarding the optical transmission line 53 to the monitoring management processing unit 75Y (step Sg4).

The monitoring management processing unit 75Y captures the information regarding the optical transmission line 53 output from the control unit 71aY, and calculates the transmission line information of the optical transmission line 53 by predetermined calculation on the basis of the captured information regarding the optical transmission line 53 (step Sg5). The monitoring management processing unit 75Y generates an electrical control signal of the type of the response signal of the transmission line information acquisition instruction signal including the calculated transmission line information of the optical transmission line 53 (step Sg6).

The monitoring management processing unit 75Y outputs the generated electrical control signal to the control signal transceiver 80tY. The control signal transceiver 80tY converts the electrical control signal output from the monitoring management processing unit 75Y into an optical control signal and outputs the optical control signal to the wavelength multiplexing unit 8bY of the control signal multiplexing/separating unit 6bY. The wavelength multiplexing unit 8bY wavelength-multiplexes the optical signal of the control signal output from the control signal transceiver 80tY and the optical signal of the basic wavelength output from the optical transmission/reception unit 21aY, and sends the wavelength-multiplexed optical signal to the optical fiber 53T. The optical fiber 53T transmits the optical signal sent from the wavelength multiplexing unit 8bY to the wavelength separating unit 77Y of the control signal multiplexing/separating unit 17Y included in the connection node device 1kY (step Sg7).

Upon receiving the optical signal transmitted by the optical fiber 53T, the wavelength separating unit 77Y wavelength-separates the received optical signal into the optical signal of the control signal and the optical signal of the basic wavelength. The wavelength separating unit 77Y sends the separated optical signal of the control signal to the optical fiber 90YT, and sends the separated optical signal of the basic wavelength to the optical fiber 91YT. The optical signal of the basic wavelength sent to an optical fiber 91YT is transmitted to the optical fiber 92YT by the output port switching unit 14aY, and is received by the connection information processing unit 13aY. The control signal transceiver 80eY captures the optical signal of the control signal sent from the wavelength separating unit 77Y via the optical fiber 90YT, converts the captured optical signal of the control signal into an electrical control signal, and outputs the electrical control signal to the control unit 12jY.

The control unit 12jY of the connection node device 1kY captures the control signal output from the control signal transceiver 80eY. Since the type of the captured control signal is the type of the response signal of the transmission line information acquisition instruction signal, the control unit 12jY reads the transmission line information of the optical transmission line 53 from the control signal, and transmits the response signal of the trigger signal including the read transmission line information of the optical transmission line 53 to the operation device 4j via the connection line 3Y (step Sg8).

The monitoring management control unit 44c of the operation device 4j receives the response signal of the trigger signal including the transmission line information of the optical transmission line 53 transmitted by the control unit 12jY via the connection line 3Y, and reads the transmission line information of the optical transmission line 53 from the received response signal of the trigger signal. The monitoring management control unit 44c outputs the read transmission line information of the optical transmission line 53 to the transmission line design unit 42e. The transmission line design unit 42e captures and acquires the transmission line information of the optical transmission line 53 output from the monitoring management control unit 44c (step Sg9).

As described above, at the stage of the connection processing of establishing the wavelength path of the main signal between the optical transmission/reception unit 21aX of the optical communication device 2jX and the optical transmission/reception unit 21aY of the optical communication device 2jY, transmission and reception of data necessary for the connection processing can be performed using the wavelength path of the control signal.

Note that, in the processing illustrated in Fig. 37 above, in the processing of step Sg5, the monitoring management processing unit 75Y calculates the transmission line information of the optical transmission line 53 from the information regarding the optical transmission line 53. On the other hand, the monitoring management processing unit 75Y may not calculate the transmission line information of the optical transmission line 53 from the information regarding the optical transmission line 53, the control unit 71aY of the optical transmission/reception unit 21aY may calculate the transmission line information of the optical transmission line 53 from the information regarding the optical transmission line 53, and output the calculated transmission line information of the optical transmission line 53 to the monitoring management processing unit 75Y, and the monitoring management processing unit 75Y may generate an electrical control signal including the transmission line information of the optical transmission line 53 output by the control unit 71aY.

The monitoring management processing unit 75Y may not calculate the transmission line information of the optical transmission line 53 from the information regarding the optical transmission line 53, and the monitoring management processing unit 75Y may generate an electrical control signal of the type of the response signal of the transmission line information acquisition instruction signal including the information regarding the optical transmission line 53. In this case, the transmission line design unit 42e of the operation device 4j acquires the information regarding the optical transmission line 53 instead of the transmission line information of the optical transmission line 53, and the transmission line design unit 42e calculates the transmission line information of the optical transmission line 53 from the acquired information regarding the optical transmission line 53.

With the above configuration, in addition to the effects of the optical transmission system 103 of the fourth embodiment, the optical transmission system 108 of the eighth embodiment can obtain the effects of applying the fifth embodiment, that is, the effect of being capable of accessing the user-side optical communication devices 2jX and 2jY to perform monitoring and management without using a communication path different from a communication path of the optical transmission line for transmitting and receiving the main signal with respect to the user-side optical communication devices 2jX and 2jY having only the communication path.

The connection node devices 1kX and 1kY of the eighth embodiment may have a configuration as illustrated in Fig. 28, that is, a configuration in which the control signal transceiver 80eX and the control signal multiplexing/separating unit 17X are connected via the output port switching unit 14aX, and a configuration in which the control signal transceiver 80eY and the control signal multiplexing/separating unit 17Y are connected via the output port switching unit 14aY.

### (Supplementary matters)

The sixth to eighth embodiments are embodiments in which the fifth embodiment is applied to the second to fourth embodiments, respectively. Furthermore, as described in the fifth embodiment, the fifth embodiment can also be applied to the first embodiment. Similarly, the fifth embodiment can be similarly applied to other configuration examples supplementarily described with respect to the second to fourth embodiments. Consequently, in addition to the effect of the configuration before the fifth embodiment is applied, the effect of applying the fifth embodiment, that is, the effect of being capable of accessing the user-side optical communication device to perform monitoring and management without using a communication path different from a communication path of the optical transmission line for transmitting and receiving the main signal with respect to the user-side optical communication device having only the communication path can be obtained.

In the sixth to eighth embodiments described above, the control units 12a, 12b, 12fX, and 12fY of the connection node devices 1a, 1b, 1fX, and 1fY of the second to fourth embodiments and the control unit 12g of the connection node device 1g of the fifth embodiment are combined, and data is further distributed according to the type of received data. On the other hand, in the sixth to eighth embodiments, the combination as described above may not be performed, and individual provision may be performed in a state before the combination. Taking the case of the sixth embodiment as an example, the control unit 12a and the control unit 12g are individually provided, and a line corresponding to the connection line 3 is connected to each of the control unit 12a and the control unit 12g so as to connect to the operation device 4h. In this case, the path detection unit 41 and the transmission line design unit 42 included in the operation device 4h are connected to the connection lines connected to the control unit 12a, and the monitoring management control unit 44a has a configuration of switching the output destination of data to one of the connection lines connected to each of the control unit 12a and the control unit 12g depending on the type of the data to be transmitted.

In the fifth to eighth embodiments described above, the monitoring management control units 44, 44a, 44b, and 44c of the operation devices 4g, 4h, 4i, and 4j may transmit a monitoring control signal or a control signal of an alarm in response to an operation of the operator or periodically using a wavelength path of a control signal. The monitoring management processing units 75X, 75X-1 to 75X-m, 75aX, and 75Y of the optical communication devices 2gX, 2gX-1 to 2gX-m, 2hX, 2iX, 2jX, and 2jY may periodically transmit the control signal of an alarm such as a device alarm or a communication alarm to the monitoring management control units 44, 44a, 44b, and 44c by using the wavelength path of the control signal.

Taking the optical transmission system 104 of the fifth embodiment in Fig. 21 as an example among the above-described fifth to eighth embodiments, it is assumed that a wavelength value of an optical signal of a main signal from the optical transmission/reception unit 21X of the optical communication device 2gX toward the optical transmission/reception unit 21Y of the optical communication device 2Y (hereinafter referred to as a "first main signal wavelength value") and a wavelength value of an optical signal of a main signal from the optical transmission/reception unit 21Y of the optical communication device 2Y toward the optical transmission/reception unit 21X of the optical communication device 2gX (hereinafter referred to as a "second main signal wavelength value") are the same wavelength value, and one wavelength value is written in the item of "main signal wavelength" of the path management table 45 illustrated in Fig. 24. On the other hand, in the fifth to eighth embodiments, when the first main signal wavelength value and the second main signal wavelength value are different, for example, it is necessary to select the wavelength value of the control signal corresponding to each of transmission directions of the control signal as follows. Taking the fifth embodiment as an example, since the wavelength values of two main signals exist, data in which the wavelength values of the two main signals and the transmission direction are associated with each other is written in the item of "main signal wavelength" of the path management table 45 illustrated in Fig. 24. In the processing of step Se1 in Fig. 26, the monitoring management control unit 44 selects a wavelength value different from the second main signal wavelength value in the item of "main signal wavelength" as the wavelength value of the control signal for the control signal transceiver 80e-1 of the connection node device 1g (hereinafter referred to as a "second control signal wavelength value"). The monitoring management control unit 44 selects a wavelength value different from the first main signal wavelength value in the item of "main signal wavelength" as the wavelength value of the control signal for the control signal transceiver 80tX-1 of the optical communication device 2gX-1 (hereinafter referred to as a "first control signal wavelength value"). The monitoring management control unit 44 generates a setting information acquisition request signal including the selected wavelength values of the two control signals, and outputs the setting information acquisition request signal to the control unit 12g of the connection node device 1g. In the processing of step Se4, the control unit 12g outputs the second control signal wavelength value included in the setting information acquisition request signal to the control signal transceiver 80e-1. In the processing of step Se10, the monitoring management processing unit 75X of the optical communication device 2gX-1 outputs the first control signal wavelength value included in the control signal to the control signal transceiver 80tX-1. Thus, the wavelength value of the control signal can be set to a value different from the wavelength value of the main signal for each transmission direction of the control signal. Also in the sixth to eighth embodiments, the wavelength value of the control signal can be set to a value different from the wavelength value of the main signal for each transmission direction of the control signal by a procedure similar to that described above.

In the fifth to eighth embodiments described above, the monitoring management control units 44, 44a, 44b, and 44c select the wavelength value of the control signal every time the processing of acquiring the setting information illustrated in the sequence diagram of Fig. 26 is performed. In a case where it is not necessary to select the wavelength value of the control signal every time the processing illustrated in the sequence diagram of Fig. 26 is performed, the following may be performed. For example, the monitoring management control units 44, 44a, 44b, and 44c are provided with a control signal wavelength management table having two items of "connection path" and "control signal wavelength" in the internal storage area. Here, it is assumed that an optical transmission line as a target of selecting a wavelength value corresponding to the optical signal of the control signal is the optical transmission line 51. Before performing the processing of selecting the wavelength value corresponding to the optical signal of the control signal in the processing of step Se1, the monitoring management control units 44, 44a, 44b, and 44c determine whether or not there is a record in which information matching the identification information for specifying the optical transmission line 51 as a target of selecting the wavelength value corresponding to the optical signal of the control signal is written in the item of "connection path" in the control signal wavelength management table, and if not, perform the processing of selecting the wavelength value corresponding to the optical signal of the control signal. After selecting the wavelength value corresponding to the optical signal of the control signal, the monitoring management control units 44, 44a, 44b, and 44c write and store the selected wavelength value corresponding to the optical signal of the control signal and the identification information for specifying the optical transmission line 51 in the control signal wavelength management table in association with each other. In this manner, for example, when the wavelength value of one control signal is selected in the optical transmission line 51, in the processing illustrated in the sequence diagram of Fig. 26 to be performed again, the processing of selecting the wavelength of the optical signal of the control signal can be prevented from being performed on the optical transmission line 51.

In the fifth to eighth embodiments, for example, as described in the processing of step Se1 in Fig. 26, the monitoring management control unit 44, 44a, 44b, or 44c selects a wavelength value different from the wavelength value of the wavelength path of the main signal written in the item of "main signal wavelength" of the path management table 45 as the wavelength value of the wavelength path of the control signal. In addition, the above description indicates that the "control signal wavelength selection condition" may be applied when the wavelength value of the wavelength path of the control signal is selected. As described above, a detailed configuration in a case where any wavelength value other than the wavelength value of the wavelength path of the main signal is selected as the wavelength value of the control signal will be described using the fifth embodiment as an example. It is assumed that an optical signal in which the optical signal of the control signal having the wavelength value selected by the monitoring management control unit 44 and the optical signal of the main signal are wavelength-multiplexed is transmitted by the optical fiber 51R illustrated in Fig. 21, and the wavelength separating unit 7bX of the control signal multiplexing/separating unit 6bX of the optical communication device 2gX captures the wavelength-multiplexed optical signal. The wavelength separating unit 7bX wavelength-separates the captured wavelength-multiplexed optical signal into the optical signal of the main signal and the optical signal of the control signal. In this case, if the wavelength value of the wavelength path of the main signal is fixedly determined in advance, the wavelength separating unit 7bX is set in advance so that an optical signal having the wavelength of the wavelength path of the main signal is output to the optical transmission/reception unit 21X, and an optical signal having the wavelength other than the wavelength of the wavelength path of the main signal is output to the control signal transceiver 80tX. With such setting, the wavelength separating unit 7bX can output the wavelength-separated optical signal of the main signal to the optical transmission/reception unit 21X, and can output the wavelength-separated optical signal of the control signal to the control signal transceiver 80tX. Note that, also in the wavelength separating unit 77 of the control signal multiplexing/separating unit 17 of the connection node device 1g, similar setting as that of the wavelength separating unit 7bX is performed. In addition, as in the seventh embodiment illustrated in Fig. 29, in a case where the plurality of optical transmission/reception units 21aX-1 to 21aX-m is provided in the optical communication device 2iX, a plurality of wavelength values of the wavelength path of the main signal is fixedly determined in advance.

Hereinafter, a method in which the monitoring management control units 44, 44a, 44b, and 44c of the fifth to eighth embodiments described above select the wavelength value of the wavelength path of the control signal other than the method of selecting a wavelength value different from the wavelength value of the wavelength path of the main signal as the wavelength value of the wavelength path of the control signal will be described using the fifth embodiment as an example.

For example, a method in which the wavelength band of the main signal and the wavelength band of the control signal are determined in advance may be employed. When this method is employed, in the wavelength separating unit 7bX, it is determined in advance that a signal having a wavelength included in the wavelength band of the main signal is output to an output port connected to the optical transmission/reception unit 21X, and it is determined in advance that a signal having a wavelength included in the wavelength band of the control signal is output to an output port connected to the control signal transceiver 80tX. Similarly, in the wavelength separating unit 77, it is determined in advance that a signal having a wavelength included in the wavelength band of the main signal is output to an output port connected to the optical fiber 52T, and it is determined in advance that a signal having a wavelength included in the wavelength band of the control signal is output to an output port connected to the optical fiber 90T.

In a case where the monitoring management control unit 44 of the operation device 4g selects the wavelength value of the wavelength path of the control signal, if the wavelength value is selected from the predetermined wavelength band of the control signal without referring to the wavelength value of the wavelength path of the main signal written in the item of "main signal wavelength" of the path management table 45, the wavelength value becomes a wavelength value different from the wavelength value of the wavelength path of the main signal, and thus it is possible to select a wavelength value different from the wavelength value of the wavelength path of the main signal as the wavelength value of the wavelength path of the control signal. Here, as the wavelength band of the main signal and the wavelength band of the control signal, the operator may set any range so that the respective wavelength bands are different, and for example, a range determined on the basis of properties of an optical device such as an optical fiber may be set in advance, such as setting the wavelength band of the main signal to the C band or the C band and the L band, and setting the wavelength band of the control signal to the O band.

In this case, for example, in a case where the plurality of optical transmission/reception units 21aX-1 to 21aX-m is provided as in the seventh embodiment illustrated in Fig. 29, the internal configuration of the wavelength separating unit 7bX may be configured as follows, for example. The wavelength separating unit 7bX includes an optical splitter that separates the wavelength band of the main signal and the wavelength band of the control signal, and further connects the AWG to an output of the wavelength band of the main signal of the optical splitter. A control signal transceiver 80tX is connected to an output of the wavelength band of the control signal of the optical splitter. Each of the optical transmission/reception units 21aX-1 to 21aX-m is connected to each of a plurality of outputs of the AWG. Note that the optical communication device 2iX including a plurality of control signal transceivers 80tX is not described in the above-described fifth to eighth embodiments, but in a case where such a configuration is assumed, the AWG may be connected to the output of the wavelength band of the control signal of the optical splitter, and each of the plurality of control signal transceivers 80tX may be connected to each of the plurality of outputs of the AWG. However, in such a configuration, each of wavelength values of the control signal branched by the AWG corresponds one-to-one to each of the plurality of control signal transceivers 80tX. Thus, in the monitoring management control unit 44b of the operation device 4i, it is necessary to acquire in advance data indicating a correspondence relationship between each of wavelength values of the control signal branched by the AWG and each of the plurality of control signal transceivers 80tX.

For example, a method in which the wavelength value of the main signal and the wavelength value of the control signal are determined in advance may be employed. In a case where this method is employed, in the wavelength separating unit 7bX, it is determined in advance that a wavelength of the main signal is output to the output port connected to the optical transmission/reception unit 21X, and it is determined in advance that a signal having a wavelength of the control signal is output to the output port connected to the control signal transceiver 80tX. Similarly, in the wavelength separating unit 77, it is determined in advance that a signal having a wavelength of the main signal is output to the output port connected to the optical fiber 52T, and it is determined in advance that a signal having a wavelength of the control signal is output to the output port connected to the optical fiber 90T. In a case where the monitoring management control unit 44 of the operation device 4g selects the wavelength value of the wavelength path of the control signal, if a predetermined wavelength value of the control signal is selected without referring to the wavelength value of the wavelength path of the main signal written in the item of "main signal wavelength" of the path management table 45, the wavelength value becomes a wavelength value different from the wavelength value of the wavelength path of the main signal, and thus it is possible to select a wavelength value different from the wavelength value of the wavelength path of the main signal as the wavelength value of the wavelength path of the control signal. Note that, in the case of the seventh embodiment illustrated in Fig. 29, a plurality of wavelength values of the main signal is determined in advance.

In a case of employing the above-described method in which the wavelength value of the main signal and the wavelength value of the control signal are determined in advance, for example, in the C-band wavelength band, the wavelength value of the main signal and the wavelength value of the control signal can be determined in advance. In this case, the wavelength value of the main signal and the wavelength value of the control signal may be set to be close to each other. In this manner, for example, if the wavelength value of the control signal is determined in the range of wavelengths to be amplified by a C-band optical amplifier provided for amplifying the main signal, the optical signal of the control signal can be amplified together with the optical signal of the main signal by the optical amplifier. However, when there is a concern about the influence of the main signal on the optical signal, it is preferable to select a value away from the wavelength value of the main signal as the wavelength value of the control signal.

Taking the fifth embodiment as an example among the fifth to eighth embodiments described above, the control signal transceiver 80tX and the control signal transceiver 80e have the same configuration, and each of the control unit 81tX, the IF unit 82tX, the digital signal processing unit 83tX, the wavelength variable light source 85tX, the optical modulator 86tX, and the photodetector 88tX included in the control signal transceiver 80tX has the same configuration as the control unit 71aX-1, the IF unit 22X-1, the digital signal processing unit 23aX-1, the wavelength variable light source 25aX-1, the optical modulator 26X-1, and the photodetector 28X-1, which are functional units included in the optical transmission/reception unit 21aX-1 described in the third embodiment and have the same names except for the reference signs. That is, the control signal transceiver 80tX and the control signal transceiver 80e are an interface, a bit rate, and a module at the same speed as the optical transmission/reception unit 21X, the optical transmission/reception unit 21aX-1, and the like that transmit and receive the main signal. On the other hand, in the fifth to eighth embodiments, the control signal transceivers 80tX and 80tX-1 to 80tX-m and the control signal transceivers 80e, 80e-1 to 80e-m, 80eX, and 80eY may be interfaces, bit rates, and modules having lower speeds than the optical transmission/reception units 21X, 21Y, 21X-1 to 21X-m, 21Y-1 to 21Y-m, 21aX, 21aX-1 to 21aX-m, 21aY, and 21aY-1 to 21aY-n that transmit and receive main signals. For example, when the main signal is at a speed exceeding 100 giga bit per second (Gbps), the control signal may also be at a speed exceeding 100 Gbps or at a low speed such as 1 Gbps to 10 Gbps.

In the fifth, sixth, and eighth embodiments, the "optical communication device identification information" described in the seventh embodiment may be used. To describe the optical transmission system 104a of the fifth embodiment illustrated in Fig. 23 as an example, the optical communication device identification information is added in advance to each of the optical communication devices 2gX-1 to 2gX-m of the fifth embodiment, and in the internal storage area of each of the monitoring management processing units 75X-1 to 75X-m of the optical communication devices 2gX-1 to 2gX-m, the optical communication device identification information of the respective corresponding optical communication devices 2gX-1 to 2gX-m is written in advance. In the internal storage area of the monitoring management control unit 44 of the operation device 4g, optical communication device tables 46-1 to 46-m which are tables having the same format as the optical communication device table 46 illustrated in Fig. 31 and respectively correspond to the optical communication devices 2gX-1 to 2gX-m are generated. In the item of "optical communication device identification information" in each of the optical communication device tables 46-1 to 46-m, the optical communication device identification information of the respective corresponding optical communication devices 2gX-1 to 2gX-m is written. The identification information for specifying the optical transmission lines 51-1 to 51-m to which the respective corresponding control signal transceivers 80e-1 to 80e-m are connected is written in the item of "connection path" in each of the optical communication device tables 46-1 to 46-m. In the item of "contained optical transmission/reception unit" of each of the optical communication device tables 46-1 to 46-m, the address information of the respective optical transmission/reception units 21X-1 to 21X-m included is written. In this case, in the monitoring management control unit 44, when the operation of sending the setting information acquisition request illustrated in Fig. 26 is performed by the operator, the optical communication device identification information of the optical communication devices 2gX-1 to 2gX-m is designated instead of the address information of the optical transmission/reception units 21X-1 to 21X-m from which the setting information is to be acquired. For example, in a case where the optical communication device identification information of the optical communication device 2gX-1 is designated by operation of the operator, the monitoring management control unit 44 performs processing of detecting the optical communication device table 46-1 including the optical communication device identification information of the optical communication device 2gX-1 in the item of "optical communication device identification information" and transmitting the all setting information acquisition request signal described in the seventh embodiment on the basis of the detected optical communication device table 46-1.

In the optical communication device 2gX of the above-described fifth embodiment, as illustrated in Fig. 21, the control signal transceiver 80tX, the optical transmission/reception unit 21X, and the monitoring management processing unit 75X may be integrally configured as an optical transmission/reception function unit 9X. In the optical communication device 2hX of the sixth embodiment, as illustrated in Figs. 27 and 28, the control signal transceiver 80tX, the optical transmission/reception unit 21X, the monitoring management processing unit 75X, and the control unit 20X may be integrally configured as an optical transmission/reception function unit 9aX. In the optical communication device 2iX of the seventh embodiment, as illustrated in Fig. 29, the control signal transceiver 80tX, the optical transmission/reception units 21aX-1 to 21aX-m, the monitoring management processing unit 75aX, and the control unit 20aX may be integrally configured as an optical transmission/reception function unit 9bX. In the optical communication device 2jY of the eighth embodiment, as illustrated in Fig. 34, the control signal transceiver 80tY, the optical transmission/reception unit 21aY, the monitoring management processing unit 75Y, and the control unit 20Y may be integrally configured as an optical transmission/reception function unit 9cY, and similarly, in the optical communication device 2jX, the control signal transceiver 80tX, the optical transmission/reception unit 21aX, the monitoring management processing unit 75X, and the control unit 20X may be integrally configured as an optical transmission/reception function unit 9cX. Note that the optical transmission/reception function units 9X, 9aX, 9bX, 9cX, and 9cY are, for example, transponders integrally configured.

The connection node devices 1, 1a, 1b, 1c, 1d, 1e, 1fX, 1fY, 1h, 1i, 1j, 1kX, and 1kY including the edge function units 11, 11a, 11b, 11c, 11d, 11e, 11fX, 11fY, 11h, 11i, 11jX, and 11jY described in the first to fourth embodiments and the sixth to eighth embodiments described above are limited to the "edge" included in the name of the "edge function unit" included in themselves, and are not interpreted as nodes of the edges. The "edge function unit" may be, for example, a name such as "main signal function unit" which is not limited to the "edge".

In the fifth to eighth embodiments, the monitoring management control units 44, 44a, 44b, and 44c select the wavelength value of the control signal. On the other hand, in a case where each of the control units 12g, 12h, 12i, 12jX, and 12jY of the connection node devices 1g, 1h, 1i, 1j, and 1k can acquire in advance the wavelength value of the optical signal of the main signal passing through the respective corresponding connection node devices 1g, 1h, 1i, 1j, and 1k from the optical interface of the connection node devices 1g, 1h, 1i, 1j, and 1k, or the like, the control units 12g, 12h, 12i, 12jX, and 12jY may select the wavelength value of the control signal at the timing when the control signal transceivers 80e, 80e-1 to 80e-m, 80eX, and 80eY that output the control signal are selected.

### (Method for Generating Wavelength Path of Control Signal in Each Embodiment)

Hereinafter, as a method of generating a wavelength path of a control signal in the fifth to eighth embodiments, a method other than the above-described method will be described using the optical transmission system 104 of the fifth embodiment illustrated in Fig. 21 or the optical transmission system 105 of the sixth embodiment illustrated in Fig. 27 as an example. Note that the contents described below are not limited to the specific application to the fifth and sixth embodiments, and are similarly applied to all the embodiments of the fifth to eighth embodiments.

As described above, when the processing of the sequence diagram of Fig. 26 is performed, the monitoring management control unit 44 selects the wavelength value of the control signal in the processing of step Se1. As described above, the processing of selecting the wavelength value of the control signal may be performed by the control unit 12g of the connection node device 1g. On the other hand, as the wavelength value of the control signal to be set in the control signal transceivers 80e and 80tX, a value determined in advance by a standard, a de facto standard, device specifications, or the like may be stored in advance in internal storage areas of the control units 81e and 81tX of the control signal transceivers 80e and 80tX, and when the control signal transceivers 80e and 80tX are activated, each of the control units 81e and 81tX may set the wavelength to the wavelength variable light sources 85e and 85tX corresponding thereto, respectively.

The configuration information that needs to be set in the control signal transceivers 80e and 80tX includes, in addition to the wavelength value, setting parameters such as output optical power to be set in the wavelength variable light sources 85e and 85tX, a modulation scheme to be set in the optical modulators 86e and 86tX, a baud rate to be set in the digital signal processing units 83e and 83tX, a bit rate, an FEC type, and a signal band permitted to be used. These pieces of configuration information need to be set by the following method in the fifth embodiment. For example, there is a method in which the operator defines these pieces of configuration information, connects the terminal device for management to the control signal transceivers 80e and 80tX, and writes and sets the defined configuration information in the internal storage areas of the control units 81e and 81tX of the control signal transceivers 80e and 80tX, and when the control signal transceivers 80e and 80tX are activated, the control units 81e and 81tX read the configuration information from the internal storage area and perform setting. In a case where these pieces of configuration information are predetermined by a standard, a de facto standard, device specifications, or the like, there is a method in which predetermined configuration information is stored in advance in the internal storage areas of the control units 81e and 81tX of the control signal transceivers 80e and 80tX, and when the control signal transceivers 80e and 80tX are activated, the control units 81e and 81tX read the configuration information from the internal storage area and perform setting.

As described above, the wavelength path of the control signal can be generated when the control signal transceivers 80e and 80tX are activated by using the configuration information that is predetermined by the standard, the de facto standard, the device specifications, or the like and also includes the wavelength value of the control signal. In this case, the optical transmission/reception unit 21X or the control unit 12g of the connection node device 1g can also perform transmission and reception of data performed in the basic mode described in the first to fourth embodiments by using the wavelength path of the control signal.

On the other hand, taking the sixth embodiment as an example among the sixth to eighth embodiments, the optical transmission system 105 of the sixth embodiment includes the configuration of the optical transmission system 101 of the second embodiment, so that the optical transmission/reception unit 21X of the optical communication device 2hX and the optical transmission/reception unit 21Y of the optical communication device 2Y can generate the wavelength path of the main signal without manual intervention. Thus, as a method for generating the wavelength of the control signal, for example, the following method can be employed.

In the processing of step Sa6 in Fig. 6, the transmission line design unit 42 of the operation device 4h generates transmission mode information to be applied to the wavelength path of the main signal, and outputs the generated transmission mode information to the monitoring management control unit 44a. The monitoring management control unit 44a captures transmission mode information to be applied to the wavelength path of the main signal output by the transmission line design unit 42, and generates the path management table 45 on the basis of the captured transmission mode information. The monitoring management control unit 44a selects the wavelength value of the control signal on the basis of the generated path management table 45.

The monitoring management control unit 44a outputs the selected wavelength value of the control signal to the transmission line design unit 42. After capturing the wavelength value of the control signal output from the monitoring management control unit 44a, the transmission line design unit 42 generates configuration information of the wavelength path of the control signal on the basis of the captured wavelength value of the control signal, the transmission line characteristics referred to when the transmission mode information to be applied to the wavelength path of the main signal is generated, and the like.

In the processing of step Sa7-2 in Fig. 6, the transmission line design unit 42 transmits the configuration information to be applied to the wavelength path of the control signal together with the transmission mode information to be applied to the wavelength path of the main signal to the control unit 12h of the connection node device 1h. In the processing of step Sa8-2 in Fig. 6, upon receiving the configuration information to be applied to the wavelength path of the control signal, the control unit 12h of the connection node device 1h outputs the captured configuration information to be applied to the wavelength path of the control signal to the control unit 81e of the control signal transceiver 80e. The control unit 81e captures configuration information output from the control unit 12h, and sets the captured configuration information in the optical transmission unit 84e and the digital signal processing unit 83e. Thereafter, in the processing of step Sa8-2, the transmission mode information applied to the wavelength path of the main signal and the configuration information of the wavelength path of the control signal are transmitted to the optical communication device 2hX through the path of the basic wavelength.

In subsequent processing of step Sa9, the control unit 71X of the optical transmission/reception unit 21X acquires the transmission mode information to be applied to the wavelength path of the main signal and the configuration information to be applied to the wavelength path of the control signal. The control unit 71X of the optical transmission/reception unit 21X outputs the acquired configuration information to be applied to the wavelength path of the control signal to the monitoring management processing unit 75X. The monitoring management processing unit 75X outputs the configuration information to be applied to the wavelength path of the control signal output from the control unit 71X to the control unit 81tX of the control signal transceiver 80tX. The control unit 81tX captures configuration information output from the monitoring management processing unit 75X, and sets the captured configuration information in the optical transmission unit 84tX and the digital signal processing unit 83tX. Thus, the wavelength path of the control signal can be generated at the timing of generating the wavelength path of the main signal.

Furthermore, as described above, instead of the transmission line design unit 42 generating the configuration information to be applied to the wavelength path of the control signal, like the control unit 12 of the connection node device 1 of the first embodiment, the control unit 12h of the connection node device 1h may generate the configuration information to be applied to the wavelength path of the control signal on the basis of the connection information including the transmission line information of the optical transmission line 51 output by the connection information generation unit 38 of the connection information processing unit 13. In this case, since the monitoring management control unit 44a is incorporated in the control unit 12h of the connection node device 1h, the control unit 12h selects a wavelength value of the wavelength path of the control signal, and includes the selected wavelength value of the wavelength path of the control signal in the configuration information to be applied to the wavelength path of the control signal.

On the other hand, the wavelength path of the control signal may be generated by diverting the transmission mode information to be applied to the wavelength path of the main signal. For example, in the processing of step Sa8-2 of the flowchart illustrated in Fig. 6 of the second embodiment, the control unit 12h of the connection node device 1h acquires the transmission mode information to be applied to the wavelength path of the main signal generated by the transmission line design unit 42 of the operation device 4h. The control unit 12h outputs configuration information included in the acquired transmission mode information to be applied to the wavelength path of the main signal to the control unit 81e of the control signal transceiver 80e. The control unit 81e captures configuration information output from the control unit 12h, and sets the captured configuration information in the optical transmission unit 84e and the digital signal processing unit 83e. In subsequent processing of step Sa9, the control unit 71X of the optical transmission/reception unit 21X acquires the transmission mode information to be applied to the wavelength path of the main signal generated by the transmission line design unit 42 of the operation device 4h. The control unit 71X of the optical transmission/reception unit 21X outputs the acquired transmission mode information to the monitoring management processing unit 75X. The monitoring management processing unit 75X outputs the transmission mode information output from the control unit 71X to the control unit 81tX of the control signal transceiver 80tX. The control unit 81tX captures configuration information output from the monitoring management processing unit 75X, and sets the captured configuration information in the optical transmission unit 84tX and the digital signal processing unit 83tX.

As described above, the wavelength path of the control signal can be generated by diverting the configuration information included in the transmission mode information to be applied to the wavelength path of the main signal. Thereafter, the control unit 71X of the optical transmission/reception unit 21X sets the acquired transmission mode information to be applied to the wavelength path of the main signal in the optical transmission unit 24X and the digital signal processing unit 23X of the optical transmission/reception unit 21X, and the wavelength path of the main signal is generated. However, since only the wavelength value of the main signal is included in the configuration information, in a case where the wavelength path of the control signal is immediately used when the wavelength path of the control signal is generated, it is necessary to store a predetermined wavelength value of the control signal in advance in internal storage areas of the control units 81e and 81tX of the control signal transceivers 80e and 80tX, and each of the control units 81e and 81tX needs to set the respective corresponding wavelength variable light sources 85e and 85tX at the timing of setting the configuration information.

The digital signal processing units 23X, 23aX, 23X-1 to 23X-m, 23aX-1 to 23aX-m, 23Y, 23aY, 23Y-1 to 23Y-n, and 23aY-1 to 23aY-n, the control units 20X, 20aX, 20X-1 to 20X-m, 20Y, 20aY, and 20Y-1 to 20Y-n, the control units 71X, 71aX, 71X-1 to 71X-m, 71Y, 71aY, and 71Y-1 to 71Y-n, the transmission control unit 29X, the digital signal processing units 32, 32a, 32aX, and 32aY, the connection information generation units 38, 38a, 38aX, and 38aY, the digital signal processing units 83tX, 83tx-1 to 83tX-m, 83e, 83e-1 to 83e-m, 83eX, 83eY, and 83tY, the control units 81tX, 81tx-1 to 81tX-m, 81e, 81e-1 to 81e-m, 81eX, 81eY, and 81tY, the control units 12, 12a, 12b, 12c, 12d, 12e, 12fX, 12fY, 12g, 12h, 12i, 12jX, and 12jY, and the operation devices 4, 4a, 4b, 4c, 4d, 4e, 4g, 4h, 4i, and 4j in the above-described embodiments may be implemented by a computer. In that case, a program for implementing the functions may be recorded in a computer-readable recording medium, and the functions may be implemented by loading the program recorded in this recording medium to a computer system, and executing the program. Note that the "computer system" herein includes an OS and hardware such as a peripheral device. In addition, the "computer-readable recording medium" refers to a portable medium such as a flexible disk, a magneto-optical disk, a ROM, or a CD-ROM, or a storage device such as a hard disk built in a computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. In addition, the program described above may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, the specific configuration is not limited to the embodiments, and includes design and the like within the scope not departing from the gist of the present invention.

### Industrial Applicability

The present invention can be used when an optical path passing through a plurality of optical transmission lines is set.

### Reference Signs List

- 1g: Connection node device
- 12g: Control unit
- 80e: Control signal transceiver
- 17: Control signal multiplexing/separating unit
- 77: Wavelength separating unit
- 78: Wavelength multiplexing unit
- 90: Control signal internal optical line
- 90T, 90R: Optical fiber
- 2gX: Optical communication device
- 6bX: Control signal multiplexing/separating unit
- 7bX: Wavelength separating unit
- 8bX: Wavelength multiplexing unit
- 21X: Optical transmission/reception unit
- 75X: Monitoring management processing unit
- 80tX: Control signal transceiver
- 81tX: Control unit
- 82tX: IF unit
- 83tX: Digital signal processing unit
- 84tX: Optical transmission unit
- 85tX: Wavelength variable light source
- 86tX: Optical modulator
- 87tX: Optical reception unit
- 88tX: Photodetector
- 2Y: Optical communication device
- 20Y: Control unit
- 21Y: Optical transmission/reception unit
- 4g: Operation device
- 44: Monitoring management control unit
- 51, 52: Optical transmission line
- 51T, 51R, 52T, 52R: Optical fiber
- 104: Optical transmission system

## Claims

1. An optical transmission system comprising a connection node device, a user-side optical communication device, a first optical transmission line that connects the connection node device and the user-side optical communication device, and a second optical transmission line that connects to the connection node device, wherein
the connection node device includes
a node-side control signal transceiver configured to transmit and receive a control signal, and
a node-side control signal multiplexing/separating unit configured to wavelength-multiplex a control signal transmitted by the node-side control signal transceiver and a main signal received via the second optical transmission line and send a wavelength-multiplexed signal to the first optical transmission line, wavelength-separates an optical signal received via the first optical transmission line into the control signal and the main signal, output the separated control signal to the node-side control signal transceiver, and send the separated main signal to the second optical transmission line, and
the user-side optical communication device includes
an optical transmission/reception unit configured to transmit and receive the main signal,
a user-side control signal transceiver configured to transmit and receive the control signal, and
a user-side control signal multiplexing/separating unit configured to wavelength- multiplex the control signal transmitted by the user-side control signal transceiver and the main signal transmitted by the optical transmission/reception unit and send the wavelength-multiplexed signal to the first optical transmission line, wavelength-separates an optical signal received via the first optical transmission line into the control signal and the main signal, output the separated control signal to the user-side control signal transceiver, and output the separated main signal to the optical transmission/reception unit.

2. The optical transmission system according to claim 1, further comprising:
an operation device including a monitoring management control unit, wherein
the user-side optical communication device includes
a monitoring management processing unit that is connected to the user-side control signal transceiver and the optical transmission/reception unit, and transmits and receives data using the control signal to and from the monitoring management control unit via the user-side control signal transceiver and the node-side control signal transceiver.

3. The optical transmission system according to claim 1, wherein
the node-side control signal multiplexing/separating unit includes a node-side wavelength multiplexing unit that performs the wavelength-multiplexing and a node-side wavelength separating unit that performs the wavelength-separating, and
the node-side wavelength separating unit
is connected to a main signal internal optical line instead of the second optical transmission line, and sends an optical signal of a main signal separated by the wavelength-separating to the main signal internal optical line,
the node-side wavelength multiplexing unit
is connected to the main signal internal optical line instead of the second optical transmission line, wavelength-multiplexes an optical signal of a main signal received via the main signal internal optical line and a control signal transmitted by the node-side control signal transceiver, and sends a wavelength-multiplexed signal to the first optical transmission line, and
the connection node device includes
a main signal connection unit, and
an output port switching unit that is connected to the main signal internal optical line, the second optical transmission line, and the main signal connection unit, and sets a connection destination of a path passing through the main signal internal optical line in an initial state as the main signal connection unit,
the main signal connection unit,
after transmitting transmission mode information indicating a transmission mode applied to transmission and reception of the main signal specified on a basis of transmission line information of the first optical transmission line and transmission line information of a second optical transmission line to the optical transmission/reception unit, causes the output port switching unit to switch a connection destination of a path connected to the main signal connection unit to the second optical transmission line via the main signal internal optical line.

4. The optical transmission system according to claim 3, wherein
the node-side control signal transceiver and the node-side control signal multiplexing/separating unit are connected by a control signal internal optical line,
the output port switching unit
connects to the control signal internal optical line, an auxiliary internal optical line, the main signal internal optical line, the second optical transmission line, and the main signal connection unit, and connects the control signal internal optical line and the auxiliary internal optical line,
the node-side wavelength separating unit
connects to the main signal internal optical line and the auxiliary internal optical line instead of the second optical transmission line, sends an optical signal of a main signal separated by the wavelength-separating to the main signal internal optical line, and sends an optical signal of a separated control signal to the auxiliary internal optical line, and
the node-side wavelength multiplexing unit
connects to the main signal internal optical line and the auxiliary internal optical line instead of the second optical transmission line, wavelength-multiplexes an optical signal of the main signal received via the main signal internal optical line and an optical signal of the control signal received via the auxiliary internal optical line, and sends the wavelength-multiplexed optical signal to the first optical transmission line.

5. The optical transmission system according to claim 3, wherein
the user-side optical communication device includes a plurality of the optical transmission/reception units, and
the user-side control signal multiplexing/separating unit includes a user-side wavelength multiplexing unit that performs the wavelength-multiplexing and a user-side wavelength separating unit that performs the wavelength-separating, and
the user-side wavelength separating unit
wavelength-separates wavelength-multiplexed optical signal transmitted through the first optical transmission line into an optical signal of the control signal and a plurality of the main signals corresponding one by one to the plurality of the optical transmission/reception units, sends the separated optical signal of the control signal to the user-side control signal transceiver, and sends optical signals of the separated plurality of the main signals to the respective corresponding optical transmission/reception units, and
the user-side wavelength multiplexing unit
wavelength-multiplexes a plurality of main signals sent from each of the plurality of the optical transmission/reception units and an optical signal of a control signal sent from the user-side control signal transceiver and sends the wavelength-multiplexed signal to the first optical transmission line.

6. The optical transmission system according to claim 3, wherein
the node side control signal transceiver and the user side control signal transceiver cause the control signal to include information related to the transmission line information and transmit the control signal.

7. The optical transmission system according to any one of claims 1 to 6, wherein
a transmission speed of the control signal is lower than a transmission speed of the main signal.

8. A control signal transmission/reception method in an optical transmission system including a connection node device, a user-side optical communication device, a first optical transmission line that connects the connection node device and the user-side optical communication device, and a second optical transmission line that connects to the connection node device, the method comprising:
transmitting a control signal by a node-side control signal transceiver;
by a node-side control signal multiplexing/separating unit, wavelength-multiplexing a control signal transmitted by the node-side control signal transceiver and a main signal received via the second optical transmission line, and sending a wavelength-multiplexed signal to the first optical transmission line;
by a user-side control signal multiplexing/separating unit, wavelength-separating an optical signal received via the first optical transmission line into the control signal and the main signal, outputting the separated control signal to a user-side control signal transceiver, and outputting the separated main signal to an optical transmission/reception unit;
receiving the main signal by the optical transmission/reception unit;
receiving the control signal by the user-side control signal transceiver;
transmitting the main signal by the optical transmission/reception unit;
transmitting the control signal by the user-side control signal transceiver;
by the user-side control signal multiplexing/separating unit, wavelength-multiplexing the control signal transmitted by the user-side control signal transceiver and the main signal transmitted by the optical transmission/reception unit and sending the wavelength-multiplexed signal to the first optical transmission line;
by the node side control signal multiplexing/separating unit, wavelength-separating an optical signal received via the first optical transmission line into the control signal and the main signal, outputting the separated control signal to the node side control signal transceiver, and sending the separated main signal to the second optical transmission line; and
receiving the control signal by the node side control signal transceiver.
